# EUROPEAN PATENT SPECIFICATION

(11) **EP 4 669 722 B1**
(45) Date of publication and mention of the grant of the patent: **21.10.2026**
(21) Application number: 24707491.7
(22) Date of filing: 23.02.2024
(51) Int. Cl.: C09K 19/38

(54) **MULTI-LAYERED CELLULOSE FILMS AND PARTICLES**
MEHRSCHICHTIGE ZELLULOSEFILME UND -PARTIKEL
FILMS ET PARTICULES DE CELLULOSE MULTICOUCHES

(30) Priority: 24.02.2023 GB 202302729
(43) Date of publication of application: 31.12.2025
(73) Proprietor: Sparxell UK Limited, London EC4A 3TW (GB)
(72) Inventor: SHEN, Qingchen, Cambridge Cambridgeshire CB3 0GT (GB); DROGUET, Benjamin, Cambridge Cambridgeshire CB3 0GT (GB); VIGNOLINI, Silvia, Cambridge Cambridgeshire CB3 0GT (GB)
(74) Representative: Mewburn Ellis LLP
(86) International application number: PCT/EP2024/054661
(87) International publication number: WO 2024/175776

(56) References cited:
- DROGUET BENJAMIN E ET AL: "Large-scale fabrication of structurally coloured cellulose nanocrystal films and effect pigments", NATURE MATERIALS, NATURE PUBLISHING GROUP UK, LONDON, vol. 21, no. 3, 11 November 2021 (2021-11-11), pages 352 - 358, XP037708426, ISSN: 1476-1122, [retrieved on 20211111], DOI: 10.1038/S41563-021-01135-8
- FERNANDES S N ET AL: "Recent advances in the manipulation of circularly polarised light with cellulose nanocrystal films", CURRENT OPINION IN SOLID STATE AND MATERIALS SCIENCE, ELSEVIER SCIENCE LTD, OXFORD, GB, vol. 23, no. 2, 1 April 2019 (2019-04-01), pages 63 - 73, XP085733784, ISSN: 1359-0286, [retrieved on 20181119], DOI: 10.1016/J.COSSMS.2018.11.004
- TIANHANG WU: "A bio-inspired cellulose nanocrystal-based nanocomposite photonic film with hyper-reflection and humidity-responsive actuator properties", JOURNAL OF MATERIALS CHEMISTRY C, vol. 4, no. 41, 1 January 2016 (2016-01-01), GB, pages 9687 - 9696, XP093159345, ISSN: 2050-7526, DOI: 10.1039/C6TC02629J
- JOSHUA A DE LA CRUZ ET AL: "Cellulose-Based Reflective Liquid Crystal Films as Optical Filters and Solar Gain Regulators", ARXIV.ORG, CORNELL UNIVERSITY LIBRARY, 201 OLIN LIBRARY CORNELL UNIVERSITY ITHACA, NY 14853, 3 January 2022 (2022-01-03), XP091131162, DOI: 10.1021/ACSPHOTONICS.8B00289

## Description

### Field of the Invention

The present invention relates to a multi-layered cellulose film, a multi-layered cellulose particle, methods of preparing the multi-layered cellulose film and particle, and uses of the multi-layered cellulose film and particle, and derivates thereof.

### Related Applications

This application claims priority to, and the benefit of, GB 2302729.5 filed on 24 February 2023 (24.02.2023).

### Background

Cellulose nanocrystals (CNCs) extracted from natural sources are abundant, sustainable, biocompatible, biodegradable, and multifunctional (Frka-Petesic *et al.*)*.* The self-assembly of CNCs into cholesteric formations generating vibrant structural colour has attracted significant attention (Parker *et al.*)*.* The large-scale fabrication of coloured CNC films based on blade coating and roll-to-roll deposition techniques and the fabrication of sustainable CNC photonic pigments has recently been demonstrated (Droguet *et al.*)*.* However, there are still limitations that needs to be addressed to facilitate the widespread adoption of these products.

Cholesteric CNC films have a helical self-assembled structure. The properties of this chiral helix determines how light is reflected. For example, CNC films typically reflect only left circularly polarized light (LCP) because of the direction of the helical structure. This means there is an intrinsic 50% limitation on reflection, as the 50% of light which is typically right circularly polarized is not reflected by standard cholesteric CNC films.

In addition, the pitch or frequency of the chiral helix determines the frequency of the reflected light, so the CNC films are only able to reflect single colour peaks which correspond to the pitch of the helix. This restricts the colour palette of CNC products to colours formed form single colour bands.

Previous work has focused on increasing reflectance by laminating separate CNC layers with a polymeric anisotropic layer. Fernandes *et al.* use two cholesteric CNC layers impregnated with 4-cyano-4'-pentylbiphenyl (5CB) nematic liquid crystal (LC) as the anisotropic component. Wu *et al.* use two cholesteric CNC/polyethylene glycol diacrylate layers (cured, containing less than 70% of CNCs) sandwiching a uniaxially oriented polyamide layer to provide the anisotropic component. Work by De La Cruz *et al.* uses use two cholesteric CNC layers glued together with a separate anisotropic layer. The layers in De La Cruz are prepared separately. For example, the anisotropic layer is prepared in isolation by successive deposition of cellulose particles, and is then glued between the cholesteric CNC layers using a photopolymer adhesive. Other work uses CNC/organosilica layers (containing less than 50% of CNCs) glued with a UV-curable adhesive to an anisotropic layer.

In these cases, the anisotropic layer acts as a half-wave retardation plate in between two cholesteric layers, which switches the polarization of the light reflected by the bottom cholesteric layer as it passes through the retardation plate. As a result, the signals reflected from both cholesteric structures as LCP and RCP light can contribute to the reflectance, leading to over 50% reflectance.

Layered structures based on CNC with such an anisotropic layer have been shown to reflect above the usual 50% maximal reflection threshold. However, the use of additional polymeric and organosilica materials in the layered structure, in the form of adhesives, additives or the anisotropic layers compromise the environmental benefits of using CNCs as a building block. It also increases the manufacturing complexity and cost. Importantly, the use of non-CNC components inhibits the maximum reflectance of the CNC film be achieved, as the non-CNC components cause undesirable interfaces and interference with the incident and reflected light. As a result, the best reflectance seen is less than 80%, significantly less than the theoretical 100% maximum.

There is therefore a need for improved multi-layer cellulose films with increased reflectance, better colour range and retained environmental benefits.

### Summary of the Invention

At its most general, the present invention provides a method of preparing a multi-layered film, wherein a cholesteric layer formation step is repeated two or more times to form a cholesteric layer in direct contact with another cellulose containing layer.

In some embodiments, the present invention provides a method of preparing a multi-layered film, wherein a cholesteric layer formation step and a nematic layer formation step are carried out to form a cholesteric layer in direct contact with a nematic layer.

In one aspect of the invention there is provided a method of preparing a multi-layered film, the method comprising a cholesteric layer formation step comprising the steps of:
a) depositing a nanocrystal suspension comprising cellulose nanocrystals onto a substrate;
b) spreading the nanocrystal suspension across the substrate using a spreader;
c) ageing the nanocrystal suspension to partially or completely recover the cholesteric structures lost during deposition and spreading; and
d) drying the deposited nanocrystal suspension so that the nanocrystals self-assemble to form a cholesteric layer;
wherein the cholesteric layer formation step is repeated two or more times and the multi-layered film comprises the cholesteric layer in direct contact with another cellulose containing layer. The another cellulose containing layer may be a further cholesteric layer or may be a different cellulose layer such as a nematic layer containing cellulose.

The term cellulose containing layer is used throughout to refer to a layer containing cellulose and includes the cholesteric layers and nematic layers containing cellulose. Preferably, the cellulose containing layer consists essentially of cellulose for example the cholesteric layer consists essentially of cellulose and/or the nematic layer consists essentially of cellulose.

In some embodiments, the cholesteric layer formation step is carried out at least twice to form a cholesteric layer in direct contact with another cholesteric layer.

In some preferred embodiments there is provided a method of preparing a multi-layered film, the method comprising a cholesteric layer formation step and a nematic layer formation step,
the cholesteric layer formation step comprising the steps of:
   a) depositing a nanocrystal suspension comprising cellulose nanocrystals onto a substrate;
   b) spreading the nanocrystal suspension across the substrate using a spreader;
   c) ageing the nanocrystal suspension to partially or completely recover the cholesteric structures lost during deposition and spreading; and
   d) drying the deposited nanocrystal suspension so that the nanocrystals self-assemble to form a cholesteric layer;
the nematic layer formation step comprising the steps of:
   a) depositing a nanocrystal suspension comprising cellulose nanocrystals onto a substrate;
   b) spreading the nanocrystal suspension across the substrate using a spreader to align the cellulose nanocrystals and form a non-chiral nematic structure; and
   c) drying the deposited nanocrystal suspension,
wherein the cholesteric layer formation step is repeated two or more times, the nematic layer formation step is carried out before and/or after a cholesteric layer formation step, and the multi-layered film comprises the nematic layer in direct contact with the cholesteric layer.

Preferably the nematic layer formation step is carried out after one cholesteric layer formation step and the substrate in the nematic layer formation step is the cholesteric layer from the cholesteric layer formation step. Optionally, a second cholesteric layer formation step is carried out after the nematic layer formation step wherein the substrate for the second cholesteric layer formation steps is the nematic layer.

Preferably the nematic layer acts as a half-wave retardation plate for the circularly polarised light reflected by the cholesteric layers.

The present inventors have developed a method which allows for the productions of multi-layer cellulose films. Such films have cellulose layers which are in direct contact, such as two cholesteric layers in direct contact, or a nematic layer in direct contact with two sandwiching cholesteric layers. This is achieved by repeating cholesteric layer formation and nematic layer formation in sequence, by depositing, spreading and drying cellulose suspensions on top of previous cellulose layers. The process provides for a contiguous interface or direct connection between the different layers.

The direct connection of the layers removes the need for adhesives or additives in the multi-layered films, meaning the films can be made of only cellulose components. This may permit easier recycling and improve biodegradability of the films. Moreover, the direct connection reduces optical interference from the non-cellulose components and the interfaces. As a result, the multilayer films of the invention have improved reflectance and optical properties. The films may provide a reflectance of up to 95% at certain wavelengths.

The method of the invention also allows for the additive manufacture of these multi-layer cellulose films, by the successive deposition of different cellulose layers. This simplifies manufacturing compared to known process which rely on lamination of pre-formed films.

Generally, the invention also provides a multi-layered film, comprising two or more cholesteric layers which are in direct contact with another cellulose containing layer.

In some embodiments, the multi-layered film comprises a cholesteric layer and a nematic layer, wherein the cholesteric layer in direct contact with a nematic layer. Preferably, the nematic layer is in direct contact with two cholesteric layers. That is, the nematic layer is sandwiched between two cholesteric layers.

In another aspect there is provided a multi-layered film comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
wherein the multi-layered film comprises the cholesteric layer in direct contact with another cellulose containing layer.

In some embodiments, there is provided a multi-layered film comprising two or more cholesteric layers and a nematic layer, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less,
the nematic layer comprises cellulose nanocrystals and the cellulose nanocrystals are aligned in a non-chiral nematic structure; and
wherein the multi-layered film comprises the cholesteric layer in direct contact with another cellulose containing layer, and the nematic layer in direct contact with the cholesteric layer. Preferably, the nematic layer is sandwiched between and in direct contact with two of the two or more cholesteric layers.

Preferably, the nematic layer has a thickness such that the layer acts as a half-wave retardation plate for circularly polarised light reflected by the cholesteric layers.

In another aspect there is a provided a multi-layered film obtained or obtainable by the method of the invention.

Bi-layer films comprising two different cholesteric layers directly in contact with each other and each reflecting different light wavelengths, enable the formation of films which reflect secondary colours. Such secondary colours are only accessible by combining two primary colours, so the direct connection of two different cholesteric layers enables the reflection of a range of new colours for cellulose films.

Tri-layer films or particles comprising two cholesteric layers sandwiching a nematic layer may also reflect both RCP and LCP light, significantly increasing the reflectivity of the particle. The nematic layer flips the incident RCP light to LCP, which can then be reflected by the bottom layer. The reflected LCP light is then re-flipped to RCP light by the nematic layer, so the film appears to reflect both LCP and RCP light. Moreover, multi-layered films comprising two sets of red, green and blue cholesteric layers sandwiching a nematic layer may reflect both RCP and LCP forms of red, green and blue light - providing an intense broad-band reflectance across the visible range and a mirror like white light reflection.

Generally, the invention also provides a multi-layered particle, comprising two or more cholesteric layers which are in direct contact with another cellulose containing layer.

In some embodiments, the multi-layered particle comprises a cholesteric layer and a nematic layer, wherein the cholesteric layer is in direct contact with a nematic layer. Preferably, the nematic layer is in direct contact with two cholesteric layers. That is, the nematic layer is sandwiched between two cholesteric layers.

In a further aspect, there is provided a multi-layered particle comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
the multi-layered particle comprises the cholesteric layer in direct contact with another cellulose containing layer.

In some embodiments, there is provided a multi-layered particle comprising two or more cholesteric layers and a nematic layer, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less,
the nematic layer comprises cellulose nanocrystals and the cellulose nanocrystals are aligned in a non-chiral nematic structure;
the nematic layer has a thickness such that the layer acts as a half-wave retardation plate for circularly polarised light reflected by the cholesteric layers, and
wherein the multi-layered particle comprises the cholesteric layer in direct contact with another cellulose containing layer, and the nematic layer in direct contact with a cholesteric layer. Preferably, the nematic layer is sandwiched between and in direct contact with two of the two or more cholesteric layers.

In another aspect there is provided a multi-layered particle obtained or obtainable by the method of the invention, by dividing the multi-layered film to produce particles, such as by fracturing and/or grinding the multi-layered film.

In a yet further aspect there is provided a use of the multi-layered film or the multi-layered particle of the invention, or derivatives thereof, as a colourant, such as a pigment or glitter.

Particles of the invention, such as those formed by dividing the films of the invention, retain the excellent optical properties of the films described above.

### Summary of the Figures

The present invention is described with reference to the figures listed below.
**Figure 1** Multilayered coloured CNC films. **a,** Schematic of the cross-sectional view of the trilayer film structure of a blue CNC film. **b,** Macroscopic images of a blue CNC film including monolayer, bilayer and trilayer parts observed through no polarizer (noP), an LCP filter, and an RCP filter, respectively. **c,** Schematic of a magenta CNC film obtained by stacking a blue-reflecting and a red-reflecting Ch-CNC layers. **d,** Macroscopic images of a magenta CNC film through no polarizer (noP), an LCP filter, and an RCP filter, respectively.
**Figure 2(a)** Microscopic images of magenta, cyan, and yellow CNC films under no, LCP and RCP polarizers. **(b)** Reflection spectra of magenta, cyan, and yellow CNC films under no, LCP and RCP polarizers.
**Figure 3** Different magenta CNC films through decreasing the thickness of the top blue film. (a) Microscopic images and **(b)** reflection spectra for these CNC films under no, LCP and RCP polarizers.
**Figure 4A** Optimizing the thickness of the N-CNC layer (from 38 to 148 µm) of the blue bilayer films to flip the reflected LCP light into RCP light. **(a, c)** LCP and RCP optical micrographs of CNC films with increasing N-CNC layer. **(b, d)** Reflection spectra of the blue bilayer films with different coating gaps under LCP (dotted line) and RCP (solid line) filters, respectively.
**Figure 4B** Optimizing the thickness of the N-CNC layer (from 158 to 268 µm) of the blue bilayer films to flip the reflected LCP light into RCP light. **(a, c)** LCP and RCP optical micrographs of CNC films with increasing N-CNC layer. **(b, d)** Reflection spectra of the blue bilayer films with different coating gaps under LCP (dotted line) and RCP (solid line) filters, respectively.
**Figure 4C** Optimizing the thickness of the N-CNC layer (from 288 to 388 µm) of the blue bilayer films to flip the reflected LCP light into RCP light. **(a)** LCP and RCP optical micrographs of CNC films with increasing N-CNC layer. **(b)** Reflection spectra of the blue bilayer films with different coating gaps under LCP (dotted line) and RCP (solid line) filters, respectively. **(c)** LCP and RCP optical micrographs of the background and monolayer blue film for reference. **(d)** Corresponding reflection spectra of the samples in (c).
**Figure 5A** Cross-sectional SEM images of the blue bilayer films at a first location on the prepared sample for increasing values of the coating gap of the N-CNC layer.
**Figure 5B** Cross-sectional SEM images of the blue bilayer films at a second location on the prepared sample for increasing values of the coating gap of the N-CNC layer.
**Figure 5C** Cross-sectional SEM images of the blue bilayer films at a third location on the prepared sample for increasing values of the coating gap of the N-CNC layer.
**Figure 6** Linear relationship between the dried thickness of the N-CNC layer and coating gaps.
**Figure 7** Average **(a)** RCP or **(b)** LCP peak reflectance versus the coating gap for the N-CNC layer of blue bilayer films.
**Figure 8** Optimizing the thickness of the N-CNC layer of the green bilayer films to flip the reflected LCP light into RCP light. **(a, c)** LCP and RCP optical micrographs of CNC films with increasing N-CNC layer. The background and monolayer green film are also included for reference. **(b, d)** Reflection spectra of the green bilayer films with different coating gaps under LCP (dotted line) and RCP (solid line) filters, respectively. The background and monolayer green film are also included for reference.
**Figure 9** Average **(a)** RCP or **(b)** LCP peak reflectance versus the coating gap for the N-CNC layer of green bilayer films.
**Figure 10** Cross-sectional SEM images of the green bilayer film whose N-CNC layer corresponds to the coating gap of 265 µm.
**Figure 11** Optimizing the thickness of the top N-CNC layer of the red bilayer films to flip the reflected LCP light into RCP light. **(a, c)** LCP and RCP optical micrographs of CNC films with increasing N-CNC layer. The background and monolayer red film are also included for reference. **(b, d)** Reflection spectra of the red bilayer films with different coating gaps under LCP (dotted line) and RCP (solid line) filters, respectively. The background and monolayer red film are also included for reference.
**Figure 12** Average **(a)** RCP or **(b)** LCP peak reflectance versus the coating gap for the N-CNC layer of red bilayer films.
**Figure 13** Cross-sectional SEM images of the red bilayer film whose N-CNC layer corresponds to the coating gap of 328 µm.
**Figure 14** Tri-layered (Ch-N-Ch) coloured CNC films which reflection peaks exceed the 50% reflection threshold at the peak wavelength. **a,** Microscopic images of blue, green, and red Ch-N-Ch CNC films observed through no polarizer (noP), an LCP filter, and an RCP filter, respectively. **b,** Corresponding reflection spectra of the tri-layered CNC films in (a).
**Figure 15** Cross-sectional SEM images of the blue tri-layer film at two different magnifications (a) Entire cross section. **(b)** Close-up view of the nematic layer and the interfaces with the cholesteric layers.
**Figure 16** Broadband CNC mirror - Schematic of a metallic-like CNC mirror showing broadband reflection of unpolarized light obtained by stacking red, green and blue Ch-CNC layers, a N-CNC layer, and a further red, green and blue Ch-CNC layers.
**Figure 17** Tri-layered (Ch-Ch-Ch) CNC film made by stacking a red, green and blue (RGB) reflecting cholesteric layers, a N-CNC layer, and a further red, green and blue Ch-CNC layers showing a broadband reflection giving a silver appearance. **a,** Microscopic images under no, LCP and RCP polarizers. **(b)** Corresponding reflection spectra of the tri-layered CNC films in (a).
**Figure 18** Magenta CNC pigments made by grinding a bilayer (Ch-Ch) film including blue and red Ch-CNC layers. Digital microscopy images taken at 20x and 50x magnification using ring illumination of particle size groups of 125-150 µm, 75-106 µm and 20-45 µm.
**Figure 19** Particles (particle size group: 125-150 µm) obtained from a monolayer cholesteric film, a thick trilayer (Ch-N-Ch) film and a thin trilayer (Ch-N-Ch) film, seen under no polarized, LCP and RCP filter. Digital microscopy images taken at 20x magnification using direct illumination.

### Detailed Description of the Invention

### Multi-layered Film

Generally, the invention also provides a multi-layered film, comprising two or more cholesteric layers which are in direct contact with another cellulose containing layer.

In some embodiments, the multi-layered film comprises a cholesteric layer and a nematic layer, wherein the cholesteric layer is in direct contact with a nematic layer. Preferably, the nematic layer is in direct contact with two cholesteric layers.

In another aspect there is provided a multi-layered film comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
wherein the multi-layered film comprises the cholesteric layer in direct contact with another cellulose containing layer.

In some embodiments, there is provided a multi-layered film comprising two or more cholesteric layers and a nematic layer, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less,
the nematic layer comprises cellulose nanocrystals and the cellulose nanocrystals are aligned in a non-chiral nematic structure, and
wherein the multi-layered film comprises the cholesteric layer in direct contact with another cellulose containing layer and the nematic layer is in direct contact with the cholesteric layer.

Preferably the nematic layer has a thickness such that the layer acts as a half-wave retardation plate for circularly polarised light reflected by the cholesteric layers.

The multi-layer films may be produced by the methods described herein. Accordingly, the invention also provides a film obtained or obtainable by the methods of the invention.

A multi-layered film refers to a film having two or more layers. A film is a relatively thin and sheet-like structure. The layers are typically provided in a laminar configuration, such that the multi-layered film is a laminate. The different layers are stacked face-to-face to form the film. The boundaries of each layer may be defined by the layer's interface with adjacent layers.

The cellulose containing layers of the multi-layer film are directly connected. That is, there is a direct connection between the adjacent cholesteric layers and, where present, nematic layers. Adjacent layers refer to any cellulose containing layers directly above or below the subject layer in a stack of layers. Preferably all cellulose containing layers of the multi-layer film are directly connected to their adjacent cellulose containing layers.

The cellulose containing layers typically refers to layers comprising cellulose nanocrystals. Preferably, the cellulose containing layers refers to layers consisting essentially of cellulose nanocrystals.

A direct connection refers to two layers being in contact along their boundary or face. In this way, the cellulose containing layers are typically not interposed by a non-cellulosic layers, such as adhesives. The direct connection may mean that there is only a single interface between adjacent cellulose containing layers. The single interface is a cellulose-cellulose interface. This differs to non-directly connected layers, where at least two interfaces exist between adjacent cellulose containing layers, such as a cellulose-adhesive interface.

The cholesteric layers of the multi-layered films are in direct contact with adjacent cellulose containing layers. For example, the cholesteric layers may be in contact with adjacent cholesteric layers or, where present, nematic layers.

The nematic layers of the multi-layered films are in direct contact with adjacent cellulose containing layers. For example, the nematic layers may be in contact with adjacent cholesteric layers. In embodiments where the nematic layer is sandwiched between two cholesteric layers, the nematic layer is typically in direct contact with both adjacent cholesteric layers.

In some cases the interface is identifiable due to a different materials or structure of the layer compared to adjacent layers. For example, the interface may be identified because one layer has a chiral nematic structure having a first pitch and an adjacent layer has a chiral nematic structure having a second pitch. Alternatively, the one layer may have a chiral nematic structure and an adjacent layer may have a non-chiral nematic structure.

In some cases the interface is identifiable due to a manufacturing process. For example, if multiple layers are applied in sequence during manufacturing there may be an interface between the separately applied layers.

Typically, the multi-layer film has a thickness (such as a dry thickness) which is large enough to permit the director of one chiral nematic structure per cholesteric layer within the film to perform a complete revolution, and more preferably four complete revolutions, as this imparts excellent optical properties to the film. Accordingly, the multi-layer film has a thickness of from 5.0 µm to 200 µm, preferably from 10.0 µm to 100 µm. The thickness of the layers is described herein.

The dry thickness typically refers to the thickness of the film after the drying step. For example, the dry thickness is the thickness of the film after substantially all solvent from the nanocrystal suspension is removed. In other words, the solvent partial pressure adjacent a dry film is equal to the ambient partial pressure for the solvent. The thickness of the films or particles may be measured using standard techniques, such as measuring the thickness of a cross-section of the film using SEM.

The highly ordered chiral nematic structures in the cholesteric layers of the films are highly reflective and reflect highly saturated colors with high intensity. The intensity of the reflection can be quantified by absolute reflectance as a percentage of the incident light. The saturation of the reflection can be determined by the sharpness of the peaks in the reflectance spectra. This may be quantified as the full peak width at half maximum of the reflectance peak.

The reflectance of the films can be measured using standard techniques, such as an optical microscope coupled with a spectrometer. The reflectance values are measured relative to the reflectance of a mirror, typically a silver mirror (maximal reflectance) used to obtain the normalized reflectance of the sample. The background noise is subtracted. The reflectance values are measured in the UV, IR and visible range (100 nm to 1000 nm). Typically, the samples are mounted flat on the stage of the microscope such that the light rays can be considered to travel perpendicular to the sample's surface to measure reflection at normal incidence, with the light being collected within the cone (numerical aperture) of the objective (maximal reflectance). Typically, the reflectance values are measured in air.

In some embodiments, the multi-layer film reflects incident light and the reflected light has a maximum reflectance at a wavelength of from 100 to 1000 nm, such as from 400 to 800 nm, of 50% or more, preferably 70% or more, more preferably 80% or more, even more preferably 90% or more.

In some preferred embodiments, the multi-layer film reflects right circularly polarised light and the reflected right circularly polarised light has a maximum reflectance at a wavelength of from 100 to 1000 nm, such as from 400 to 800 nm, of 40% or more, preferably 50% or more, more preferably 60% or more, even more preferably 70% or more.

In some embodiments, the multi-layer film reflects left circularly polarised light and the reflected left circularly polarised light has a maximum reflectance at a wavelength of from 100 to 1000 nm, such as from 400 to 800 nm, of 40% or more, preferably 50% or more, more preferably 60% or more, even more preferably 70% or more.

In some embodiments, the multi-layer film reflects right circularly polarised light and left circularly polarised light, and the difference between the average reflectance of right circularly polarised light and the average of left circularly polarised light across a wavelength range of from 100 to 1000 nm, such as from 400 to 800 nm, is 50% or less, preferably 40% or less, more preferably 30% or less, even more preferably 20% or less. That is, the reflected light from the multi-layer film is a mixture of right circularly polarised light and left circularly polarised light.

The optical properties of the individual layers and particular embodiments are described herein.

The reflected structural colour is typically iridescent, and so it is angle-dependent. The level of iridescence can be controlled through the extent of disorder of the chiral nematic structure within the cholesteric layers of the film.

The edges of the cholesteric layer that form chiral nematic structure are prone to a "coffee stain" effect, which leave edges with less homogenous and less optimal visual appearance than away from the edges. These parts of the film can be removed after completion of the drying, to further improve optical properties.

In some cases, the multi-layer film has been treated such as by annealing to remove sulfuric acid groups and tightly bound water molecules.

Sulphate half-ester groups are commonly grafted during the extraction of cellulose nanocrystals, such as sulfuric acid hydrolysis. Sulphate half-ester groups are typically located on the C6 position of the repetitive glucose unit. The amount of sulphate half ester group being removed depends on the temperature and conditions used for carrying out the heat-treatment and the content of sulphate half-ester groups covering the nanocrystal surface. Typically, the decrease of sulphate content is 15% or more, 30% or more, preferably 50% or more, more preferably 70% or more, and even more preferably 90% or more, and most preferably 98% or more based on the initial amount of sulphate. The sulphate content may be measured using standard techniques in the art, such as elemental analysis. Alternatively, the amount of sulphate can be calculated by the amount of neutraliser needed to neutralise the cellulose nanocrystals.

In this way, the multi-layer film maintains colour even when placed in a solvent such as water without disintegrating. A lower loss of sulphate content as a result of a shorter or lower temperature annealing is linked to lower/shorter stability in water and other aqueous based solutions.

The multi-layer film comprises cellulose nanocrystals. In some embodiments, the multi-layered film comprises 70 wt.% or more cellulose nanocrystals in total, preferably 80 wt.% or more, more preferably 90 wt.% or more, even more preferably 95 wt.% or more, based on the total weight of the multi-layer film. Preferably the multi-layered film comprises 70 wt.% or more neutralised cellulose nanocrystals in total, preferably 80 wt.% or more, more preferably 90 wt.% or more, even more preferably 95 wt.% or more, based on the total weight of the multi-layer film.

In some embodiments, the multi-layered film consists essentially of cellulose nanocrystals, such as neutralised cellulose nanocrystals. Neutralised cellulose nanocrystals may be, for example, sodium form neutralised cellulose nanocrystals.

Typically, the multi-layer film is substantially free of non-cellulosic material. Preferably, the multi-layer film is free of non-cellulosic organic or organosilica materials. Preferably the multi-layer film is free of binders or adhesives.

### Cholesteric Layer

The multi-layered film comprises two or more cholesteric layers. The cholesteric layers may include the cholesteric films described in PCT/EP2022/073629.

The cholesteric layers may be produced by the methods described herein.

The cholesteric layer comprises cellulose nanocrystals and the nanocrystals are organized into chiral nematic structures. Each cholesteric layer has a thickness such that the director of a chiral nematic structure performs at least one revolution within the layer and the layer has a thickness of 50 µm or less, preferably 20 µm or less.

The cholesteric layer may be known as a "Ch-CNC" layer.

In the cholesteric layer, colloidal cellulose nanoparticles self-assemble to form a chiral nematic (cholesteric) phase comprising helical structures (helicoids). Each helicoid may have a random spatial orientation, defined along the helix long axis. Chiral nematic helicoids may be described as pseudo-layered, and this can be seen by hypothetically cutting the helix along its long axis into an infinite number of discrete, thinly-stacked planes parallel to each other. Each pseudo-layer contains nanocrystals pointing in the same average direction. Defined outwards along this direction, the director is a vector rotating around the helix long axis continuously from one pseudo-layer to the other. A full rotation of the director is completed over one helical pitch, which describes the periodicity of the helical stack. The rotation of the mesogens around the helix enables the recovery of their properties every half helical turn. If the mesogens are birefringent molecular constituents, the chiral nematic phase exhibits unique optical properties as the refractive index is modulated periodically, giving rise to light reflection. In this way, the chiral nematic phase of the cholesteric layer reflects light at specific wavelengths, which is related to the periodicity of the helicoid.

The cholesteric layers have a cholesteric structure, which may also be referred to as a chiral nematic structure or chiral nematic order. Thus, the films have a self-assembled structure that is not a non-helical chiral nematic.

The nanocrystals within the cholesteric layers are in a helicoidal assembly. The helicoidal assembly has a defined pitch within the cholesteric layer.

The cholesteric pitch, *p*, may be at most 2.0, at most 3.0, at most 4.0, at most 5.0, at most 6.0, at most 7.0, at most 8.0, at most 9.0, or at most 10 µm.

The cholesteric pitch, *p*, may be at least 0.05, at least 0.1, at least 0.2, at least 0.4, at least 0.5, at least 0.6, at least 0.7, at least 0.8, at least 0.9, at least 1.0 or at least 2.0 µm.

The cholesteric pitch, *p*, may be in a range selected from the upper and lower limits given above. For example, the cholesteric pitch, *p*, may be within the range 0.05 to 10 µm, such as 0.4 to 4.0 µm, such as 0.4 to 2.0 µm.

The cholesteric pitch, *p*, may be associated with a cholesteric layer having structural colour in the visible range.

The cholesteric pitch may be controlled by selection of appropriate conditions during preparation of the nanocrystal suspension. For example, the cholesteric pitch can be increased by sonicating the nanocrystal suspension prior to film formation. Similarly, annealing the film may result in a small compression of the cholesteric pitch as a result of the removal of water molecules. The cholesteric pitch may also be altered by adjusting the properties of the nanocrystal suspension prior to deposition.

The cholesteric pitch may be measured, for example in a dried film or particle, from SEM images of the particle, where the helicoidal assembly of the nanocrystals is visible in the form of Bouligand arches, the periodicity of which can be measured.

The cholesteric layers of the invention have structural 'colour'. Thus, the cholesteric ordering permits Bragg reflection of incoming electromagnetic radiation. Structural colour typically refer to reflection in the visible region, although the cholesteric layers of the present invention may reflect infrared or ultraviolet regions of the spectrum. The reflected wavelengths follow Bragg's law: λ = n x p x cosθ, where n describes the average refractive index, p is the pitch of the helicoid and θ is the angle of incident light with respect to the director m of the cholesteric structure.

The observed (reflected) colour may be ultraviolet colour, visible colour or infrared colour, and it is preferably visible colour. Visible colour refers to a colour with a wavelength in the range about 400 to about 800 nm. Infrared colour refers to a colour with a wavelength in the range about 700 nm to about 1 mm, most commonly about 700 nm to about 5 µm. Ultraviolet colour refers to a colour with a wavelength in the range about 100 nm to about 400 nm, commonly about 200 nm to about 400 nm, such as about 300 nm to about 400 nm.

The colour of the films or particles may be measured using standard techniques, such as using an optical microscope coupled with a spectrometer, used in bright field imaging configuration with or without polariser. The reflectance values are measured relative to the reflectance of a mirror, typically a silver mirror (maximal reflectance) used to obtain the normalized reflectance of the sample. The background noise is subtracted. The reflectance values are measured in the UV, IR and visible range (100 nm to 1000 nm). Typically, the samples are mounted flat on the stage of the microscope such that the light rays can be considered to travel perpendicular to the sample's surface to measure reflection at normal incidence, with the light being collected within the cone (numerical aperture) of the objective (maximal reflectance). Typically, the reflectance values are measured in air.

Preferably, the cholesteric layer has a thickness (such as a dry thickness) which is large enough to permit the director of one chiral nematic structure within the layer to perform a complete revolution, and more preferably four complete revolutions, as this imparts excellent optical properties to the layer. Accordingly, the cholesteric film has a thickness of from 1.0 µm to 50 µm, preferably from 2.0 µm to 20 µm, more preferably from 6.0 to 12.0 µm, such as around 9.0 µm. The dry thickness typically refers to the thickness of the film after the drying step. For example, the dry thickness is the thickness of the film after substantially all solvent from the nanocrystal suspension is removed. In other words, the solvent partial pressure adjacent a dry film is equal to the ambient partial pressure for the solvent. The thickness of the layer may be measured using standard techniques, such as measuring the thickness of a cross-section of the film using SEM.

The highly ordered chiral nematic structures in the cholesteric layers are highly reflective and reflect highly saturated colors with high intensity.

Each cholesteric layer may reflect 50% or less of the incident light at a given wavelength in the visible range (300 nm to 800 nm). Preferably, the multi-layer film reflects 30% or more of the incident light, more preferably 40% or more, even more preferably 45% or more and most preferably 49% or more. The reflectance of the cholesteric layer can be measured as described herein. The reflectance of each cholesteric layer is typically limited to 50%, as the cholesteric structure only reflects one of LCP or RCP light, typically only LCP light.

The cholesteric layers may reflect light of different wavelengths with different reflectance (bandgap). At 500 nm, the cholesteric layer typically exhibits a reflectance of LCP light of 70% or more, preferably 80% or more, more preferably 90 % or more and most preferably 99 % or more. At 600 nm, the cholesteric layer typically exhibits a reflectance of LCP light of 65% or more, preferably 75% or more, more preferably 85% or more and most preferably 95% or more. At 700 nm, the cholesteric layer typically exhibit a reflectance of LCP light of 60% or more, preferably 70% or more preferably 80% or more and most preferably 90% or more

In addition to high absolute reflectance values, the light reflected by the cholesteric layer is also highly saturated. Thus, the chiral nematic structure selectively reflects light of a given wavelength range. Thus, the reflectance spectra of the material has sharp peaks.

The full width at half maximum of the reflected light is typically 150 nm or less, 100 nm or less, preferably 75 nm or less, and more preferably 50 nm or less. In the range 400 nm to 550 nm, the films typically exhibit a full width at half maximum of 50 nm or less. In the range 450 nm to 800 nm, the films typically exhibit a full width at half maximum of 100 nm or less.

In some embodiments, the cholesteric layer comprises 70 wt.% or more cellulose nanocrystals in total, preferably 80 wt.% or more, more preferably 90 wt.% or more, even more preferably 95 wt.% or more, based on the total weight of the cholesteric layer. Preferably the cholesteric layer comprises 70 wt.% or more neutralised cellulose nanocrystals in total, preferably 80 wt.% or more, more preferably 90 wt.% or more, even more preferably 95 wt.% or more based on the total weight of the cholesteric layer.

In some embodiments, the cholesteric layer consists essentially of cellulose nanocrystals, such as neutralised cellulose nanocrystals. Neutralised cellulose nanocrystals may be, for example, sodium form neutralised cellulose nanocrystals.

### Nematic Layer

In a preferred embodiment, the multi-layered film further comprises a nematic layer, wherein
the nematic layer comprises cellulose nanocrystals and the cellulose nanocrystals are aligned in a non-chiral nematic structure; and
the nematic layer is in direct contact with a cholesteric layer.

In some embodiments, the nematic layer is in direct contact with two cholesteric layers.

The nematic layer may be produced by the methods described herein.

The nematic layer may be known as a "N-CNC" layer.

The nematic layer is preferably sandwiched between two cholesteric layers. In other words, the nematic layer is interposed between cholesteric layers. The nematic layer may be separated from the sandwiching cholesteric layers (e.g. by another cellulosic layer). Preferably, the nematic layer is adjacent to and in direct contact with both of the sandwiching cholesteric layers.

The nematic layer comprises cellulose nanocrystals. Typically, the nematic layer comprises 70 wt.% or more cellulose nanocrystals in total, preferably 80 wt.% or more, more preferably 90 wt.% or more, even more preferably 95 wt.% or more based on the total weight of nematic layer. Preferably the nematic layer comprises 70 wt.% or more neutralised cellulose nanocrystals in total, preferably 80 wt.% or more, more preferably 90 wt.% or more, even more preferably 95 wt.% or more based on the total weight of nematic layer.

In some embodiments, the nematic layer consists essentially of cellulose nanocrystals, such as neutralised cellulose nanocrystals. Neutralised cellulose nanocrystals may be, for example, sodium form neutralised cellulose nanocrystals.

The nanocrystals in the nematic layer are organised into non-chiral nematic structures. The colloidal cellulose nanoparticles are aligned such that they form a nematic phase which is non-chiral. The nonchiral nematic structure means the nematic layer is birefringent. In other words, the refractive index of the nematic layer depends on the polarization of incident light.

A high concentration of cellulose nanocrystals is used in the suspension during preparation of the film, such that the cellulose nanocrystals show a high level of anisotropy. The concentration of cellulose nanocrystals is described in the method section, below. For example, a suspension of 5 to 20 wt %, preferably from 6 to 12 wt%, more preferably from 8 to 10 wt% CNCs is used. Thus, during formation of the film the nanocrystals are sheared, causing the cellulose nanoparticles to partially or fully align. When the nematic film is then dried it retains the partial or full alignment to show some degree of nematic ordering.

The nematic film preferably does not include a cholesteric structure (e.g., self-assembled chiral helices). However, the nanocrystals may relax to some extent during drying thereby reducing their alignment, and tending towards a more disordered state.

In this context, the "nematic" layer may also encompass layers where the structure is not perfectly aligned, but has some disordered character. That is, the nematic layer may have a "nematic-like" structure. In general, the nematic layer can be considered "nematic" if the cellulose nanocrystals are aligned sufficiently that the nematic layer acts as a half-wave retardation plate for circularly polarised light reflected by the cholesteric layers.

The degree of alignment can be characterised by the Herman's S parameter.

The nematic layer is typically a colourless layer. That is, the nematic layer does not reflect or absorb an appreciable amount of visible light. In general, the nematic layer has a transmission across the UV, IR and visible range (e.g., wavelength of from 100 to 1000 nm) of 80% or more, preferably 90% or more, more preferably 95% or more, yet more preferably 97% or more.

Transmission can be measured by any suitable method, as described herein.

The nematic layer typically has a thickness such that the layer acts as a half-wave retardation plate for circularly polarised light reflected by the cholesteric layer. The birefringence of the non-chiral nematic structure means the nematic layer is able to change the polarity of circularly polarised light. That is, the nematic layer produces a phase difference between ordinary and extraordinary light.

The nematic layer may act as a half-wave retardation plate for at least some of the circularly polarised light reflected by the cholesteric layer.

The nematic layer is typically optimised to act as a half wave retardation plate at a wavelength similar to the maximum wavelength reflected by the cholesteric layers. Preferably, the nematic layer acts as a half wave retardation plate for a wavelength within 500 nm of the maximum reflectance wavelength of the cholesteric layer, such as within 400 nm, within 300 nm, within 200 nm, within 100 nm, or within 50 nm. Generally, the nematic layer acts as a half-wave retardation plate for 10% or more of the light reflected by the cholesteric layer, such as 20% of more, 30% or more, 50% or more, or 70% or more.

For example, if the multi-layer film comprises cholesteric layers reflecting light at a maximum wavelength in the UV region (e.g., 100 nm) and the IR region (e.g., 1000 nm), then the nematic layer may be optimised to act as a half wave retardation plate at a wavelength of 550 nm, which is the mid-point between the UV and IR light. Thus, the nematic layer is optimised to act as a half wave retardation plate at a wavelength within 500 nm of the maximum reflectance wavelength of the cholesteric layer.

In general, if the cholesteric film(s) reflects light in the visible region (e.g., 400 to 800 nm), then a nematic layer optimised to act as a half wave retardation plate for green light (e.g., from 500 to 580 nm) may be used.

A half wave retardation plate changes the polarity of circularly polarized light by half a phase (a phase difference equal to *π*). As a result, the half wave retardation plate flips left circularly polarised light (LCP) to right circularly polarised light (RCP), and also flips RCP to LCP.

The phase difference (ΔØ) depends on the wavelength of the incident light (*λ*), the birefringence (Δ*n*) of the layer and the thickness (d) of the layer. Phase difference is given by equation (1) (Fernandes, S. N. *et al*): $Δ ∅ = 2 π \frac{Δ nd}{λ}$ (1)

The value of birefringence (Δ*n*) may be determined by methods well known in the art. An illustrative method of determining birefringence is described herein, in the Examples section. A single CNC particle typically has a birefringence of about 0.084. Typically, birefringence of a nematic CNC layer is lower than that of a single CNC particle, meaning that it is 0.08 or less, and preferably from 0.01 to 0.06. In some embodiments, birefringence of a nematic CNC layer is from 0.03 to 0.04, preferably 0.032 to 0.035, more preferably 0.033 to 0.034, yet more preferably 0.0332 to 0.0336, such as about 0.0334.

The wavelength of the incident light (*λ*) corresponds to the maximum reflectance wavelength of the cholesteric layer. In practice, incident RCP light passes through the nematic layer and is flipped to LCP light. This LCP light passes into a cholesteric layer which reflects the LCP light at a particular wavelength (depending on the helicoidal pitch, as described above). The reflected LCP light then passes back through the nematic layer and is re-flipped to RCP light. The nematic layer should efficiently flip LCP/RCP light at the maximum reflectance wavelength of the cholesteric layer to provide optimal reflectance.

Accordingly, the thickness of the nematic is such that it causes ΔØ to equal *π*, and the nematic layer can work as a half-wave retardation plate for flipping LCP light into RCP light. The thickness of the nematic layer is preferably tuned for each cholesteric layer, depending on the reflected wavelength.

An order parameter, *S*, (also known as Herman's order parameter) can be calculated by the following equation (3). The equation and method of measurement are described in Chowdhury *et al..* $\frac{2 S + 1}{1 - S} = \frac{{I}_{45}}{{I}_{90}}$ (3)

*S* = 0 is defined as an entirely random/isotropic configuration and *S* = 1 is for a perfect anisotropic arrangement. A higher *S* value is related to a higher Δ*n* for the N-CNC layer. The order parameter, S, can be determined by the methods described herein, such as in the examples section.

For example, Herman's order parameter, S, is measured using equation (3), where I₄₅ and I₉₀ are the transmitted light intensity when placing a nematic layer between a cross polarizer and measuring the transmitted light intensity (at a wavelength of 450 to 750 nm) with the cross polarizer at 45° and 90° respectively.

Typically, the order parameter (S) of the nematic layer is 0.3 or more, preferably 0.5 or more, even more preferably 0.7 or more, yet more preferably 0.9 or more.

Typically, the nematic layer has a dry thickness of 50 µm or less, preferably from 3 to 20 µm, more preferably from 6 to 12 µm. Such a thickness range is such that the layer acts as a half-wave retardation plate for circularly polarised light reflected by the cholesteric layer in the UV, IR and visible range (e.g., from 100 to 1000 nm). The thickness of the layer may be measured using standard techniques, such as measuring the thickness of a cross-section of the film using SEM.

For example, if the cholesteric film reflects light at a wavelength of from 400 to 500 nm, such as about 440 nm (blue light), then the nematic layer with a birefringence of around 0.034 may have a dry thickness of from 6 to 7 µm, preferably from 6.3 to 6.8 µm, such as about 6.3 µm. The dry thickness is defined as described herein.

For example, if the cholesteric film reflects light at a wavelength of from 500 to 580 nm, such as about 550 nm (green light), then the nematic layer with a birefringence of around 0.034 may have a dry thickness of from 8 to 9 µm, preferably from 8.5 to 8.9 µm, such as about 8.6 µm.

For example, if the cholesteric film reflects light at a wavelength of from 600 to 750 nm, such as about 630 nm (red light) then the nematic layer with a birefringence of around 0.034 may have a dry thickness of from 9 to 13 µm, preferably from 10 to 12 µm, such as about 11.9 µm.

In general, if the cholesteric film(s) reflects light in the UV, IR or visible region (e.g., 100 to 1000 nm), particularly the visible region (e.g., 400 to 800 nm) then a nematic layer having a thickness optimised for green light may be used. In particular, for embodiments where multiple cholesteric film which reflect light at different wavelengths in the visible region are using the same nematic layer as a half-wave retardation plate, then the nematic layer having a thickness optimised for green light may be used.

### Secondary Colour Film

In one embodiment, the multi-layered film comprises two cholesteric layers having a different maximum reflectance wavelength. This may be known as a secondary colour film.

In such embodiments, the multi-layered film may comprise only two cholesteric layers. This may be known as a bi-layer film.

Preferably, the two cholesteric layers have a difference in maximum reflectance wavelength of 50 nm or more, such as 100 nm or more, or 200 nm or more. The two cholesteric layers may have a difference in maximum reflectance wavelength of 300 nm or less, such as 200 nm or less, or 100 nm or less.

As a result, the multi-layer films may reflect two primary colours, which together provide a secondary colour. Examples of secondary colours include, magenta, yellow and cyan.

The cholesteric layers may be each independently selected from two or more of, such as four or more of, or six or more of:
a cholesteric layer having a maximum reflectance wavelength of 100 to 400 nm,
a cholesteric layer having a maximum reflectance wavelength of 400 to 500 nm,
a cholesteric layer having a maximum reflectance wavelength of 500 to 580 nm,
a cholesteric layer having a maximum reflectance wavelength of 600 to 750 nm, and
a cholesteric layer having a maximum reflectance wavelength of 750 to 1000 nm.

For example, one cholesteric layer may have a maximum reflectance of from 600 to 750 nm, such as about 630 nm, and one cholesteric layer may have a maximum reflectance of from 400 to 500 nm, such as about 440 nm. Accordingly, the multi-layer film reflects red and blue light, which provides a magenta coloured reflection.

In a further example, one cholesteric layer may have a maximum reflectance of from 600 to 750 nm, such as about 630 nm, and one cholesteric layer may have a maximum reflectance of from 500 to 580 nm, such as about 550 nm. Accordingly, the multi-layer film reflects red and green light, which provides a yellow coloured reflection.

In another example, one cholesteric layer may have a maximum reflectance of from 500 to 850 nm, such as about 540 nm, and one cholesteric layer may have a maximum reflectance of from 400 to 500 nm, such as about 450 nm. Accordingly, the multi-layer film reflects green and blue light, which provides a cyan coloured reflection.

### Mirror Films

In one embodiment, the multi-layered film comprises, in order:
a cholesteric layer
a nematic layer, and
a cholesteric layer.

In some such embodiments, the multi-layered film consists of a cholesteric layer, a nematic layer, and a cholesteric layer. This may be known as a tri-layer film.

The cholesteric layers sandwiching the nematic layer have the substantially the same maximum reflectance. In other words, the cholesteric layers sandwiching the nematic layer reflect the same colour light. For example, the multi-layered film may comprise a red cholesteric layer, a nematic layer and a red cholesteric layer.

Preferably, the cholesteric layers sandwiching the nematic layer have a maximum reflectance wavelength which differs by 10 nm or less, preferably 5 nm or less, more preferably 2 nm or less.

In the case of a multilayer film with a nematic layer sandwiched between two cholesteric layers with the same maximum reflectance, incident light on the first cholesteric layer is either reflected in the case of LCP light at the particular wavelength corresponding to the maximum reflectance or passes through the first cholesteric layer to the nematic layer. The nematic layer flips the polarity of the RCP light at the particular wavelength to LCP and also acts on the other light that passes through the first cholesteric layer. This flipped LCP light passes into the second cholesteric layer which reflects this LCP back to the nematic layer where it is re-flipped to RCP and passes back out through the first cholesteric layer. In this way, such tri-layered structures can provide reflectance of both the incident LCP and RCP at the particular wavelength corresponding to the maximum reflectance.

As a result, the multi-layer films may reflect the RCP and LCP light of the same colour, which together provide a mirror like reflection of a particular colour. For example, the film may reflect incident light and the reflected light has a maximum reflectance at a wavelength of from 100 to 1000 nm of 50% or more, preferably 70% or more, more preferably 80% or more, even more preferably 90% or more. Preferably, the film may reflect incident light and the reflected light has a maximum reflectance at a wavelength of from 400 to 800 nm of 50% or more, preferably 70% or more, more preferably 80% or more, even more preferably 90% or more.

Moreover, the RCP and LCP light are reflected at a similar intensity. Preferably, the film reflects right circularly polarised light and left circularly polarised light, and the difference between the average reflectance of right circularly polarised light and left circularly polarised light across a wavelength range of from 100 to 1000 nm, such as from 400 to 800 nm, is 50% or less, preferably 40% or less, more preferably 30% or less, even more preferably 20% or less.

The cholesteric layers may be both selected from:
a cholesteric layer having a maximum reflectance wavelength of 100 to 400 nm,
a cholesteric layer having a maximum reflectance wavelength of 400 to 500 nm,
a cholesteric layer having a maximum reflectance wavelength of 500 to 580 nm,
a cholesteric layer having a maximum reflectance wavelength of 600 to 750 nm, and
a cholesteric layer having a maximum reflectance wavelength of 750 to 1000 nm.

For example, both cholesteric layers may have a maximum reflectance of from 600 to 750 nm, such as about 630 nm. Accordingly, the multi-layer film may act as a red mirror providing a reflectance of 50% or more, preferably 70% or more, more preferably 80% or more, even more preferably 90% or more of red light.

In a further example both cholesteric layers may have a maximum reflectance of from 500 to 580 nm, such as about 550 nm. Accordingly, the multi-layer film may act as a green mirror providing a reflectance of 50% or more, preferably 70% or more, more preferably 80% or more, even more preferably 90% or more of green light.

In another example, both cholesteric layers may have a maximum reflectance of from 400 to 500 nm, such as about 450 nm. Accordingly, the multi-layer film may act as a blue mirror providing a reflectance of 50% or more, preferably 70% or more, more preferably 80% or more, even more preferably 90% or more of blue light.

In a related embodiment, the multi-layered film comprises two or more sets of tri-layers, each set of tri-layers comprising in order:
a cholesteric layer
a nematic layer, and
a cholesteric layer.

In such embodiments, the two cholesteric layers sandwiching the nematic layer (e.g. each tri-layer) may have substantially the same maximum reflectance. In other words, the two cholesteric layers sandwiching the nematic layer (e.g, each tri-layer) reflect the same colour light.

In addition, each set of tri-layers may have a different maximum reflectance. That is, the different tri-layers reflect a different colour light. As a result, the multi-layer films may reflect two primary colours.

For example, one tri-layer may have a maximum reflectance of from 600 to 750 nm, such as about 630 nm, and one tri-layer may have a maximum reflectance of from 400 to 500 nm, such as about 440 nm. Accordingly, the multi-layer film reflects red and blue light, which provides a magenta coloured reflection.

In a further example, one tri-layer may have a maximum reflectance of from 600 to 750 nm, such as about 630 nm, and tri-layer may have a maximum reflectance of from 500 to 580 nm, such as about 550 nm. Accordingly, the multi-layer film reflects red and green light, which provides a yellow coloured reflection.

In another example, one tri-layer may have a maximum reflectance of from 500 to 850 nm, such as about 540 nm, and one tri-layer may have a maximum reflectance of from 400 to 500 nm, such as about 450 nm. Accordingly, the multi-layer film reflects green and blue light, which provides a cyan coloured reflection.

In a related embodiment, the multi-layered film comprises three sets of tri-layers, each set of tri-layers comprising in order:
a cholesteric layer
a nematic layer, and
a cholesteric layer.

In such embodiments, the two cholesteric layers sandwiching the nematic layer (e.g. each tri-layer) may have substantially the same maximum reflectance. In other words, the two cholesteric layers sandwiching the nematic layer (e.g, each tri-layer) reflect the same colour light.

In addition, each set of tri-layers may have a different maximum reflectance. That is, the different tri-layers reflect a different colour light. As a result, the multi-layer films may reflect three different primary colours.

Preferably, the three tri-layers each include two cholesteric layers which reflect red, blue and green light respectively. As a result, the multi-layer film reflects the RCP and LCP light of the three different colours, which together provides white light.

Specifically, the three different tri-layers may include:
two cholesteric layers having a maximum reflectance wavelength of 400 to 500 nm, such as about 450 nm (blue) ,
two cholesteric layers having a maximum reflectance wavelength of 500 to 580 nm, such as about 540 nm (green), and
two cholesteric layers having a maximum reflectance wavelength of 600 to 750 nm, such as about 630 nm (red).

In one embodiment, the multi-layered film comprises, in order:
a set of two or more cholesteric layers
a nematic layer, and
a set of two or more cholesteric layers.

In such embodiments, two of the cholesteric layers sandwiching the nematic layer may have substantially the same maximum reflectance. In other words, two of the cholesteric layers sandwiching the nematic layer reflect the same colour light. As a result, the multi-layer films may reflect the RCP and LCP light of the same colour, which together provide a mirror like reflection of a particular colour. For example, the film may reflect incident light and the reflected light has a maximum reflectance at a wavelength of from 400 to 800 nm of 50% or more, preferably 70% or more, more preferably 80% or more, even more preferably 90% or more.

In addition, within the set of two or more cholesteric layers, each cholesteric layer may have a different maximum reflectance. In other words, each of the cholesteric layers within the set of two or more cholesteric layers may reflect different coloured light. As a result, the multi-layer films may reflect the RCP and LCP light of the two different colours, which together provide a secondary colour. For example, the multi-layered film may comprise a red cholesteric layer, a blue cholesteric layer, a nematic layer, a red cholesteric layer and a blue cholesteric layer. This would result in a magenta coloured film.

The two different cholesteric layers may have a difference in maximum reflectance wavelength of 40 nm or more, such as 60 nm or more, or 80 nm or more. The two cholesteric layers may have a difference in maximum reflectance wavelength of 300 nm or less, such as 200 nm or less, or 100 nm or less.

Preferably, each set of two or more cholesteric layers has cholesteric layers which reflect the same colour light. For example, if one of the two sets of two or more cholesteric layers has a green and a blue cholesteric layer, the other set of two or more cholesteric layers has a corresponding green and blue cholesteric layer.

As a result, the multi-layer films may reflect two primary colours.

The set of two or more cholesteric layers may be each independently selected from:
a cholesteric layer having a maximum reflectance wavelength of 100 to 400 nm,
a cholesteric layer having a maximum reflectance wavelength of 400 to 500 nm,
a cholesteric layer having a maximum reflectance wavelength of 500 to 580 nm,
a cholesteric layer having a maximum reflectance wavelength of 600 to 750 nm, and
a cholesteric layer having a maximum reflectance wavelength of 750 to 1000 nm.

For example, within the set of two or more cholesteric layers one cholesteric layer may have a maximum reflectance of from 600 to 750 nm, such as about 630 nm, and one cholesteric layer may have a maximum reflectance of from 400 to 500 nm, such as about 440 nm. Accordingly, the multi-layer film reflects red and blue light, which provides a magenta coloured reflection.

In a further example, within the set of two or more cholesteric layers one cholesteric layer may have a maximum reflectance of from 600 to 750 nm, such as about 630 nm, and one cholesteric layer may have a maximum reflectance of from 500 to 580 nm, such as about 550 nm. Accordingly, the multi-layer film reflects red and green light, which provides a yellow coloured reflection.

In another example, within the set of two or more cholesteric layers one cholesteric layer may have a maximum reflectance of from 500 to 850 nm, such as about 540 nm, and one cholesteric layer may have a maximum reflectance of from 400 to 500 nm, such as about 450 nm. Accordingly, the multi-layer film reflects green and blue light, which provides a cyan coloured reflection.

In some embodiments, the set of two or more cholesteric layers comprises a total of three cholesteric layers. That is, the multi-layered film comprises, in order:
three cholesteric layers
a nematic layer, and
three cholesteric layers.

In some such embodiments, the multi-layered film consists of three cholesteric layers, a nematic layer, and three cholesteric layers.

In such embodiments, two of the cholesteric layers sandwiching the nematic layer may have substantially the same maximum reflectance. In other words, two of the cholesteric layers sandwiching the nematic layer reflect the same colour light. As a result, the multi-layer films may reflect the RCP and LCP light of the same colour, as described above.

In addition, within the set of three cholesteric layers, each cholesteric layer may have a different maximum reflectance. In other words, each of the cholesteric layers within the set of three cholesteric layers may reflect different coloured light. The three cholesteric layers may reflect any colours of light. Preferably, each set of three cholesteric layers has cholesteric layers which reflect the same colour light.

Preferably, each of the two sets of three cholesteric layers has a cholesteric layer that reflects red, blue and green light. As a result, the film reflects the RCP and LCP light of the three different colours, which together provides white light.

Specifically, each of the two sets of three cholesteric layers may include:
a cholesteric layer having a maximum reflectance wavelength of 400 to 500 nm, such as about 450 nm (blue) ,
a cholesteric layer having a maximum reflectance wavelength of 500 to 580 nm, such as about 540 nm (green), and
a cholesteric layer having a maximum reflectance wavelength of 600 to 750 nm, such as about 630 nm (red).

### Multi-layered Particles

Generally, the invention also provides a multi-layered particle, comprising two or more cholesteric layers which are in direct contact with another cellulose containing layer.

In some embodiments, the multi-layered particle comprises a cholesteric layer and a nematic layer, wherein the cholesteric layer in direct contact with a nematic layer. Preferably, the nematic layer is in direct contact with two cholesteric layers.

In one aspect, there is provided a multi-layered particle comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
the multi-layered particle comprises the cholesteric layer in direct contact with another cellulose containing layer.

In some embodiments, there is provided a multi-layered particle comprising two or more cholesteric layers and a nematic layer, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less,
the nematic layer comprises cellulose nanocrystals and the cellulose nanocrystals are aligned in a non-chiral nematic structure; and
wherein the multi-layered particle comprises the cholesteric layer in direct contact with another cellulose containing layer, and the nematic layer in direct contact with the cholesteric layer.

Preferably, the nematic layer acts as a half-wave retardation plate for circularly polarised light for a wavelength within 400nm of the maximum reflectance wavelength of one or more of the cholesteric layers, such as within 300nm, within 200nm, within 100nm, or within 50nm.

The particles may also be prepared according to the methods of the invention. Thus, there is also provided a multi-layered particle obtained or obtainable by the method of the invention, by dividing the multi-layered film to produce particles, such as by fracturing and/or grinding the multi-layered film.

By dividing the multi-layered film a population of particles is produced. The population of particles comprises particles having different numbers of layers. Typically, if the multi-layered film has N layers, then the population of particles comprises particles having a range of layers from 1 to N (e.g. N, N-1, N-2, ...1 layers).

Preferably, the population of particles has a high proportion of particles having more than 1 layers (e.g., from 2 to N layers), as this imparts improved optical properties to the population of particles. In some embodiments, the amount of particles having more than 1 layers relative to the total population of particles is 10 wt.% or more, preferably 20 wt.% or more, more preferably 30 wt.% or more, yet more preferably 40 wt.% or more, even more preferably 50 wt.% or more

Preferably, the population of particles has a higher proportion of N layered particles, as this imparts improved optical properties to the population of particles. In some embodiments, the amount of N layered particles relative to the total population of particles is 10 wt.% or more, preferably 20 wt.% or more, more preferably 30 wt.% or more, yet more preferably 40 wt.% or more, even more preferably 50 wt.% or more.

The features described above in relation to the films apply to the particles of the invention also. The cholesteric layer and the nematic layer are as described above for the film. The arrangement of the cholesteric layers and/or nematic layers are as described above for the film.

The particles retain the layered structure of the film, described above. Accordingly, the multi-layer particles demonstrate the excellent optical properties seen for the multi-layer film.

For example, bi-layer particles comprising different cholesteric layers may reflect secondary colours. In addition, tri-layer particles comprising two similar cholesteric layers sandwiching a nematic layer may reflect both RCP and LCP light, significantly increasing the reflectivity of the particle. Moreover, multilayer particles comprising two sets of three red, green and blue cholesteric layers sandwiching a nematic layer may reflect both RCP and LCP forms of red, green and blue light - providing an intense broad-band reflectance across the visible range and a mirror like particle.

The particles comprise, such as consist, of cellulose nanocrystals, preferably neutralised cellulose nanocrystals, such as sodium form cellulose nanocrystals. The cholesteric layers and/or the nematic layer may comprise, such as consists of, neutralised cellulose nanocrystals, such as sodium form cellulose nanocrystals.

The multi-layer particle may have facets where the nematic phase of the particle is revealed. This may be referred to as a facetted geometry.

The facetted geometry is revealed when the particles are formed by dividing the film, and the film is divided in-between adjacent chiral nematic domains. The presence of the facetted geometry is indicative that the film has split between chiral nematic domains, rather than through the domains. Importantly, this means that the chiral nematic domains are retained in the particles which allows for the high reflectivity and colour saturation observed.

The particles may have a facetted geometry, corresponding to at least one chiral nematic domain of the cholesteric layer. The particles may also have a facetted geometry, corresponding to at least one non-chiral nematic domain of the nematic layer.

Typically, the particles have at least 4 distinguishable facets, originating from the nucleation and growth of the self-assembled chiral nematic domains in the cholesteric layers. The cholesteric layers may comprise one or more chiral nematic domains, preferably one chiral nematic domain.

The highly ordered chiral nematic structures in the particles result in high reflectivity.

The particles may be produced by the methods described above, such as by dividing the multi-layer films described above. Accordingly, the invention also provides a particle obtained or obtainable by the methods of the invention.

The steps of processing the film into particles preserves the chiral nematic structures and/or the non-chiral nematic structures of the nanocrystals without significantly altering them. The particles produced by the methods above have exceptional optical quality such as high intensity and saturation.

Generally, the multi-layer particles have a median average particle diameter of 5000 µm or less, 1000 µm or less, 500 µm or less, preferably 300 µm or less.

Generally, the multi-layer particles have a median average particle diameter of 2 µm or more, 5 µm or more, preferably 15 µm or more, more preferably 25 µm or more.

Generally, the median average particle diameter of the multi-layer particles may be selected from a range with the upper and lower limits selected from the values given above. For example, the median average particle diameter of the multi-layer particles may be from 15 µm to 300 µm, preferably 25 µm to 300 µm.

In one embodiment, the multi-layer particles have a median average particle diameter of 14 µm to 127 µm, preferably 28 µm to 113 µm, more preferably 35 µm to 106 µm.

In another embodiment, the multi-layer particles have a median average particle diameter of 84 µm to 254 µm, preferably 99 µm to 226 µm, more preferably 106 µm to 212 µm.

The median average particle diameter of the multi-layer particles may be selected from a range with the upper and lower limits selected from the values given above. For example, the median average particle diameter of the multi-layer particles may be from 170 µm to 495 µm, preferably 198 µm to 453 µm, and more preferably 212 µm to 424 µm.

The size of the multi-layer particles may be determined using standard techniques. For example, the median average particle diameter of the multi-layer particles may be measured by SEM or optical microscopy. Preferably, the surface area of each particle is measured and then the diameters of a spherical particle having the same surface area is calculated to retrieve the diameter. This diameter is recorded as the diameter of the particle and the median average of all particles measured is calculated from the individual particle diameters.

The multi-layer particles typically have an average surface area of 78,500,000 µm² or less. Preferably, the multi-layer particles have an average surface area of 3,140,000 µm² or less, more preferably 785,000 µm² or less, even more preferably 282,000 µm² or less, and most preferably 100,000 µm² or less.

The multi-layer particles typically have an average surface area of 80 µm² or more. Preferably, the multi-layer particles have an average surface area of 700 µm² or more, more preferably 1,960 µm² or more, even more preferably 4,000 µm² or more, and most preferably 6,000 µm² or more.

The average surface area of the multi-layer particles may be selected from a range with the upper and lower limits selected from the values given above. For example, the average surface area of the coloured particles may be from 4,000 µm² to 100,000 µm², preferably from 6,000 µm² to 40,000 µm².

The average surface area of the multi-layer particles may be measured by SEM or optical microscopy. Preferably, the surface area of each particle is measured and the mean average of all the particles is calculated to give the average surface area.

The multi-layer particles reflect 25% or more of the incident light at a given wavelength in the visible range (e.g., 100 nm to 1000 nm, such as 400 to 800 nm). Preferably, the particles reflect 30% or more of the incident light, more preferably 35% or more, and even more preferably 40% or more.

The particles may reflects incident light wherein the reflected light has a maximum reflectance at a wavelength of from 100 nm to 1000 nm, such as 400 to 800 nm, of 50% or more, preferably 70% or more, more preferably 80% or more, even more preferably 90% or more.

The particles may reflect right circularly polarised light, wherein the reflected right circularly polarised light has a maximum reflectance at a wavelength of from 100 nm to 1000 nm, such as 400 to 800 nm, of 40% or more, preferably 50% or more, more preferably 60% or more, even more preferably 70% or more.

Preferably, the particles reflect right circularly polarised light and left circularly polarised light, and the difference between the average reflectance of right circularly polarised light and left circularly polarised light at a given wavelength (e.g., 100 nm to 1000 nm, such as 400 to 800 nm) is 50% or less, preferably 40% or less, more preferably 30% or less, even more preferably 20% or less.

The particles may reflect light of different wavelengths with different reflectance. As a result, the particles may have a coloured appearance.

The full width at half maximum of the reflected light is typically 150 nm or less, and preferably 125 nm or less.

In the range 400 nm to 650 nm, the films typically exhibit a full width at half maximum of 150 nm or less, and preferably 125 nm or less.

The reflectance of the particles can be measured using standard techniques, such as using an optical microscope coupled with a spectrometer, used in bright field imaging configuration with or without polariser. The reflectance values are measured relative to the reflectance of a mirror, typically a silver mirror (maximal reflectance) used to obtain the normalized reflectance of the sample. The background noise is subtracted. The reflectance values are measured in the IR, UV or visible range (e.g., 100 nm to 1000 nm). Typically, the samples are mounted flat on the stage of the microscope such that the light rays can be considered to travel perpendicular to the sample's surface to measure reflection at normal incidence, with the light being collected within the cone (numerical aperture) of the objective (maximal reflectance). Typically, the reflectance values are measured in air.

After dividing, the optical properties of the cholesteric film are generally retained and observed in the particles. However, as the dimensions of the multi-layer film decreases during the dividing step to the point where the cholesteric film breaks apart into micron-size objects, light is scattered more at the interface of the particle and this results in a whiter appearance of the multi-layer particles in air than of the cholesteric film. However, the scattering superimposes on the structural colour from the particles so that the optical response from the chiral nematic structure can still be measured, even for the smallest particles. Indeed, once the multi-layer particles are embedded in an refractive index matching medium, such as a polymer resin, the colour is retrieved as the scattering at the interface of the particle is suppressed.

The reflected structural colour is typically iridescent, and so it is angle-dependent. The level of iridescence can be controlled through the extend of disorder of the chiral nematic structures within the particle.

Importantly, the multi-layer particles maintain colouration when placed in solution or a matrix such as a polymer matrix.

The colour of the particles in solution or matrix can be identical to the one in air. This is the case for instance upon immersion in dry solvent such as ethanol.

The colour of the multi-layer particle may vary depending on the medium it is in. It is proposed that this variation in colour change is due to different amounts of swelling in the different mediums, which may be large in the case of water, and may be proportional to the ionic strength of the medium.

For example, starting from a green particle in air, the swelling in a mixture of water and ethanol result in some particles appearing red and others reflecting infrared.

In the case of liquid solvent such as water, the swelling is reversible, and the colour of the multi-layer particle can be returned to its original colour (i.e. it's colour in air alone) by drying.

The swelling of the particles may result in an instant red shift of the reflected light of at least 2 nm, at least 5 nm, at least 10 nm, or at least 50 nm.

The swelling of the particles may result in an instant red shift of the reflected light of at most 100 nm, at most 150 nm, at most 175 nm, or at most 200 nm.

The swelling of the particles may result in an instant red shift of the reflected light selected from the upper and lower limits given above. For example, the wavelength shift of the particles may be within the range 2 to 150 nm, such as 10 nm to 100 nm.

The swelling is limited and does not lead to the redispersion of the nanocrystals over a prolonged period of time. Typically, the particles are stable on immersion in water for 30 minutes or more. Preferably, the particles are stable on immersion in water for 1 hour or more, more preferably 2 hours or more, even more preferably 4 hours or more and most preferably 8 hours or more.

The stability of the particles can also be assessed by considering the weight retention of the particles. Typically, the particles retain their integrity and lose less than 15 % of their weight, preferably less than 10 % and even more preferably less than 5 % of their weight after immersion in water for, for example 1 hour or more.

The stability of the particles can also be assessed by considering the reflectance of the particles on or immersion in water. Typically, the particles have a reflectance comparable to their reflectance in air, with the difference that the reflection peak may be redshifted as discussed above.

### Method of Preparing Multi-layered Films

Generally, the present invention provides a method of preparing a multi-layered film, wherein a cholesteric layer formation step is repeated two or more times to form a cholesteric layer in direct contact with another cellulose containing layer.

In some embodiments, the present invention provides a method of preparing a multi-layered film, wherein a cholesteric layer formation step and a nematic layer formation step are carried out to form a cholesteric layer in direct contact with a nematic layer.

In one aspect of the invention there is provided a method of preparing a multi-layered film, the method comprising a cholesteric layer formation step comprising the steps of:
a) depositing a nanocrystal suspension comprising cellulose nanocrystals onto a substrate;
b) spreading the nanocrystal suspension across the substrate using a spreader;
c) ageing the nanocrystal suspension to partially or completely recover the cholesteric structures lost during deposition and spreading; and
d) drying the deposited nanocrystal suspension so that the nanocrystals self-assemble to form a cholesteric layer;
wherein the cholesteric layer formation step is repeated two or more times and the multi-layered film comprises the cholesteric layer in direct contact with another cellulose containing layer. The another cellulose containing layer may be a further cholesteric layer or may be a different cellulose layer such as a nematic layer containing cellulose.

The another cellulose containing layer may be a further cholesteric layer or may be a different cellulose layer such as a nematic layer containing cellulose.

The cholesteric layer formation step may be carried out repeatedly to build up cholesteric layers. The steps may be carried out consecutively to form adjacent cholesteric layers which are in direct contact. Alternatively, the steps may be carried out non-consecutively to form cholesteric layers interposed by other cellulose containing layer(s) (e.g., a nematic layer). The cholesteric layer formed in different steps may be the same or different.

Typically, a first cholesteric layer formation step deposits the nanocrystal suspension on a non-cellulosic substrate (e.g. PET, as described herein). Any subsequent step then deposits the nanocrystal suspension on a previously deposited layer. In such cases, the previously deposited layer acts as a substrate.

In some preferred embodiments, the method further comprises a nematic layer formation step comprising the steps of:
a) depositing a nanocrystal suspension comprising cellulose nanocrystals onto a substrate;
b) spreading the nanocrystal suspension across the substrate using a spreader to align the cellulose nanocrystals and form a non-chiral nematic structure; and
c) drying the deposited nanocrystal suspension,
wherein the nematic layer formation step is carried out before and/or after a cholesteric layer formation step and the multi-layered film comprises the nematic layer in direct contact with the cholesteric layer.

Preferably the nematic layer formation step is carried out after one cholesteric layer formation step and the substrate in the nematic layer formation step is the cholesteric layer from the cholesteric layer formation step. Optionally, a second cholesteric layer formation step is carried out after the nematic layer formation step wherein the substrate for the second cholesteric layer formation steps is the nematic layer.

Preferably, the nematic layer formation step is carried out between two cholesteric layer formation steps to form a nematic layer in direct contact with two cholesteric layers.

Preferably, the nematic layer acts as a half-wave retardation plate for circularly polarised light reflected by the cholesteric layers.

The nematic layer formation step may be carried out repeatedly to build up nematic layers. The steps may be carried out consecutively to form adjacent nematic layers. Alternatively, the steps may be carried out non-consecutively to form nematic layers interposed by other cellulose containing layer(s) (e.g., a cholesteric layer). The nematic layer formed in different steps may be the same or different.

Preferably, the nematic layer formation is carried out between two cholesteric layer formation steps. Accordingly, the nematic layer is directly sandwiched between two cholesteric layers.

Typically, the nematic layer formation step deposits the nanocrystal suspension on the previously deposited layer. The previously deposited layer acts as a substrate.

The order of cholesteric layer formation and nematic layer formation steps is not particularly limited.

In one embodiment, the method comprises in order:
a cholesteric layer formation step, and
a cholesteric layer formation step.

In this case, the two cholesteric layers may reflect different colours. Such films are as described in the secondary colour film section above.

In another embodiment, the method comprises in order:
a cholesteric layer formation step,
a nematic layer formation step, and
a cholesteric layer formation step.

In this case, the two cholesteric layers sandwiching the nematic layer may reflect the same colours. Such films are as described in the mirror films section above.

The method of this embodiment may be repeated two or more times, such as three times. This results in the formation of repeating tri-layers. Each tri-layer may reflect a different colour. For example, in a two tri-layer film, the tri-layers may independently reflect red and blue to provide a magenta film. Alternatively, in a three tri-layer film, the tri-layers may independently reflect red, green and blue to provide a white film.

In a further embodiment, the method comprises in order:
two or more cholesteric layer formation steps,
a nematic layer formation step, and
two or more cholesteric layer formation steps.

In this case, the sets of two or more cholesteric layers formed on either side of the nematic layer may each reflect different colours. In addition, two of the cholesteric layers sandwiching the nematic layer may have substantially the same maximum reflectance. For example, the resulting multi-layered film may comprise a red cholesteric layer, a blue cholesteric layer, a nematic layer, a red cholesteric layer and a blue cholesteric layer. This would result in a magenta coloured film. Such films are as described in the mirror films section above.

In a more specific embodiment, the method comprises in order:
three cholesteric layer formation steps,
a nematic layer formation step, and
three cholesteric layer formation steps.

Preferably, the set of three cholesteric layers formed on each side of the nematic layer reflect red, blue and green light. As a result, the film reflects the RCP and LCP light of the three different colours, which together provides white light. Such films are as described in the mirror films section above.

### Peeling

The method of preparing a multi-layered film may further comprise a step of peeling the multi-layered film from the substrate. The peeling step typically occurs after the drying step has occurred for the final layer. Preferably the peeling step is carried out on a dry substrate. The peeled film may be transferred to a different substrate, or can be used as a standalone film.

In this way, after peeling, the substrate can be re-used, for instance in a close loop fashion instead of being rewound, to allow for continuous printing.

In some cases, the substrate may be in the form of a moving belt such as a heat resistant moving belt, such as made of metal. The term belt here refers to a closed loop form of the substrate.

In some cases, the edges of the multi-layered film are removed after the peeling step.

### Annealing

The method of preparing a multi-layered film may further comprise the step of annealing the multi-layered film. Typically, the annealing step is carried out on the multi-layered film, although it may also be carried out the multi-layer particles, as described below. In such case, the annealing step is carried out after the drying step and before the dividing step, if present.

Furthermore, the annealing step may be carried out on one or more cholesteric layers, or one or more nematic layers during formation of the multi-layered film. That is, the annealing step may be carried out on a partially constructed film between application of layers. For example, the annealing step may be carried out between cholesteric film preparation steps, or between a cholesteric film preparation step and a nematic layer preparation step.

The annealing step refers to a step of heating the multi-layered film or layers thereof. Without wishing to be bound by theory, it is proposed that annealing removes tightly-bound water molecules and promotes destabilization of the sulphate half ester groups covering the surface of the cellulose nanocrystals, therefore becoming reactive. It is proposed that the removal of water and desulfation promotes the formation of new molecular bonds between adjacent nanocrystals. As a result, water molecules are less prone to interact with the chains and to penetrate the nanostructure, preventing the swelling and disintegration of the particles in water from occurring.

The annealing step may lead to oxidation, polymerisation and crosslinking between the cellulose nanocrystals and any additional compounds or additives that remain in the film after the drying step.

The annealing is carried out with any suitable apparatus able to heat, oxidize, polymerise, crosslink the cellulose nanocrystals and any additional compounds or additives that remain in the film as well as removing tightly-bound water molecules and destabilizing the sulphate half ester groups covering the surface of the cellulose nanocrystals. Suitable drying apparatus include an IR or UV radiation lamp, a furnace, a hot air drier, an oven, a convection oven, a vacuum oven and a hot plate. Combinations of drying steps using different apparatus may be used, either successively or simultaneously.

The temperature of the annealing step may be 250 °C or less, 230 °C or less, preferably 220 °C or less, and more preferably 190 °C or less.

The temperature of the annealing step may be 100 °C or more, 110 °C or more, preferably 140 °C or more, and more preferably 170 °C or more.

The temperature of the annealing step may be selected from a range with the upper and lower limits selected from the values given above. For example, the temperature of the annealing step may be from 100 to 250 °C, preferably from 140 to 220 °C.

The annealing step may be carried out for 120 minutes or less, 60 minutes or less preferably 40 minutes or less, and more preferably 30 minutes or less.

The annealing step may be carried out for 2 minutes or more, 5 minutes or more, 10 minutes or more, preferably 15 minutes or more, and more preferably 20 minutes or more.

The annealing step may be carried out for a time selected from a range with the upper and lower limits selected from the values given above. For example, the annealing step may be carried out at for from 10 minutes to 120 minutes, preferably from 20 minutes to 40 minutes such as for around 30 minutes.

The annealing step has the effect of making the cholesteric particles prepared from the annealed film 'colourfast' when they are placed in various solvents, particularly aqueous solvents. The term 'colourfast' here refers to the ability of the particles to maintain some colour when suspended in a solution or embedded in a matrix, such as a polymer. Thus, the annealing step reduces and/or inhibits processes such as swelling or disintegration of the multi-layered films or particles by modifying the physical and/or chemical properties of the nanocrystals.

It is also proposed that annealing prevents the film surfaces from degrading, such as through physical abrasion, during a subsequent dividing step.

Preferably, when the annealing step is carried out the nanocrystal is a cellulose nanocrystal such as a sodium form cellulose nanocrystal. In this way, the annealing process results in improved optical properties of the annealed film and any resulting particles produced therefrom. It is proposed that Na⁺ counterions in the cellulose nanocrystals do not catalyse the destabilization of the sulphate half esters upon heating as much as in the case of H⁺ counterions. Excessive destabilization of the sulphate half esters, as typically observed in the case of H+ counterions in the form of strong darkening of the film, is proposed to reduce the optical quality of the cellulose nanocrystal structures.

Additionally, the annealing step may decrease the transmittance of the film and therefore of an increased opacity of the film. Increased opacity may improve the colour contrast of the film and particle. As such, it is possible to further control the degree of decrease of transmittance and darkening of the particles by carefully controlling the temperature and duration of the heat-treatment step.

The annealing step may decrease the transmittance of the film in comparison to an untreated film by at least 1%, at least 10%, at least 25%, at least 50%. The annealing step may decrease the transmittance of the film in comparison to an untreated film by no more than 90%, preferably no more than 75%.

The parameters of the annealing step may be carried in such way that the decrease of the transmittance of the film compared with an untreated film falls within the range with the upper and lower limits selected from the values given above. For example, the decrease of the transmittance of the film may be of 33 %.

The transmittance of the film may be determined using standard techniques. For example using an optical microscope coupled with a spectrometer, used in bright field imaging configuration. The transmittance values are measured against total transmission. The background noise is subtracted. The reflectance values are typically measured in the IR, UV and visible range (100 nm to 1000 nm). Typically, the samples are mounted flat on the stage of the microscope such that the light rays can be considered to travel perpendicular to the sample's surface to measure reflection at normal incidence, with the light being collected within the cone (numerical aperture) of the objective (maximal reflectance). Typically, the reflectance values are measured in air.

As a result of the annealing step, the multi-layered film and particles can retain their integrity when placed in water and other solvent for more than 1 year, while only a limited redshift of the colour of the multi-layered film and particle may be observed in aqueous solvent.

### Method of Preparing Cholesteric Layer

The cholesteric layer formation step comprising the steps of:
a) depositing a nanocrystal suspension comprising cellulose nanocrystals onto a substrate;
b) spreading the nanocrystal suspension across the substrate using a spreader;
c) ageing the nanocrystal suspension to partially or completely recover the cholesteric structures lost during deposition and spreading; and
d) drying the deposited nanocrystal suspension so that the nanocrystals self-assemble to form a cholesteric layer.

The cholesteric layers may be prepared in the same way as the cholesteric films described in PCT/EP2022/073629.

The final colour of the layer can be tuned by, for example, adjusting the properties of the nanocrystal suspension, adjusting the deposition rate, adjusting the spreading (coating) conditions, and by adjusting the drying conditions.

In the coating process, the nanocrystal suspension may be spread across the substrate using a coating applicator or a spreader. The gap between the coating applicator/spreader and the substrate is fixed and is from 5 µm to 5 mm, preferably from 300 to 1500 µm, more preferably 300 to 1100 µm. The term "fixed" here is used to mean that the gap does not change during coating except by interference of the user. That is, the gap does not vary independently in an uncontrolled manner.

The gap 38onicatn the coating applicator/spreader and the substrate is sometime referred to as the coating gap in the art. A larger gap leads to a thicker layer of the nanocrystal suspension being deposited and spread onto the substrate. The thickness of the nanocrystal suspension layer affects drying time and so affects the self-assembly and final colouration of the dry film. A thinner nanocrystal suspension layer dries more quickly than a thicker nanocrystal suspension layer. The nanocrystals in a thinner layer have a shorter self-assembly time and are likely to have a less vivid colouration.

In the coating process, the coating speed is at least 0.6 mm/s. Coating speed refers to the speed at which the substrate moves relative to the spreader during at least the spreading step.

In the coating process the substrate is kept level during the depositing, spreading and drying steps. The term kept level is used here to refer to substantially the entire surface of the substrate remaining in a substantially horizontal plane during the depositing, spreading and drying steps.

In this way, unwanted flow of the nanocrystal suspension during deposition, spreading and drying is prevented. Unwanted flow of the nanocrystal suspension can result in disturbance of the self-assembly process and therefore reduced ability of the nanocrystals to form the chiral nematic order required for optimal structural colouration.

The substrate may be kept level by using a rigid substrate, by tensioning the substrate, by supporting the substrate or by any combination thereof.

For example, the rigid substrate may be thick enough not to warp during deposition and spreading. Preferably the rigid substrate is also flexible enough to be carried on the drums of a roll-to-roll printing machine. For example, the substrate may have a tension of from 10 to 250 N, more preferably from 25 to 125 N and even more preferably from 40 to 90 N. The tension difference between the ends of the web was such so that it exceeds 20 N, more preferably 40 N and even more preferably 60 N. The film tension may be determined by a load cell sensor.

In this way, cholesteric layers may be reliably and reproducibly prepared on large scale using industrially viable methods.

### Coating Process (Ch-CNC)

The cholesteric layer formation includes the steps of depositing and spreading a nanocrystal suspension across a substrate. These may be known as the depositing step and spreading step. Preferably, the nanocrystal suspension comprises neutralised cellulose nanocrystals.

The nanocrystal suspension may be deposited onto the substrate using a coating applicator. Any suitable coating applicator may be used. Suitable deposition methods include using a printing nozzle, spray head or slot die through which the cellulose suspension can flow in a controllable manner.

The nanocrystal suspension may be spread over the substrate using a spreader. Any suitable spreader may be used. Suitable spreaders include a knife, doctor blade, or a slot die.

The coating applicator and spreader can refer to the same apparatus. For example, when the coating applicator is a slot-die used with a moving belt, the steps of depositing and spreading are both achieved by the slot die. Slot die coating is well known, in particular slot die coating is well known in roll-to-roll printing processes. Preferably, a slot die is used as the coating applicator and spreader.

During spreading, the nanocrystal suspension experiences shear. The spreading step is an active spreading step. That is, the suspension is typically actively spread by applying an external mechanical force. This differs from passive spreading, where the suspension is allowed to spread passively (e.g., under gravity). During passive spreading the suspension does not typically experience shear.

The shear rate is calculated according to the following equation: $Shear rate = coating speed / coating gap$

In some cases the shear rate during the spreading step is 30.0 s⁻¹ or less, 20.0 s⁻¹ or less, 10.0 s⁻¹ or less, 8.0 s⁻¹ or less, 4.0 s⁻¹ or less, 3.0 s⁻¹ or less, preferably 2.8 s⁻¹ or less and more preferably 2.5 s⁻¹ or less. In some cases, the shear rate during the spreading step is 0.5 s⁻¹ or more, preferably 1.0 s⁻¹ or more, and more preferably 2.0 s⁻¹ or more.

The shear rate during the spreading step may be selected from a range with the upper and lower limits selected from the values given above. For example, the shear rate during the spreading step may be from 2.0 s⁻¹ to 20.0 s⁻¹, preferably 2.0 s⁻¹ to 2.5 s⁻¹, such as around 2.2 s⁻¹.

The nanocrystal suspension may be deposited in discrete batches. In this case, each discrete batch is spread across the substrate during the spreading step.

Alternatively, the nanocrystal suspension may be deposited continuously. In this case, the nanocrystal suspension is continuously spread across the substrate.

The quantity of nanocrystal suspension deposited per unit area of the substrate (the areal loading) may be of 100 µL/cm² or less, 90 µL/cm² or less, preferably 80 µL/cm² or less and more preferably 60 µL/cm² or less.

The areal loading may be 10 µL/cm² or more, 20 µL/cm² or more, preferably 30 µL/cm² or more, and even more preferably 40 µL/cm² or more.

The areal loading may be selected from a range with the upper and lower limits selected from the values given above. For example, the deposition may be at a rate of from 40 µL/cm² to 60 µL/cm² such as around 50 µL/cm².

The quantity of material deposited per unit time (the deposition rate) may be 12,000 µL/min or less, 10,000 µL/min or less, preferably 8,000 µL/min or less and more preferably 6,000 µL/min or less.

The deposition rate may be 800 µL/min or more, 1,200 µL/min or more, 1,600 µL/min or more, preferably 2,000 µL/min or more, and even more preferably 2,400 µL/min or more.

The deposition rate may be selected from a range with the upper and lower limits selected from the values given above. For example, the deposition may be at a rate of from 2,000 µL/min to 8,000 µL/min such as around 6,000 µL/min.

Typically, the substrate is moved relative to the coating applicator and the spreader. In this way, the nanocrystal suspension can be spread along the substrate by a combination of the spreader and the movement of the substrate.

Coating speed refers to the speed at which the substrate moves relative to the coating applicator or spreader during at least the spreading step.

The coating speed may be at least 1.0 mm/s, at least 1.5 mm/s at least 2.0 mm/s at least 4.0 mm/s preferably at least 1.0 mm/s and more preferably at least 1.5 mm/s.

The coating speed may be 60.0 mm/s or less, 30.0 mm/s or less, 15.0 mm/s or less, 3.0 mm/s or less, preferably 2.7 mm/s or less and more preferably 2.4 mm/s or less.

The coating speed may be selected from a range with the upper and lower limits selected from the values given above. For example, the coating speed may be from 1.0 mm/s to 2.4 mm/s, such as around 1.5 mm/s.

Preferably the coating process is a roll-to-roll printing process. Roll-to-roll printing is a well-known printing technique. Roll-to-roll printing involves the deposition of a substance from a fixed print head onto a moving substrate. Typically, the moving substrate is provided in the form of a roll and is often referred to as a web. The term web refers to a flat, elongated (sometimes continuous) substrate that can be wound and rewound. During printing, the substrate or web is unwound from the roll, a substance is deposited on the unwound portion of the web and the deposited substance is carried on the surface of the substrate or web for further processing, such as drying. The web or substrate may be re-wound to form a second roll, either with or without the deposited substance on the surface of the web. Alternatively, the deposited substance may be removed and the web or substrate continuously recycled in further processing steps (Here, the web or substrate is in the form of a closed loop).

In some cases, the deposition can be performed over one or more discrete areas of the substrate or web.

In the present case, after deposition of the nanocrystal suspension on the web or substrate, the further processing steps include spreading, drying, and optionally removal of the cholesteric film from the surface of the web or substrate (peeling). Additional pre-treatment steps may also be carried out on the web or substrate prior to deposition of the nanocrystal suspension. The additional pre-treatment and later processing steps are discussed in more detail below.

### Substrate (Ch-CNC)

The substrate is a suitable surface on which the nanocrystal suspension may be deposited, spread and dried.

For the initial layer of the multi-layer film, the substrate is typically a non-cellulosic material as described below. This may be known as the base substrate. For second and subsequent layers of the multi-layer film, the layers are applied directly to the previous cellulose containing layers. Accordingly, the previous layers are acting as the substrate.

In some cases the base substrate has a thickness of 10,000 µm or less, 1,000 µm or less, preferably 800 µm or less, and even more preferably 500 µm or less.

In some cases the base substrate has a thickness of 50 µm or more, 100 µm or more, preferably 300 µm or more, and even more preferably 400 µm or more.

The base substrate thickness may be selected from a range with the upper and lower limits selected from the values given above. For example, the substrate thickness may be from 300 to 500 µm such as around 400 µm.

In this way, the base substrate is relatively rigid and assists in keeping the substrate uniform and level during deposition and drying.

The base substrate may be or comprise any suitable material. Suitable substrate materials include polyvinyl 42onicat, cellophane, polystyrene, acetal, ethylene-vinyl acetate, polyethylenes such as polyethylene terephthalate, polypropylene, fluoropolymer; polyimide, nylon, polyester, epoxy resin, acrylic resin, phenolic resin, polycarbonate, polyurethane, polyvinylchloride, and polyester. Preferably the web is polyethylene terephthalate (PET).

The base substrate may comprise substantially one suitable material. Alternatively, the base substrate may comprise two or more suitable materials. In such case, the materials may be mixed (blended) together, or they may be combined to form separate domains of each material.

The base substrate may be pre-structured, such as micro or nano-structured. In such cases, the substrate may be referred to as "patterned". This pre-existing patterning can influence the interaction of the deposited substance with the substrate. For example, the substrate may exhibit areas where the deposited nanocrystal suspension can more favorably interact with, or have greater wetting of, the substrate. Similarly, the patterning may provide areas in which the deposited nanocrystal suspension interacts less favorably with, or has poorer wetting or, the substrate such that it preferentially avoids such areas.

The orientation of the cholesteric domains may be altered as a result of the patterning. For example, the orientation may follow the topography of the substrate such that the reflection from the cholesteric domains occurs over a wider range of angles. This can create a more complex visual effect than when a planar substrate with no such pre-existing pattern is used.

After formation of the multi-layer film, the base substrate may be separated from the film. This step may be referred to as peeling, and is discussed in further detail herein.

In some cases, the substrate can be reused several times in a closed-loop fashion.

Additionally, in some cases, the substrate is in the form of a moving belt such as a heat resistant moving belt, such as made of metal.

### Nanocrystal Suspension (Ch-CNC)

The cholesteric layer formation includes the step of depositing a nanocrystal suspension, such as a cellulose nanocrystal suspension, onto a substrate.

Cellulose nanocrystals (CNCs) are well known in the art. Methods for the preparation of cellulose nanocrystals are also well known in the art. Many types of cellulose nanocrystals are known, and examples includes those cellulose nanocrystals obtained from different biological sources as well as those nanocrystals prepared in different ways from the same source.

The cellulose nanocrystals used in this invention can be any suitable cellulose nanocrystal. The cellulose nanocrystals can be any cellulose nanocrystal able to self-assembled into cholesteric structures.

Cellulose nanocrystals may be prepared from bacterial, vegetal or animal sources (e.g. chitin), including plant-based and biomass source such as cotton and wood and any subsequent processed element coming from such, such as paper, filter-paper cotton linters, and wood pulp.

The processing procedures carried out on the source material in order to produce cellulose nanocrystals typically involve hydrolysis, separation of the hydrolysed compounds and purification. Separation can be performed through centrifugation. Purification can be carried out by dialysis and membrane ultrafiltration. Known methods for producing cellulose nanocrystals are described by Lagerwall *et al.*

Typically, the cellulose source is hydrolyzed, such as with sulfuric or hydrochloric acid or other acids, or alkaline medium in the preparation process, or the cellulose source is oxidized, such as in the case of the preparation of TEMPO-oxidized cellulose nanocrystals.

Preferably, the nanocrystal solution comprises pH-neutralized cellulose nanocrystals. More preferably, the nanocrystal solution comprises the sodium form of cellulose nanocrystals.

During hydrolysis, it is proposed that the cellulose chain backbone of the cellulose nanocrystals are modified at the molecular level to provide colloidal stability to the nanocrystals. For example, sulfuric acid hydrolysis is thought to modify the cellulose chains with sulfate half ester groups. Another example of alteration occurs during extraction with hydrogen peroxide, in which the cellulose chains are thought to be modified with carboxylic groups, providing carboxylate cellulose nanocrystals. As a result of the modification of the cellulose chains with charged groups, several counter ions can be used to balance the charges. Most commonly, H+ (to give acidic-form cellulose nanocrystals) and Na⁺ (to give neutralized (e.g. sodium form) cellulose nanocrystals. Counter ions (e.g. H⁺) may be exchanged in suspension, for example by using concentrated NaOH or NaCl solution to give fully or partially neutralized cellulose nanocrystals. Na+ can be exchanged in suspension similarly, for example by using concentrated HCl or H₂SO₄.

Preferably, the nanocrystal suspension comprises pH-neutralized cellulose nanocrystals, partially pH-neutralized cellulose nanocrystals or acidic-form cellulose nanocrystals. More preferably, the nanocrystal suspension comprises the sodium form of cellulose nanocrystals.

In the present case, the preparation of the cellulose nanocrystal suspension may include sonication of the cellulose nanocrystal suspension.

A cellulose nanocrystal is typically rod-shaped. Thus, the crystal may be elongate with a length dimension considerably greater than the width dimension.

A cellulose nanocrystal for use in the present case may have a length that is at most 200, at most 500, at most 1,000, or at most 1,500 nm.

The cellulose nanocrystal for use in the present case may have a length that is at least 50, at least 70, or at least 100 nm.

The cellulose nanocrystal for use in the present case may have a width that is at most 20, at most 30, at most 50 nm.

The cellulose nanocrystal for use in the present case may have a width that is at least 1, at least 3, at least 5, or at least 10 nm.

The aspect ratio for the cellulose nanocrystal may be at least 5, 7, 10, 15 or 20.

The aspect ratio for the cellulose nanocrystal may be at most 40, 50, 100, 150 or 200.

The cellulose nanocrystals can be provided as a suspension, e.g. in a solvent, or as a powder, such as a spray-dried or freeze-dried powder. Such powders are redispersed to provide the cellulose nanocrystal suspension used in the present invention.

Any suitable solvent may be used, such as any solvent in which the cellulose nanocrystals can form a colloidally stable suspension, with or without the use of additive such as a surfactant. Suitable solvents includes: water, acetic acid, acetone, acetonitrile, benzene, 1-butanol, 2-butanol, 2-butanone, t-butyl alcohol, carbon tetrachloride, chlorobenzene, chloroform, cyclohexane, 1,2-dichloroethane, diethylene glycol, diethyl ether, diglyme (diethylene glycol, dimethyl ether), 1,2-dimethoxy-, ethane (glyme, DME), dimethyl-, formamide (DMF), dimethyl sulfoxide (DMSO), 1,4-dioxane, ethanol, ethyl acetate, ethylene glycol, glycerin, heptane, hexamethylphosphoramide, (HMPA), hexamethylphosphorous, triamide (HMPT), hexane, methanol, methyl t-butyl, ether (MTBE), methylene chloride, N-methyl-2-pyrrolidinone, (NMP), nitromethane, pentane, petroleum ether (45onicat), 1-propanol, 2-propanol, pyridine, tetrahydrofuran (THF), toluene, triethyl amine, o-xylene, m-xylene, p-xylene or ionic liquids.

Preferably the solvent is water.

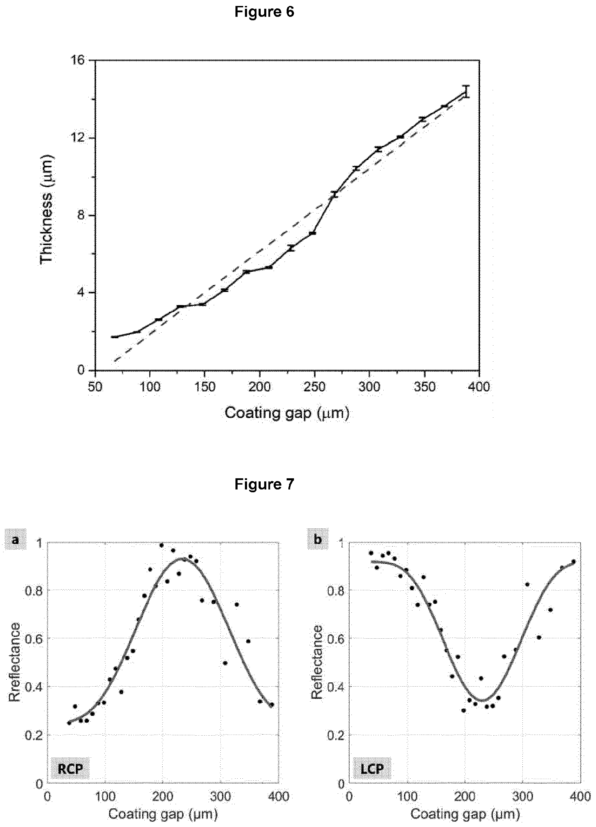

An increase in the concentration of the cellulose nanocrystals in the suspension may be associated with an increase in anisotropy of the suspension. Conversely, a decrease in the concentration of the cellulose nanocrystals in the solvent may be associated with a decrease in anisotropy in the suspension. For example, the cellulose nanocrystal suspension used in the worked examples show complete anisotropy in water at around 7 wt % and above **(****Figure** 6). Complete loss of anisotropy is seen at around 3.5 wt % and below.

Preferably, the concentration of the cellulose nanocrystals in the suspension is chosen to provide a mixture which has at least some anisotropy, for example in the form of chiral nematic structure. The present inventors have found that the use of nanocrystal mixtures, such as aqueous suspensions, where the suspension is in a liquid crystalline state with no, very low or partial anisotropy (e.g. a biphasic state) does not provide films having optimal colouration of high quality. It is proposed that such films have inhomogeneities which provide the poorer colouration properties observed.

Typically, the nanocrystal suspension comprises cellulose nanocrystals (such as neutralised cellulose nanocrystals) at a concentration of at most 12 wt%, preferably at most 11 wt%, more preferably at most 10 wt%, even more preferably at most 9 wt%, and most preferably at most 8 wt%.

Typically, the nanocrystal suspension comprises cellulose nanocrystals (such as neutralised cellulose nanocrystals) at a concentration of at least 1.5 wt%, preferably at least 2 wt%, more preferably at least 3 wt%, even more preferably at least 4 wt%, and most preferably at least 5 wt%.

The nanocrystal suspension may comprise cellulose nanocrystals in a range with upper and lower limits selected from the values given above. Typically, the nanocrystal is present in the mixture in an amount selected from 4 to 12 wt %, preferably from 4 to 8 wt%, more preferably from 6 to 8 wt%.

Preferably, for the cholesteric layer formation step the concentration of the nanocrystal suspension is 3.5 to 7 wt.%, preferably 5 to 6.5 wt.%, more preferably about 6 wt.%.

The wt % values that are chosen will depend upon the level of anisotropy that results from the use of a given cellulose nanocrystal and can be appropriately chosen.

Additionally or alternatively, the amount of nanocrystal used may be expressed in terms of the level of anisotropy within the nanocrystal suspension.

The nanocrystal may be present in a mixture where the level of anisotropy is at least 10, 15, 20, 25, 30, 35, 40, 45, 50, 55, 60, 65 or 70 %. Additionally, or alternatively, the nanocrystal may be present in a mixture where the level of anisotropy is at most 65, 70, 75, 80, 85, 90 or 95%. The nanocrystal may be present where the mixture is substantially all anisotropic (substantially 100% anisotropy).

The46onicate46all may be present in the mixture where the level of anisotropy selected from a range with the upper and lower limits selected from the values given above. For example, nanocrystal may be present in the mixture where the level of anisotropy is selected from 25 to 100 %.

In the case where a sonication step is performed before the deposition step, the anisotropy refers to the anisotropy of the cellulose nanocrystal suspension before the sonication.

Sonication can alter the level of anisotropy in the suspension. In some cases, it may be preferable to discard the non-anisotropic portions of the suspension.

Other components may be present with the cellulose nanocrystal or added to the cellulose nanocrystal suspension to alter the self-assembly properties of the cellulose nanocrystals, and/or the physical and chemical properties of the cellulose nanocrystals, the nanocrystal suspension, and/or cholesteric film. For instance, additives, particularly polymers, functional molecules, and filler may be included, which can act as rheology modifiers, plasticizers, thickeners or reinforcing agents to provide additional functionality such as increased flexibility or strength to the cholesteric films as required. Examples of suitable additives are listed below.

Suitable acids include both organic and mineral acids, and their corresponding salt forms. Suitable organic acids include carboxylic acids their corresponding acid anhydrides, such as the non-phenolic organic acids 2,5-furandicarboxylic acid, acetic acid, adipic acid, ascorbic acid, benzoic acid, boric acid, carbonic acid, citric acid, formic acid, fumaric acid, lactic acid, itaconic acid, levulinic acid, malic acid, oxalic acid, propionic acid, succinic acid; and the phenolic organic acids benzoic acid, 47onicat acid, ferulic acid, gallic acid, gentisic acid, parahydroxybenzoic acid, paracoumaric acid, protocatechic acid, vanillic acid, salicylic acid, sinapic acid, syringic acid, phenol acid. Additionally, uric acid may also be used. Suitable mineral acids include hydrochloric acid, chloroacetic acid, hydrobromic acid, bromoacetic acid, hydrochloric acid, hydrofluoric acid, hypobromous acid, hypochlorous acid, hypoiodous acid, iodic acid, iodoacetic acid, nitric acid, perchloric acid, phosphoric acid, phosphorous acid, selenic acid, sulfurous acid, sulfuric acid, telluric acid, tribromoacetic acid, trichloroacetic acid, trifluoroacetic acid. The acid forms corresponding to the bases listed below may also be used. Mixtures of acids may also be used.

Suitable bases include amines, amides, alkaline salts such as sodium acetate, sodium amide, 3-amino-3-methylpentane, ammoniac, aniline, azetidine, bromopyridine, butyl lithium, cadaverine, 2-chlorophenol, 3-chlorophenol, 4-chlorophenol, choline, cyclohexylamine, lithium diethylamide, diethylamine, diisopropylamine, dimethylamine, 2,4-dimethylimidazole, 1,2-dimethylaminoethane, 1,2-dimethylpyrrolidine, ethylamine, ethanediamine, ethanolamine, sodium ethanoate, potassium ethanoate, ferrous and ferric hydroxide, examethylenediamine, hexylamine, hydrazine, sodium hydride, barium hydroxide, calcium hydroxide, iron hydroxide, lithium hydroxide, magnesium hydroxide, potassium hydroxide, sodium hydroxide, hydroxylamine, methylamine, 2-methyl-2-butanamine, 3-methyl-1-butanamine, methylglycine, 1-methylpiperidine, monoethanolamine, n-butylamine, nitrophenols, N-methylpyrrolidine, N-methylpyridinamine, 3-pentanamine, pentylamine, piperidine, propylamine, 1,3-propanediamine, 4-pyridinamine, pyridine, pyrrolidine, sec-butylamine and tert-butylamine, and triethylamine. The alkanaline forms corresponding to the acid previously listed may also be used. Mixtures of bases may also be used.

Suitable salts include neutral salt such as sodium chloride, potassium chloride, ferrous and ferric chloride. Ionic liquids, in which the nanocrystals can be suspended, may also be used. Mixtures of salts may be used.

Suitable polymers include polyethylene glycol, polyethylene imine, polyethylene oxide, polyvinyl alcohol, quaternary polyamines, polyacrylamides, polyacrylic acid and its copolymers, polyacrylates including sodium polyacrylate, dicyandiamide resins, polyvinylpyrrolidone, sodium polystyrene sulphonate, sodium polyvinyl-sulphonate, polyamidoamines, carboxypolymethylene, polyvinyl methyl ether-maleic anhydride; polyols such as polyether polyol and polyester polyol; cellulose derivative such as cellulose nanofibers, microfibrillated cellulose, calcium carboxymethyl cellulose, carboxymethyl cellulose acetate butyrate, carboxymethyl hydroxyethylcellulose, cellulose, cellulose acetate, cellulose acetate butyrate, cellulose gum, cellulose acetate propionate, cellulose acetate propionate carboxylate, cellulose succinate, cetyl hydroxyethylcellulose, ethylcellulose, hydrolyzed cellulose gum, hydroxybutyl methylcellulose, hydroxyethylcellulose, hydroxyethyl ethylcellulose, hydroxypropylcellulose, hydroxypropyl methylcellulose, hydroxypropylmethylcellulose acetate/succinate, hydroxypropyl methylcellulose phthalate, methylcellulose, methyl ethylcellulose, methyl hydroxyethylcellulose, microcrystalline cellulose, potassium cellulose succinate, sodium cellulose sulfate, nitrocellulose, cellulose acetate, rayon, regenerated cellulose, cellulose acetate-propionate, cellulose acetate-butyrate, cellulose triacetate, viscose; other polysaccharides, glucose and polysaccharide derivatives such as arabinoxylans, carrageenan, chitin, chitosan, fucoidan, galactogen, galactomannan, glucans, glycans, glycogen, inulin, lignin, mannan, pectins, starch and xylans. In addition to the polysaccharides listed above, sulfated and oxidized polysaccharides may also be used. In addition to the cellulose derivatives listed above, hemicelluloses may also be used. Mixtures of polymers may be used.

Suitable functional molecules include monosaccharides such as arabinose, deoxyribose, erythrose, fructose, galactose, glucose, and sorbose; sugar alcohol and polyols such as arabitol, cyclitols such as pinitol, ethylene glycol, erythritol, galactitol, glycerol, isomalt, lactitol, maltitol, mannitol, pentaerythritol sorbitol and xylitol; proteins such as collaged, gelatin and sericin; and aminoacids. Small molecules also include dyestuff such as acid dyes, basic dyes, direct dyes, sulphur dyes, vat dyes, reactive dyes and azoic colorants. Additionally, the dye stuff may be a black dye, or may result in a black appearance. Mixtures of functional molecules may be used.

Suitable fillers include water-soluble inorganic material and nano-objects such as clays, including hectorite, kaolin, mica, montmorrilonite, laponite, cloisite; carbon materials, such as carbon nanotubes, graphite, graphene, carbon black; and water-soluble proteins such as albumins, whey, plant-derived proteins and zein. Mixtures of functional fillers may be used.

Additionally, typical fillers include water-soluble inorganic material, micro-materials and nano-objects such as clays, including hectorite, kaolin, mica, minerals, oxides, montmorrilonite, laponite, cloisite; carbon materials, such as carbon nanotubes, graphite, graphene, carbon black; and water-soluble proteins such as albumins, whey, plant-derived proteins, and zein. In addition, typical fillers include organic and inorganic pigments such as aluminum, copper, cobalt, gold, iron, manganese, cadmium, chromium, arsenic, bismuth, chromium, lead, titanium, barium, tin, zinc, cerium, mercury, carbonaceous, antimony based pigments; fluorescent pigments.

Further modifications to the cellulose nanocrystals, and to the compounds used in the preparation of the cellulose nanocrystals, are described in the art. Such modification is typically made with a view to maintaining the ability of the cellulose nanocrystal to form a chiral nematic phase.

### Ageing (Ch-CNC)

The cholesteric layer formation includes an ageing step. During the ageing step, the nanocrystal suspension partially or completely recovers any cholesteric structures lost during deposition and spreading.

In this way, the optical properties of the resulting layer can be optimised. Without wishing to be bound by theory, it is proposed that high shear during spreading can disrupt pre-existing chiral nematic ordering and result in poorer optical properties. If any disruption of any anisotropy in the nanocrystal suspension resulting from excessive shear rate occurs, any pre-existing chiral nematic ordering can be recovered, partially or fully, by lengthening the ageing time, as the dissipation of the alignment is a thermodynamically favoured process. In addition, nanocrystal suspensions having a lower viscosity permit a return to equilibrium with a short relaxation time. As such, nanocrystal suspension having a relaxation time of 30 minutes or less are preferred.

Typically, the deposited nanocrystal suspension is aged for 360 minutes or less. Preferably, the nanocrystal suspension is aged for 120 minutes or less, more preferably 60 minutes or less, even more preferably 45 minutes or less, and most preferably 30 minutes or less.

Typically, the deposited nanocrystal suspension is aged for 1 minute or more, 5 minutes or more. Preferably, the nanocrystal suspension is aged for 10 minutes or more, more preferably 15 minutes or more, and even more preferably 20 minutes or more.

The time for the ageing step may be selected from a range with upper and lower limits selected from the values given above. For example, the deposited nanocrystal suspension may be aged for from 5 to 120 minutes, preferably 5 to 30 minutes.

The ageing step may be carried out as a pause before any further processing steps. Alternatively, the ageing step may be carried out simultaneously with the drying step, for example, by extending the drying time.

During the ageing step, the partial or total recovery of the chiral nematic ordering in the applied nanocrystal suspension can be facilitated throughout the deposited nanocrystal suspension or locally, by an external electromagnetic field.

### Drying (Ch-CNC)

The cholesteric layer formation includes a drying step for drying the deposited nanocrystal suspension to form a cholesteric film. This may be known as the drying step.

Drying may be concurrent with the previously described ageing step.

The drying step may be carried out at room temperature without external heating.

Typically, however, the drying step is carried out at elevated temperature.

The drying step may be carried out at a temperature of 250 °C or less, 150 °C or less, 100 °C or less, preferably 80 °C or less, and even more preferably 70 °C or less.

The drying step may be carried out at a temperature of 10 °C or more, 20 °C or more, 30 °C or more, preferably 40 °C or more, and even more preferably 50 °C or more.

The temperature of the drying step may be selected from a range with the upper and lower limits selected from the values given above. For example, the temperature of the drying step may be from 10 to 70 °C such as around 60 °C.

The temperatures of the drying step may be selected based on the solvent mixture used in the nanocrystal suspension. Preferably, a temperature is used at which the solvent mixture is not boiling or near boiling.

In this way, the cholesteric layer produced may have the desirable coloration properties. It is proposed that, when the solvent mixture is boiling or near boiling the increased movement of the solvent and gas bubble formation may disturb the chiral nematic structures and create inhomogeneities in the final dry film.

The drying step may be carried out such that the dried film is formed in 720 minutes or less, 360 minutes or less, 120 minutes or less, 60 minutes or less, preferably 45 minutes or less, and even more preferably 30 minutes or less.

The drying step may be carried out such that the dried cholesteric layer is formed in 10 minutes or more, preferably 15 minutes or more, and even more preferably 20 minutes or more.

The time for the drying step may be selected from a range with the upper and lower limits selected from the values given above. For example, the drying step may be carried out such that the dried film is formed in 10 to 60 minutes such as around 30 minutes.

The combination of drying time and temperature will depend on the coating gap, coating speed and width, and thickness of the deposited suspension. For thicker deposited suspensions (i.e. larger gaps), longer drying times will be observed at the same temperature than for a thinner deposited suspension (i.e. smaller gaps).

Time constrained drying, for example short drying times with respect to the amount of cellulose nanocrystal suspension deposited, affects the colouration of the resulting film, in particular the reflectance of the film. Without wishing to be bound by theory it is proposed that time-constrained evaporation such as during heating induces less homogeneous and more disordered films. Disorder can result from chiral nematic domains that became kinetically arrested in random orientation and non-optimal compression of the domains upon drying as it has been described in the literature (see for instance Parker *et al*.). It is also proposed that heating results in more significant flow of solvent and compounds within the cellulose nanocrystal suspension due to, for example, temperature or concentration gradient that disturb the cellulose nanocrystal suspension. Overall, such effect means that the reflectance peak decreases and a redshift of the peak can be observed.

In some cases, the dried cholesteric layer has a thickness of at least 1.0 µm, 2.0 µm, at least 3.0 µm, at least 4.0 µm, at least 5.0 µm, at least 6.0 µm, at least 7.0 µm, at least 8.0 µm , or at least 9.0 µm.

In some cases, the dried cholesteric layer has a thickness of 50.0 µm or less, 30.0 or less, 20.0 or less, 17.0 or less, 15.0 or less, 12.0 µm or less, 10.0 µm or less.

The layer thickness may be selected from a range with the upper and lower limits selected from the values given above. For example, the film thickness may be from 1.0 to 50.0 µm, such as from 6.0 µm to 12.0 µm, such as around 9.0 µm.

The drying step may be carried out uniformly across the width of the cholesteric layer. Alternatively, the drying conditions may be locally varied.

The drying is carried out with any suitable drying apparatus. Suitable drying apparatus include an IR or UV radiation lamp, a hot air drier, an oven, a convection oven, a furnace, a vacuum oven and a hot plate. Combinations of drying steps using different apparatus may be used, either successively or simultaneously.

### Substrate Treatment (Ch-CNC)

In some cases, the method further comprises a treating step wherein at least a portion of the base substrate is treated to modify the physical and/or chemical properties of the base substrate prior to the depositing step.

The treatment step may impart beneficial properties to the substrate, such as enabling easier and more uniform deposition and spreading of the nanocrystal suspension over the substrate, improved optical properties of structurally colored layer, an increased yield of the layer or resulting multi-layered film, and therefore a corresponding increased yield of multi-layered particles per area of substrate used.

Typically, the treating step alters the surface energy of the substrate, for example by corona discharge or plasma etching. Preferably the treatment step comprises subjecting the substrate to corona discharge or plasma etching, more preferably corona discharge.

Preferably, a material with a lower surface energy can be treated to increase its surface energy. Lower surface energy materials include polyvinyl 51onicat, cellophane, polystyrene, acetal, ethylene-vinyl acetate, polyethylenes such as polyethylene terephthalate (PET), polypropylene, fluoropolymer, polyimide, nylon, polyester, epoxy resin, acrylic resin, phenolic resin, polycarbonate, polyurethane, polyvinylchloride, polyester.

In the case of the treatment of material with a lower surface energy, it is proposed that increasing the surface energy of the substrate reduces the surface tension when the nanocrystal suspension is deposited. The treatment is such that the deposited nanocrystal suspension preferentially coats the substrate at the area that has been treated. For example, when the substrate is PET treatment by corona discharge, means the treated area of the web is more hydrophilic and aqueous suspensions will preferentially coat this hydrophilic surface.

In this way, the treating step results in a specific and localized surface activation that gives areas with different wetting properties and allows to control the deposition of the suspension to either the treated or non-treated parts of the substrate.

In some cases, the method may comprise a treating step wherein at least a portion of the substrate is treated to decrease the surface energy prior to the depositing step. Suitable methods that can lead to the modification of the chemistry of the surface and to decrease the surface energy of the substrate include chemical and oxidative treatments or alteration of surface roughness through sanding or laser ablation for instance.

Preferably, a material with a higher surface energy can be treated to decrease its surface energy. Higher surface energy materials include metals, such as copper, aluminium, zinc, tin, stainless steel and their alloys and glass.

In some cases, the treatment can be carried out such that the surface energy of the substrate varies locally. The local variations in surface energy may be in the form of a pattern.

Typically, the treating step is carried out on the central portion of the substrate. Preferably, the edges of the web surface may be masked before treatment such that the treatment is applied only to a preferred area, most preferably to the central portion of the web or substrate. The masking is typically removed before deposition of the nanocrystal suspension. In this way, the deposited suspension preferentially coats the central portion of the substrate and is prevented from flowing off the web by the untreated (i.e. previously masked) edge portions.

In some cases, the treatment step is carried out on pristine substrate. Alternatively, the treatment step may be carried out to reinforce pre-existing surface energy properties of the substrate, particularly in the case of a substrate used in a closed loop fashion.

The treating step may be carried out in air, oxygen or argon rich atmosphere, under reduced pressure or ambient pressure. Preferably such treatment is performed in air and at ambient pressure.

### Sonication (Ch-CNC)

The cholesteric layer formation may further comprise the step of sonicating the nanocrystal suspension before the depositing step.

Sonication, such as tip-sonication, of the nanocrystal suspension before deposition may be used to alter, such as red shift, the final colour of the dry nanocrystal film. It is proposed that sonication acts to expand the pitch of the chiral nematic phase resulting in a redshift, although the exact mechanism for this is not clearly identified and may involve a reduction of the size of the nanocrystal, a reduction of the size of the nanocrystal bundle, and possible release of trapped ions.

The sonication energy delivered may depend on the device used, the power and amplitude delivered, and the volume of cellulose nanocrystal suspension as well as the concentration nanocrystals in the suspension. Suitable sonication devices are known in the art, and the power, amplitude and time can be appropriately adjusted.

The length of time over which sonication is performed may be altered, and longer times may be used for the sonication of larger quantities of material or particular CNC particles.

Sonication results in a colour shift of the cholesteric layer prepared from the sonicated nanocrystal suspension. Increasing the sonication energy increases the red shift in the cholesteric layer.

Sonication in the prior art is usually performed on isotropic suspension at around 2 wt% nanocrystals. In the present case, the preferred nanocrystal suspensions contain at least 4 wt% nanocrystals and have some anisotropy.

For the purpose of comparing sonication treatment between samples regardless of the quantity of material being sonicated, the sonication treatment is commonly expressed in Joules per mass (J/g), for example Joules per mass of cellulose nanocrystals in the cellulose nanocrystal suspension (J/g_{CNC}). The sonication treatment can also be expressed in second of treatment per millilitre of cellulose nanocrystal suspension (s/mL). While both units are used, the second unit may be preferred as it can be directly calculated from the input parameters.

The53onicateon step may be performed for 45 s/mL or less, such as 22.5 s/mL or less, preferably 11.2 s/mL or less, or more preferably 6.7 s/mL or less.

The sonication step may be performed for at least 0.1 s/mL, at least 0.5 s/mL, at least 1 s/mL, at least 2.2 s/mL, at least 22.5 s/mL preferably at least 0.2 s/mL or more preferably of at least 1 s/mL.

The sonication step may be performed for a time per millilitre of suspension selected from a range with the upper and lower limits selected from the values given above. For example, the sonication step may be performed for from 0.1 to 45 s/mL, such as around 2.2 s/mL.

The sonication step may deliver to the nanocrystal suspension an energy of 200 kJ/g or less, 100 kJ/g or less, preferably 50 kJ/g or less, or more preferably 30 kJ/g or less.

The sonication step may deliver to the nanocrystal suspension an energy of at least 3 J/g, at least 5 kJ/g, at least 10 kJ/g, at least 100 kJ/g preferably at least 3 kJ/g or more preferably of at least 5 kJ/g.

The sonication step may deliver to the nanocrystal suspension an energy selected from a range with the upper and lower limits selected from the values given above. For example, the sonication step may deliver to the nanocrystal suspension an energy may be from 1 to 100 kJ/g, such as around 10 kJ/g.

In one embodiment, the energy delivered by the sonicating step is from 1 to 100 kJ g⁻¹, preferably from 3 to 50 kJ g⁻¹, more preferably from 6 to 30 kJ g⁻¹, even more preferably from 7 to 22 kJ g⁻¹.

The sonication step may be performed for 2,000 seconds or less, 1,000 seconds or less, 500 seconds or less, 400 seconds or less, preferably 300 seconds or less and more preferably 200 seconds or less.

The sonication step may be performed for 20 seconds or more, 30 seconds or more, preferably 40 seconds or more and more preferably 50 seconds or more.

The sonication step may be performed for a duration from a range with the upper and lower limits selected from the values given above. For example, the sonication step may be performed for from 20 to 2,000 seconds, such as around 200 seconds.

### Method of Preparing Nematic Layer

The nematic layer formation step comprising the steps of:
a) depositing a nanocrystal suspension comprising cellulose nanocrystals onto a substrate;
b) spreading the nanocrystal suspension across the substrate using a spreader to align the cellulose nanocrystals and form a non-chiral nematic structure; and
c) drying the deposited nanocrystal suspension.

In general, the depositing step, spreading step and drying step correspond to steps described in relation to the cholesteric layer formation step described above. The differences are described in more detail below.

The nematic layer typically has a thickness such that the layer acts as a half-wave retardation plate for circularly polarised light reflected by the cholesteric layer. The nematic layer may act as a half-wave retardation plate for at least some of the circularly polarised light reflected by the cholesteric layer. This is described in more detail in the nematic layer, above.

The final properties of the layer can be tuned by, for example, adjusting the properties of the nanocrystal suspension, adjusting the deposition rate, adjusting the spreading (coating) conditions, and by adjusting the drying conditions. Accordingly, the method provides a nematic layer that acts as a half-wave retardation plate for the light reflected from the cholesteric layer(s).

### Coating Process (N-CNC)

The nematic layer formation includes the steps of depositing and spreading a nanocrystal suspension across a substrate. These may be known as the depositing step and spreading step. Preferably, the nanocrystal suspension comprises neutralised cellulose nanocrystals.

The description of the coating process for cholesteric layer generally applies to the nematic layer also.

Typically the N-CNC layer is applied to one or more Ch-CNC layer(s) as the substrate, therefore resulting in a multilayer CNC film.

The shear rate during spreading of the nematic layer is typically higher than the cholesteric layer. A higher shear rate is thought to align the cellulose nanoparticles particles of the nematic layer by the mechanical shear force.

The shear rate is calculated according to the following equation: $Shear rate = coating speed / coating gap$

Typically, the shear rate is 2 s⁻¹ or more, preferably 5 s⁻¹ or more, more preferably 15 s⁻¹ or more, even more preferably 35 s⁻¹ or yet more preferably than 60 s⁻¹ or more. The shear rate applied may be 600 s⁻¹ or less, preferably 200 s⁻¹ or less, more preferably 150 s⁻¹ or less, yet more preferably 100 s⁻¹ or less.

The shear rate during the spreading step may be selected from a range with the upper and lower limits selected from the values given above. For example, the shear rate during the spreading step may be from 35.0 s⁻¹ to 150.0 s⁻¹, preferably 70.0 s⁻¹ to 100 s⁻¹, such as about 75 s⁻¹.

The coating gap is adjusted to tune the dry thickness of the nematic layer. As explained in the nematic layer section above, the thickness of the nematic layer may be adjusted such that it functions as a half-wave retardation plate for light reflected from the cholesteric layer.

Typically, the coating gap is from 60 to 420 µm, preferably from 200 to 360 µm, more preferably from 230 to 330 µm.

For example, if the cholesteric film reflects light at a wavelength of from 400 to 500 nm, such as about 440 nm (blue light), then the nematic layer may be spread with a coating gap of 200 to 260 µm, preferably from 220 to 240 µm, such as about 230 µm.

For example, if the cholesteric film reflects light at a wavelength of from 500 to 580 nm, such as about 550 nm (green light), then the nematic layer may be spread with a coating gap of 230 to 300 µm, preferably from 250 to 280 µm, such as about 265 µm.

For example, if the cholesteric film reflects light at a wavelength of from 600 to 750 nm, such as about 630 nm (red light) then the nematic layer may be spread with a coating gap of 300 to 360 µm, preferably from 320 to 340 µm, such as about 330 µm.

In general, if the cholesteric film(s) reflects light in the UV, IR or visible region (e.g., 100 to 1000 nm), especially the visible region (e.g., 400 to 800 nm) then a nematic layer prepared with a coating gap optimised for green light may be used. In particular, for embodiments where multiple cholesteric film which reflect light at different wavelengths in the visible region are using the same nematic layer as a half-wave retardation plate, then the nematic layer prepared with a coating gap optimised for green light may be used.

The coating speed is adjusted to maintain the desired shear rate (described above), depending on the coating gap used (described above). Typically, a coating speed of from 1 to 60 mm/s was used to maintain the shear rate, preferably from 5 to 30 mm/s, more preferably from 17 to 25 mm/s.

The level of alignment within the nematic layer resulting from the shear can be characterized suing the order parameter, S, (also known as Herman's order parameter). This is calculated and measured as described above in the nematic layer section. Typically, the order parameter (S) of the nematic layer is 0.3 or more, preferably 0.5 or more, even more preferably 0.7 or more, yet more preferably 0.9 or more.

### Substrate (N-CNC)

The substrate is a suitable surface on which the nanocrystal suspension may be deposited, spread and dried.

The nematic layer is typically applied to a cholesteric layer. Thus, the nematic layer formation step typically comprises deposited a cellulose suspension on a cholesteric layer as the substrate. That is, a previously formed cholesteric layer is the substrate.

### Nanocrystal Suspension (N-CNC)

The nematic layer formation includes the step of depositing a nanocrystal suspension, such as a cellulose nanocrystal suspension, onto a substrate. In this context, the nanocrystal suspension may also be known as a nanocrystal gel.

The description of the suspension for the cholesteric layer generally applies to the nematic layer also.

Preferably, the nanocrystal suspension comprises pH-neutralized cellulose nanocrystals, partially pH-neutralized cellulose nanocrystals. More preferably, the nanocrystal suspension comprises -neutralized cellulose nanocrystals, such as the sodium form of cellulose nanocrystals.

For the nematic layer it is desirable that the cellulose suspension has a high degree of anisotropy. An increase in the concentration of the cellulose nanocrystals in the suspension may be associated with an increase in anisotropy of the suspension. Preferably, the concentration of the cellulose nanocrystals in the suspension for the nematic layer is chosen to provide a mixture which has a higher level of anisotropy.

Typically, the nanocrystal suspension comprises cellulose nanocrystals (such as neutralised cellulose nanocrystals) at a concentration of at most 60 wt%, preferably at most 50 wt%, more preferably at most 40 wt%, even more preferably at most 30 wt%, and most preferably at most 20 wt%.

Typically, the nanocrystal suspension comprises cellulose nanocrystals (such as neutralised cellulose nanocrystals) at a concentration of at least 4 wt%, preferably at least 5 wt%, more preferably at least 6 wt%, even more preferably at least 7 wt%, and most preferably at least 8 wt%.

The nanocrystal suspension may comprise cellulose nanocrystals in a range with upper and lower limits selected from the values given above. Typically, the nanocrystal is present in the mixture in an amount selected from 5 to 20 wt %, preferably from 6 to 12 wt%, more preferably from 8 to 10 wt%. Preferably, for the nematic layer formation step the concentration of the nanocrystal suspension is about 8 wt.%.

The wt % values that are chosen will depend upon the level of anisotropy that results from the use of a given cellulose nanocrystal and can be appropriately chosen.

Additionally or alternatively, the amount of nanocrystal used may be expressed in terms of the level of anisotropy within the nanocrystal suspension.

The nanocrystal may be present in a mixture where the level of anisotropy is at least 70, 80, 90 %. Additionally, or alternatively, the nanocrystal may be present in a mixture where the level of anisotropy is at most 80, 90, 95 or 100%. Preferably, the nanocrystal may be present where the mixture is substantially all anisotropic (substantially 100% anisotropy).

The nanocrystal may be present in the mixture where the level of anisotropy selected from a range with the upper and lower limits selected from the values given above.

Typically, the cellulose suspension is prepared by mixing CNC powder with water, such as by using a planetary centrifugal mixer.

### Drying (N-CNC)

The nematic layer formation includes a drying step for drying the deposited nanocrystal suspension to form a nematic film. This may be known as the drying step.

The description of the drying step for the cholesteric layer generally applies to the nematic layer also.

Preferably, the drying step for the nematic layer is carried out at room temperature without external heating.

The drying step for the nematic layer is typically faster than the one of the cholesteric layer. The CNC suspension used for the nematic layer is generally a higher concentration and a higher viscosity, so the drying time may be reduced compared to the cholesteric layer.

The nematic layer is preferably prepared without an ageing step. That is, the nematic layer is deposited and then immediately dried without ageing. It is thought that by drying the nematic layer more quickly the non-chiral nematic structure imparted by the high shear forces during coating are retained. The nematic layer thus does not form a cholesteric structure.

### Method of Preparing Multi-layered Particles

The method may further comprise a step of dividing the multi-layered film to produce cholesteric particles. This may be known as the dividing step.

In the dividing step, the dimensions of the multi-layered film is reduced to provide particles that can be used as pigment or glitter. The present invention also provides multi-layer particles obtained or obtainable by the method of the invention.

The multi-layered particles maintain the colour from the film and have an appearance that is similar to glitters such as microplastic glitters and effect pigments such as mica- and titania-based effect pigments. Most glitters available on the market are obtained via the roll-to-roll deposition of a dye-containing synthetic polymer matrix over a metal-based reflective substrate and as such are not biodegradable. In this way, the present invention provides a biodegradable glitter and photonic effect pigment.

Dividing can be performed using any suitable fracturing or chopping apparatus, such as a device using rotating blades, as well as any suitable grinding apparatus, such as a device using grinding elements and high intensity shocks (for instance a mill such as a ball mill, a rusher, a pulveriser, or a cryogrinder). A die- or laser-cutter may also be used to reduce the dimensions of the film and yield particles with a defined shape.

Preferably, a fracturing apparatus is used. In such cases, the dividing step may be referred to as a fracturing step.

Alternatively, a grinding apparatus is used. In such cases, the dividing step may be referred to as a grinding step.

In some case, a fracturing and a grinding apparatus are successively used. In such cases, fracturing provides larger particles which can be broken down into smaller particles through separate grinding for production of particles with specific sizes in specific yield.

The dividing step preferably occurs after a peeling step. In this way, the substrate is not damaged during the dividing and is not incorporated into the coloured particles, and so does not contribute to the thickness of the particles.

Without wishing to being bound by theory, it is understood that the multi-layered film breaks at cholesteric domain boundaries as the nanocrystals are expected to be less ordered at the boundaries between domains in comparison to within cholesteric domains. However, fractures and cracks may propagate through cholesteric domains upon high intensity dividing.

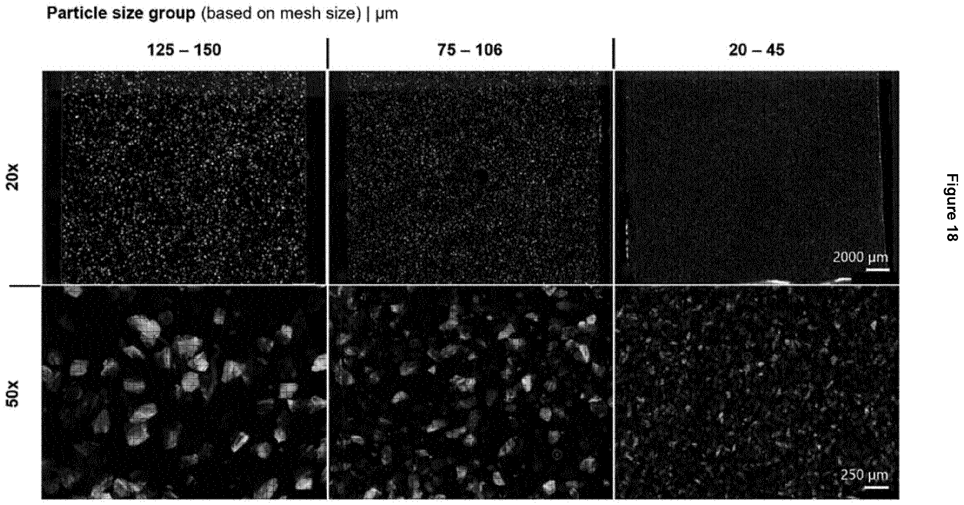

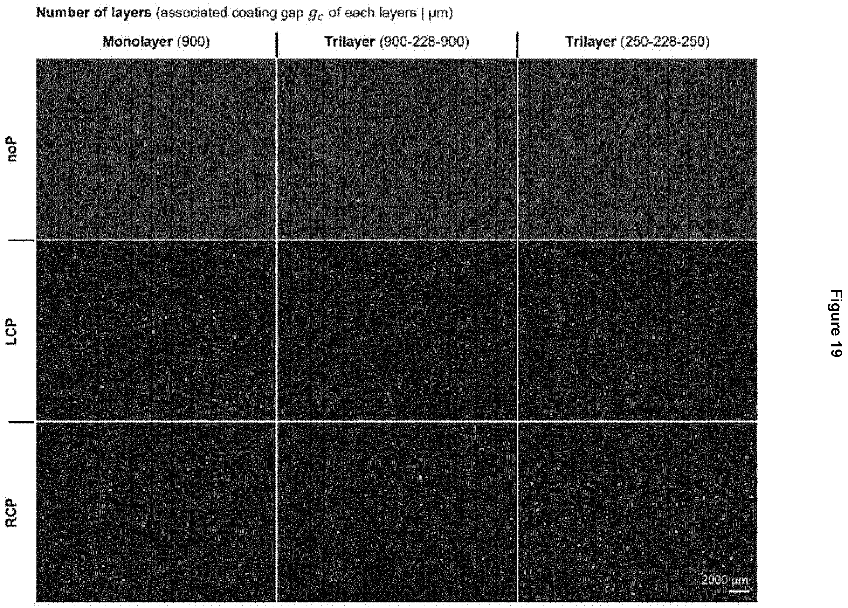

After dividing, the optical properties of the cholesteric film are retained (**Figure 18** and **19**).

The multi-layered particles may be sorted by size to obtain particles of the desired diameter or surface area. The size sorting can be carried out during fracturing and/or grinding for example when dividing is carried out with an ultracentrifugal mill. The size sorting can be carried out after fracturing and/or grinding, for example, by sieving. Particles with larger sizes (e.g. larger median average diameter or average surface areas) have improved optical properties compared to particles with smaller sizes. That is, they have a narrower and/or taller reflection peak.

The multi-layered particles are suitable for use as effect pigments, such as interference, metallic and pearlescent pigments and glitters due to their ability to reflect light and provide structural colour, including visible, infrared and ultraviolet colour.

The multi-layered particles may be used as such pigments and glitters, or dispersed in a solvent or other formulation depending on their intended use. For example, the particles may be used in cosmetics, foodstuffs, packaging, or in paints. Preferably the solvent for the selected application is water, glycerol, ethanol or a mixture thereof. Mixtures of these components with oils may be used, and such mixtures may also contain a surfactant.

### Uses and Applications

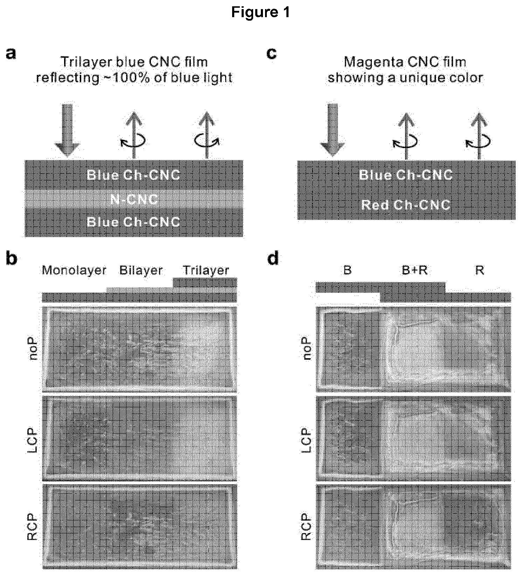

The multi-layer films or multi-layer particles of the present invention may be used in a variety of different ways to replace known colourants such as dyes, pigments and glitters (**Figures 1****,** **18** and **19**).

Accordingly, there is provided a use of the multi-layered film or the multi-layered particle of the invention, or derivatives thereof, as a coloured sheet or a colourant, such as a pigment, effect pigment or glitter.

As explained in the particles section above, the particles are provided as a population of particles comprises particles having different numbers of layers. Typically, if the multi-layered film has N layers, then the population of particles comprises particles having a range of layers from 1 to N (e.g. N, N-1, N-2, ...1 layers).

The invention may relate to the use of particles have two or more layers in a population of particles. The population of particles may include different particles and single layer particles. Preferably, the amount of particles having two or more layers relative to the total population of particles is 10 wt.% or more, preferably 20 wt.% or more, more preferably 30 wt.% or more, yet more preferably 40 wt.% or more, even more preferably 50 wt.% or more. In some embodiments, the amount of N layered particles relative to the total population of particles is 10 wt.% or more, preferably 20 wt.% or more, more preferably 30 wt.% or more, yet more preferably 40 wt.% or more, even more preferably 50 wt.% or more.

The film prior to dividing may be cut to specific size in order to obtain elements with given shape, such as stripes which can be applied as such or laminated and use for instance as moisture sensor for food safety application, as textile fibres and for security labelling. The film can be used as coloured sheet. The film cut to specific shapes can be used in a variety of ways to cover part or the whole of an article. The article can be a fashion item, such as a watch, a bag or a jumper. Accordingly, the present invention provides a security label such as for anticounterfeiting application or moisture sensor comprising a cholesteric film or particle of the invention.

The particles are particularly suitable for use as pigments owing to their ability to provide structural colour, including visible, infrared and ultraviolet colour. The following examples are not exhaustive and only highlight some possible ways to use the particles.

The particles may be used in cosmetics, such as cosmetic powder for application to skin such as but are not limited to blusher, body powder, bronzing powder, eye shadow, face powder, lip powder, powder makeup and other cosmetics where the particles are formulated such as in a fluid, an oil or wax based system for instance, without being limited to: bronzing product, eye pencil, eyeliner, face makeup, facial foundation, hair gel, hair paste, hair spray, lip gloss, lipstick, mascara, nail varnish, body wash, shampoo, shower gel, skin cream, sun cream and tanning products. Accordingly, the present invention provides a cosmetic comprising a cholesteric particle of the invention.

The particles may be used in inks, in paints, in coatings, in packaging, in acoustic devices, in heat and wavelength management applications such as far radiative cooling, in electrophoretic display and devices, in seasonal products, for decorative use, for garments, fashion items, or cosmetics. As for application in cosmetic products, these applications may require the particles to be added to a host formulation.

The particles provide additional functionality and alter the non-optical properties of the host formulation, for instance the rheological, texture or mechanical properties, heat, acoustic and energy transfer ability, electrochemical, electromagnetic or electrophoretic properties of the host formulation. For example, the particles may provide a colour effect to the host formulation in cosmetic application and acts as a filler, a thickening agent or an exfoliating microparticles in consumer and healthcare products, including cleaning compositions and cosmetic compositions.

As a food and beverage additive, the particles may be a colouring agent and the host formulation may comprise further ingestible ingredients for use in the preparation of the food or beverage. Additionally, the particle may be used in drinks or in confectionary such as chocolate.

For decorative, packaging and security applications, the particles and the host formulation can be applied over paper, polymers, cardboard, molded fibres, stamps and labels, wood veneer, furniture, and lignin-containing materials. In addition, the particles and the host formulation can be applied over wood, metals ceramic, glass, garments, fabric. The substrate bearing the particles and host formulation can be applied to cover part or the whole of an article as, for example, a stamp, label, or foil. For garments and fashion items, the particles can be used as sequins, pearls, crystals. The particles can also be added to a fibre, the host formulation of which is spun into a thread. Additionally, the particles may be used as confetti. The particles may be sprayed, sewn, glued to a substrate for the desired application.

The host formulation is preferably transparent but may contain other colouring agents such as dyes or pigments to produce more complex colour effects with the addition of the particles of this invention.

The host formulation may be viscous enough to hold the particles in place or may have a viscosity which is low enough for the particles to move freely. In the case of a low viscosity liquid, the glittery appearance results from the random change of orientation of the particles in the medium and does not necessitate to observe the samples at different viewing angle to obtain a "sparkle" effect. In the case of a viscous host formulation, the particles may give a glittery appearance to the host suspension when observed as different angle. Moreover, the apparent iridescence depends on the illumination conditions.

The size and size dispersity of the particles as well as the quantity of particles used and their orientation in the host medium determine the overall visual appearance resulting from the incorporation of the particles in the host formulation.

However, particles below a certain size embedded in a viscous host formulation give an overall less angular dependent optical response to the transparent coating they are in than particles above a certain size. For particles under a certain size, the macroscopic visual response of the host formulation containing the particles is averaging out over multiple randomly oriented particles and result in a more homogeneous and continuous visual appearance.

The particles may be dispersed in a solvent or other formulation depending on their intended use. The solvent may be 2-propanol, 1,2-dichloroethane, 1,4-dioxane, 18-crown-6, 2-propanol, 2-ethoxyethanol, acetic acid, acetone, acetonitrile, ammonia, benzene, n-butanol, n-butyl acetate, chloroform, cyclohexane, dichloromethane, diethyl ether, diglyme, dimethyl formamide, Dimethyl sulfoxide, DME, ethane, ethanol, ethyl acetate, ethylene, ethylene glycol, formic acid, glycerine, heptane, hexane, hexamethylbenzene, HMDSO, HMPA, Hydrogen, Imidazole, isobutanol, isopropyl acohol, methane, methanol, n-hexane, nitromethane n-pentane, propane, propylene, propylene carvonate, pyridine, pyrrole, pyrrolidine, silicone grease, tert -butyl alcohol, tetrahydrofuran, toluene, triethylamine, water, white spirit and xylene or a mixture thereof.

Preferably the solvent is a water-based solution or formulation.

The formulation can also be an emulsion, such as a water-in-oil emulsion, an oil-in-water emulsion, a double emulsion, such as a water-in-oil-in-water emulsion or an oil-in-water-in-oil emulsion, a gel, a latex, a resin or a visco-elastic polymer matrix or another type of advanced formulation involving several ingredients such as emollients, oils, polymers, surfactants and waxes, as suited for the intended application and use.

Suitable emollients include ammonium lactate, petrolatum, salicylic acid, urea.

Suitable polymers include acrylates/steareth-20methacrylatecopolymer, aromatic polymer (such as polycarbonate, polyester, polystyrene), Carbopol^{®}, dimethylhydantoin-formaldehyde, halogenated polymer, hydrogenatedpolydecene, keratin, para-aramid, poloxamer, polyacrylamide, polyacrylonitrile, polyaminoacid, polyamide (such as Nylon 6, Nylon 6,6, Nylon 12), polyether, polyolefin (such as but are not limited to polyethylene, polyisoprene, polypropylene, polybutadiene, polyethylene glycol), polypeptide, polymethacrylate, polymethylmethacrylate cross-polymer, polymethylsilsesquioxanes, polyquaternium, silicones, silk fibroin, silk sericin, ulvan, vinyl acetate, vinyl acetate/crotonic acid copolymer, methyl vinyl ether and maleic semester copolymer, vinylpyrrolidone. The polymer can be a cellulose- or a lignin-derivative, such as cellulose acetate, cellulose nitrate, cellophane, nitrocellulose and celluloid. The polymer can be a starch-derivative. The polymer can be a chitin-, a chitosan- or a sericin derivative. The polymer can be an alignate-, a carrageenan -, a collagen-, gelatin-, hyaluronic acid- or pectin-derivative. Preferentially the polymer is synthetised from natural feedstock and/or biobased and/or renewable monomers, and the resulting polymer is preferably biodegradable such as aliphatic polyesters, for instance poly(lactic acid) poly (ε-caprolactone), and poly(3-hydroxybutyrate-co-3 hydroxy valerate). Suitable polymers also include polymer listed as possible additive of the nanocrystal suspension described above.

Suitable oils include algal oil, annatto oil, argan oil, almond oil, apricot kernel oil, avocado oil, babassu oil, Brazil nut butter, butter, cashew butter, castor oil, camellia oil, cheery kernel oil, cocoa butter, coconut oil, corn oil, cottonseed oil, fish oil, grape seed oil, gardenia oil, ghee, hazelnut oil, jatropha oil, jojoba oil, kokum oil, linseed oil, macadamia oil, maize oil, mango seed oil, mango butter, mineral oil, mink oil, olive oil, palm oil, palm kernel oil, peach kernel oil, peanut butter, peanut oil, plum kernel oil, pomegranate oil, rapeseed seed oil, rice bran oil, rosehip oil, sal oil, sesame oil, shea butter, soybean oil, squalene, sunflower oil, teas seed oil, walnut oil. Oil derivatives obtained from the aforementioned oils such as esterified oils, fatty acids, fatty alcohol, hydrogenated oils and triglycerides can be used as suitable ingredient for the said formulation. Essential oils are also suitable oils.

Suitable resin includes tosylamide formaldehyde resin and toluene-sulphonamide-formaldehyde resin.

Suitable wax include beeswax, candelilla wax, carnauba wax, Japan wax, lanolin, palm wax, paraffin.

Suitable gel includes any chemical and/or physical gel obtained from the use of thickeners such as cellulose-derivative thickener as well as acacia gum, agar, aloe gel, gelatin, guar gum, gum arabic, gum tragacanth, pectin, sodium alginate, starches, and xanthan gum. In addition, the gel may be a mixture of cellulose fibres.

### Definitions

The following common definitions are used herein, unless otherwise specified and as determined by the relevant context.

Blue light is defined as having a wavelength of from 400 to 500 nm.

Green light is defined as having a wavelength of from 500 to 580 nm

Red light is defined as light having a wavelength of from 600 to 750 nm.

Visible light is defined as light having a wavelength of from 400 to 800 nm.

### Other Preferences

Each and every compatible combination of the embodiments described above is explicitly disclosed herein, as if each and every combination was individually and explicitly recited.

Various further aspects and embodiments of the present invention will be apparent to those skilled in the art in view of the present disclosure.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

### Examples

Certain aspects and embodiments of the invention will now be illustrated by way of example and with reference to the figures described above.

### Materials

Aqueous CNC suspension purchased from the University of Maine Process Development Center (batch number 2015-FPL-077, (CNC) = 11.8 wt.%, neutralized form, 1.2 wt.% sulphur content).

CNC powder was purchased from CelluForce (CulluForce NCC NCV100, CAS: 9005-22-5, particle size (powder): as provided by the manufacturer 1-50 µm). The CNC powder is pH-neutralized (Na-CNC).

PET was used as a substrate for film deposition and was obtained from HIFI Film PMX727.

### Instrumentation

Polarised optical microscopy was performed using a Zeiss Axio.Scope optical microscope (halogen lamp (HAL100 Zeiss, nominal range: 350-1100nm) equipped with the CNC films imaged using a 20x objective (Zeiss EC Epiplan APOCHROMAT, NA = 0.3) and the CNC photonic particles with a 10x objective (Zeiss EC Epiplan APOCHROMAT, NA = 0.6).

The light reflected by the CNC films attached to the substrate passes through a quarter wave plate and a switchable polarising filter, which, if used, can either only let left- or right-handed circularly polarized light (respectively LCP and RCP) pass through. The light was directed using a beamsplitter to a CCD camera (Thorlabs - DCC3240C) and sent to a spectrometer (Avantes AvaSpec HS2048) through an optical fibre.

A 600 µm-cored optical fibre (Thorlabs FC-UV600-2-SR) was used for measuring the CNC coatings with the 20x objective whereas a 200 µm-cored optical fibre (Thorlabs FC-UV200-2-SR) was used for the CNC photonic microparticles with the 10x objective. As a result, spectra were acquired over a ~100 and -66 µm-wide spot respectively.

The spectra were either normalised to the reflection of a silver mirror (Thorlabs PF10-03-P01) in one polarisation channel (LCP) - such that a perfectly aligned cholesteric sample would reflect 100% intensity - or without polarizer (noP) - such that a perfectly aligned cholesteric sample would reflect 50% intensity.

Photographs of the CNC films were acquired from CNC films attached to their PET substrate and were taken using a 20 MP digital camera (Huawei P10) at a fixed working distance and lighting on top of a black background. A mask was placed around the laboratory scale PET films to lay it flat without covering the edges of the CNC film. Other images were taken using a 40 MP digital camera (Huawei P30 Pro).

Digital microscopy photographs were taken with a Keyence microscope VHX-7000 series using 20 and 50x magnification and two illumination set-ups (direct or ring), in presence (LCP or RCP) or absence of polariser (noP).

The morphology and thickness of the CNC films were measured by scanning electron microscopy (SEM): a CNC film was broken into two pieces under tensile force to get clean cross sections. The cross sections were coated 10 nm platinum by a sputter coater (Quorum Q150T ES) and observed by a SEM (Tescan MIRA3 FEG-SEM). The SEM operated at 3 kV accelerating voltage, and a second electron detector was chosen with a working distance of around 5 mm.

### Cellulose Nanocrystal Suspension

The aqueous CNC suspension (see Materials) was diluted with ultrapure water to 6 wt %, to prepare a batch of 25 mL, in an ice bath in Corning Falcon^{®} tubes with conical bottom (50 mL) and tip sonicated using an ultrasonic disintegrator (Fisherbrand 505 Sonic Dismembrator, 500 W, amplitude = 40%, tip diameter = 12.7 mm).

Suspensions for blade-cast Ch-CNC films were prepared in batches of 45 mL. The CNC suspension was sonicated as appropriate to prepare suspensions suitable for forming coloured films on casting. The sonication time and intensity may depend on the particular cellulose particles, size of the batch (etc.), but a longer sonication time is typically used to increase the red-shift of resulting film. The sonication time can be routinely adjusted to provide the desired colour of film. For example, the suspension may be sonicated for 56, 109, and 161 s to produce respectively blue, green and red films upon casting. Alternatively, the suspension may be sonicated for 101, 196 and 290 s to produce respectively blue, green and red films upon casting. In such cases, the energy delivered per volume of CNC suspension by the tip sonicator is typically about 2.24, 4.36 and 6.44 s·mL⁻¹ (or 7.5, 14.5 and 21.5 kJ·g⁻¹) for blue, green and red films respectively.

After equilibrating the suspension for 1 to 3 days at ambient temperature, the denser anisotropic phase was separated and collected for further use.

### Cellulose Nanocrystal Gel

The CNC powder (see Materials) was mixed with ultrapure water using a planetary centrifugal mixer (THINKY AR-250, speed: 2000 rpm, time: 40 minutes) to give a gel comprising 8 wt.% CNC.

### Substrate Preparation and Treatment

Polyethylene terephthalate (PET) was used as a substrate for initial Cholesteric-CNC (Ch-CNC) film deposition, with the surface selectively activated to control wetting.

PET sheets (thickness = 125 µm) were secured to the coating stage for laboratory scale experiments. A plasma etcher was used to activate the surface (EMITECH K1050X plasma etcher, 50 W, 5 min).

The coated area of the PET sheets is for the square samples 8 x 8 cm. The coated area of the PET sheets for the films shown in **Figure 1** is 8 x 18 cm, of which an area of 8 x 6 cm has been coated respectively as a mono, bi, or tri-layer. For pigment preparation, larger films were coated over an area with dimensions of 9 x 27 cm.

For multi-layered CNC films, a CNC film (either Ch-CNC or N-CNC) can be used as the substrate for subsequent Ch-CNC or N-CNC film deposition. The CNC film substrate may be multi-layered itself. The CNC film substrate is typically fully dried before subsequent CNC layers are applied. The CNC film substrate does not need surface activation before subsequent layers are applied.

### Deposition of Cholesteric-CNC Coatings

Laboratory-scale Cholesteric-CNC (Ch-CNC) coatings were prepared using a bespoke film coater with a maximum coating length of approximately 70 cm. This comprised of a motor (Reliance Cool Motion Stage) which could move a flat stage along a track with a set speed, and a coating blade (BEVS 1806A/100) for controlling the coating gap. The blade was above the flat stage and was fixed during the coating process.

To prepare an initial Ch-CNC coating the PET substrate was attached to the flat stage. The blade was set to the desired height above the substrate and coating applicator positioned near the front of the rectangular PET sheet. CNC suspension (3.5 mL) was deposited in front of the blade and the stage moved (speed from 0.65 to 2.4 mm·s⁻¹ and coating gap from 300 to 1100 µm such that an area of 6 x 10 cm was uniformly coated. A fixed coating gap (*g_{c}*) of 900 µm and a fixed speed (*v_{c}*) of 2 mm/s was found to be optimal for the Ch-CNC layers. The shear rate *γ̇ = v_{c}lg_{c}* was 2.2 s⁻¹.

The deposited CNC suspensions were allowed to dry at ambient conditions without motion until completion of the film formation (for a few hours and typically less than a day which duration depends on the amount of material deposited, length and thickness of covered areas).

Initial Ch-CNC layers were prepared using a PET substrate. Multi-layered films were prepared by using a CNC film as a substrate for subsequent layers.

### Deposition of Nematic-CNC Coatings

Nematic-CNC (N-CNC) coatings were produced from the CNC gel using the methods described below. Where not specified otherwise, the method is similar to that used for the Ch-CNC coatings.

The prepared CNC gel was coated onto substrate, where the substrate was one or more Ch-CNC layer(s) prepared using the method described above. By coating the N-CNC layer onto a Ch-CNC layer a multi-layered film was produced.

The shear rate (*γ̇*) during coating was fixed at a value of 75 s⁻¹. This shear rate is much higher than for the Ch-CNC layer as the CNC particles of the N-CNC layer must be aligned by the mechanical shear force. Coating gap (*g_{c}*) of from 68 to 368 µm µm were used. A coating speed (*v_{c}*) of 5.1 to 26.5 mm/s was used to maintain the shear rate (*γ̇ = v_{c}*/*g_{c}*) at 75 s⁻¹.

The deposited CNC suspensions were allowed to dry at ambient conditions without motion until completion of the film formation (for a few hours and typically less than a day which duration depends on the amount of material deposited, length and thickness of covered areas). The drying of the N-CNC gel was usually faster than the one of the Ch-CNC.

The N-CNC layer was prepared without the ageing step used for the Ch-CNC layer. As a result, the N-CNC layer retained the non-chiral nematic structure imparted by the high shear forces during coating, rather than ageing to form the cholesteric structures of the Ch-CNC layer.

The birefringence (Δn) of shear-aligned N-CNC layers can be detected by transmission spectroscopy under crossed polarisers (XP. Transmission spectrum is defined by equation (2): ${I}_{θ} = {I}_{0} {sin}^{2} 2 θ {sin}^{2} \left(\frac{π Δ nd}{λ}\right)$ (2) where *I*₀ is the intensity of incident light, *θ* is the angle of the N-CNC layers between the XP, *I_{θ}* is the intensity of transmitted light at the angle of *θ d* is the thickness of the N-CNC layers and *λ* is wavelength.

An order parameter, *S*, (Herman's order parameter) can be calculated by the following equation (3). The equation and method of measurement are described in Chowdhury *et al..* $\frac{2 S + 1}{1 - S} = \frac{{I}_{45}}{{I}_{90}}$ (3) where *S* = 0 is defined as an entirely random/isotropic configuration and *S* = 1 is for a perfect anisotropic arrangement. A higher *S* value is related to a higher Δ*n* for the N-CNC layer.

Herman's order parameter, S, can be determined by placing a sample of the N-CNC layer between a cross polarizer and measuring the transmitted light intensity (at a wavelength of 450 to 750 nm) with the cross polarizer at 45° and 90° (I₄₅ and I₉₀ respectively). The values are then input into equation (3) to determine the order parameter S.

### Bi-layer Secondary coloured Ch-CNC Films

Bi-layer CNC films were prepared by stacking two Ch-CNC films together. A first Ch-CNC film was prepared by deposition on a PET substrate using the methods described above. A second Ch-CNC film was then deposited on the first Ch-CNC film substrate and dried under ambient conditions using the methods described above, to provide a bi-layer Ch-CNC film.

The first and second Ch-CNC films were provided with different colour reflections by selection of appropriate conditions during preparation of the nanocrystal suspension (e.g. tip sonification) as described above.

A magenta bi-layer film was prepared using a first red Ch-CNC film layer and a second blue Ch-CNC film layer. A coating gap of 900 µm for each Ch-CNC layer was used. A schematic of the magenta bi-layer film is shown in **Figure 1c**.

A cyan bi-layer film was also prepared using a first blue Ch-CNC film layer and a second green Ch-CNC film layer.

A yellow bi-layer film was prepared using a first red Ch-CNC film layer and a second green Ch-CNC film layer.

### Macroscopic Optical Characterisation of Bi-layer Ch-CNC Film

Macroscopic images of the magenta bi-layer Ch-CNC film were taken with no polarizer (noP), a LCP filter, and a RCP filter. Images were also taken from red and blue mono-layer Ch-CNC films. These images are shown in **Figure 1d**.

The bilayer films appear a magenta colour. The monolayer blue and monolayer red films appear blue and red respectively.

The bilayer magenta, monolayer blue and monolayer red films are shown to reflect primarily LCP light. The intensity of the reflection film through the LCP filter is comparable to the noP reflection, and is higher than the RCP filter reflection, indicating that the intensity of LCP reflected light is higher. This is due to the left handed chirality of the cholesteric structure in the films removing the RCP light.

The bi-layer films allow for secondary coloured Ch-CNC films to be prepared for the first time. Secondary colours cannot be obtained using single wavelength light, as is typically provided by a mono-layer Ch-CNC film. For example, magenta can only be achieved by mixing blue and red light.

### Microscopic Optical Characterisation of Bi-layer Ch-CNC Film

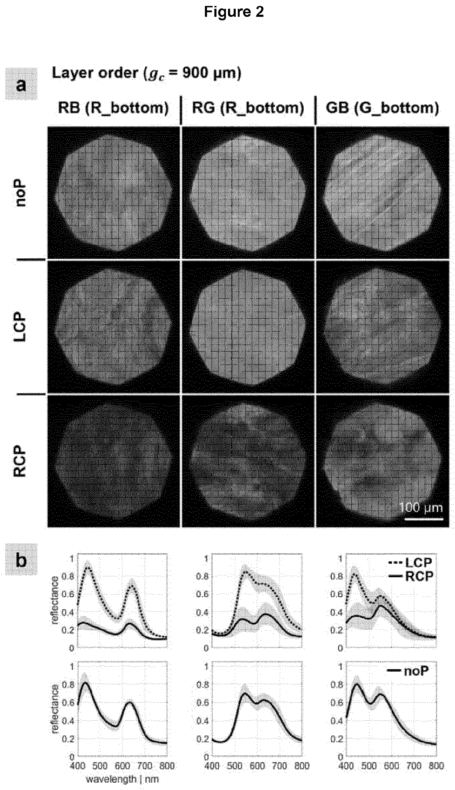

Microscopic images of the magenta, yellow and cyan bi-layer Ch-CNC films were taken using a polarised optical microscope (see **Figure 2a**). Images were taken with no polarizer (noP), a LCP filter, and a RCP filter.

The magenta, yellow and cyan films are shown to reflect primarily LCP light. The intensity of the reflection film through the LCP filter is comparable to the noP reflection, and is higher than the RCP filter reflection, indicating that the intensity of LCP reflected light is higher.

The intensity of the reflected light was analysed for each film using a spectrometer across a wavelength range of from 400 to 800 nm. The intensity at different wavelengths is shown in **Figure 2b**. The top row of spectra show intensity for the LCP (dashed line) and RCP (solid line) filtered images separately, while the bottom row of spectra show intensity for noP images. The spectra also show that the intensity of the LCP light is higher.

For the magenta CNC film, comprising both a red and a blue Ch-CNC layer, the reflectance of red light was about 630 nm and the reflectance of blue light was 440 nm.

For the yellow CNC film, comprising both a red and a green Ch-CNC layer, the reflectance of red light was 630 nm and the reflectance of green light was 550 nm.

The cyan CNC film, comprising both a green and a blue Ch-CNC layer, the reflectance of green light was 540 nm and the reflectance of blue light was about 450 nm.

### Colour Tuned Bi-layer CNC Films

Further magenta bi-layer Ch-CNC films were prepared where the thickness of the blue Ch-CNC layer was adjusted.

The first red Ch-CNC layer was prepared with a coating gap of 900 µm. The second blue Ch-CNC layer was deposited on the dried red layer with coating gaps of 300 µm, 600 µm and 900 µm to prepared three different magenta films.

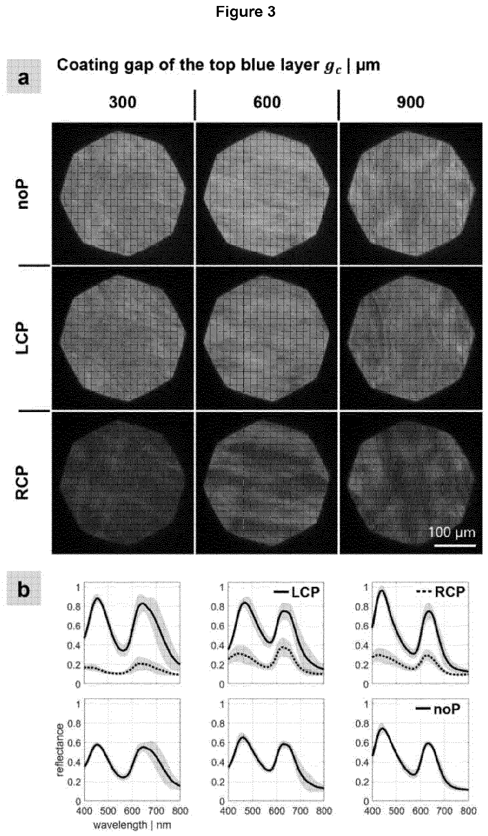

Microscopic images of the different magenta bi-layer films were taken using a polarised optical microscope (see **Figure 3a**). Images were taken with no polarizer (noP), a LCP filter, and a RCP filter. As the thickness of the blue film is reduced, the intensity of the blue reflection decreases relative to the red reflection, resulting in a magenta film which is more red in appearance.

The intensity of the reflected light was analysed for each film using a spectrometer across a wavelength range of from 400 to 800 nm. The intensity at different wavelengths is shown in **Figure 3b**. The top row of spectra show intensity for the LCP (solid line) and RCP (dashed line) filtered images separately, while the bottom row of spectra show intensity for noP images. As the thickness of the blue film is reduced, the intensity of the blue reflection (at about 440 nm) decreases relative to the red reflection (at about 660 nm). This results in a magenta film which is more red in appearance as the thickness of the blue film is reduced in thickness. This demonstrates that the secondary colour of the film can be adjusted using the thickness of the films.

### Bi-layer N-CNC - Ch-CNC Films

Blue, green, and red mono-layer Ch-CNC films were prepared using the methods described above. The cholesteric pitch (the periodicity of the chiral helicoidal structure) is associated with a film's structural colour. The cholesteric pitch may be controlled by selection of appropriate conditions during preparation of the nanocrystal suspension, such as tip sonication, as described above and previously in Droguet *et al.*

A N-CNC layer was then coated onto the coloured Ch-CNC film to flip the LCP reflection into an RCP reflection. N-CNC layers have been found to be birefringent, meaning that it can flip LCP light into RCP light. The birefringence and thickness of the N-CNC layer was varied to control flipping of the RCP/LCP light.

When light of a wavelength *λ* goes through the N-CNC layer with the birefringence, the produced phase difference (ΔØ) between ordinary and extraordinary light can be defined by the following equation (Fernandes, S. N. *et al*). Phase difference is given by equation (1), wherein Δ*n, d* and *λ* are birefringence, thickness and wavelength, respectively: $Δ ∅ = 2 π \frac{Δ nd}{λ}$ (1)

When the thickness of the N-CNC layer is an appropriate value it causes ΔØ to equal *π*, and the N-CNC layer can work perfectly as a half-wave retardation plate for flipping LCP light into RCP light. As the phase difference is dependent on the frequency of light, the thickness of the N-CNC layer must be tuned for each colour of the Ch-CNC layer.

The birefringence (Δ*n*) of the N-CNC layers was measured (see Instrumentation) to be 0.0334 ± 0.0006, which means the CNCs in N-CNC layers were partially aligned (randomly oriented CNCs would result in a Δ*n* of 0). This calculated Δn is smaller than that of intrinsic birefringence of a single CNC (approximately 0.074 to 0.084), which is expected since the aligned CNC layer is not perfectly anisotropic.

These properties were investigated for different coloured Ch-CNC films by adjusting the thickness of the N-CNC film layer.

### Bi-layer N-CNC - Blue Ch-CNC Films

A first blue Ch-CNC film layer was prepared using the methods described above and allowed to dry. A second N-CNC film layer was then coated onto the first blue Ch-CNC film layer, using the methods described above. The second N-CNC film layer was applied using a series of coating gaps from 38 to 388 µm at 10 or 20 µm intervals to provide N-CNC layers with different thicknesses. This results in a bi-layer Ch-CNC - N-CNC film.

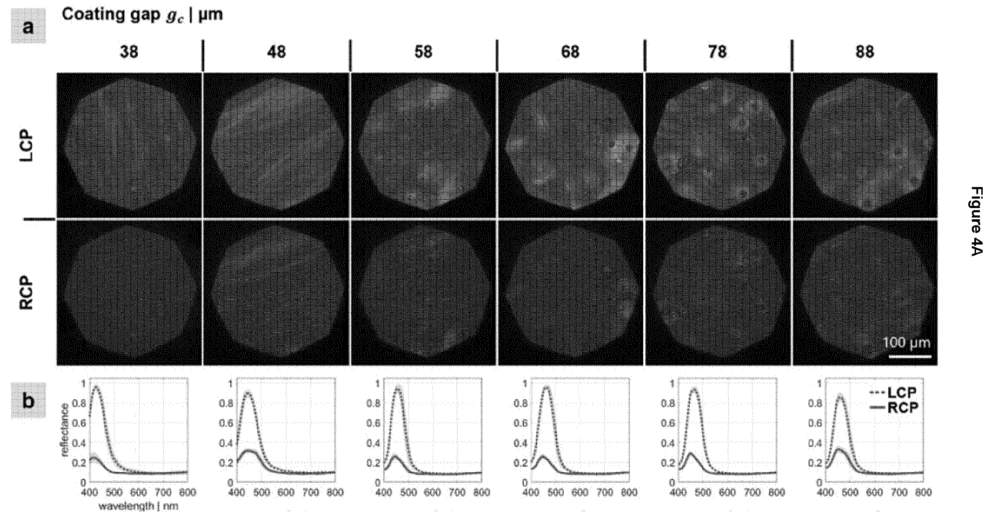

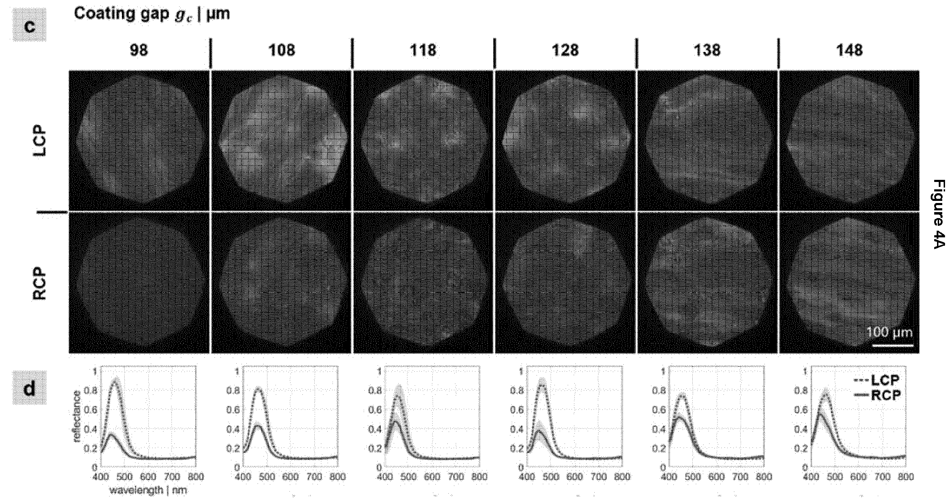

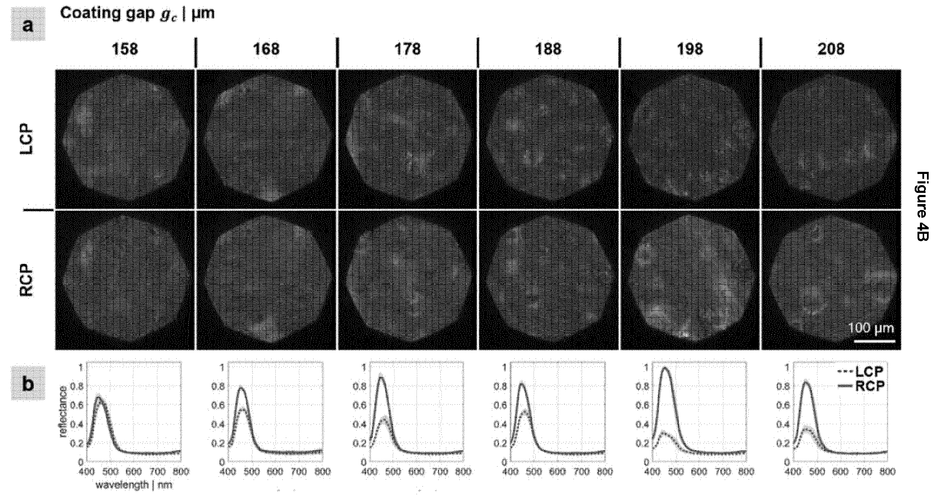

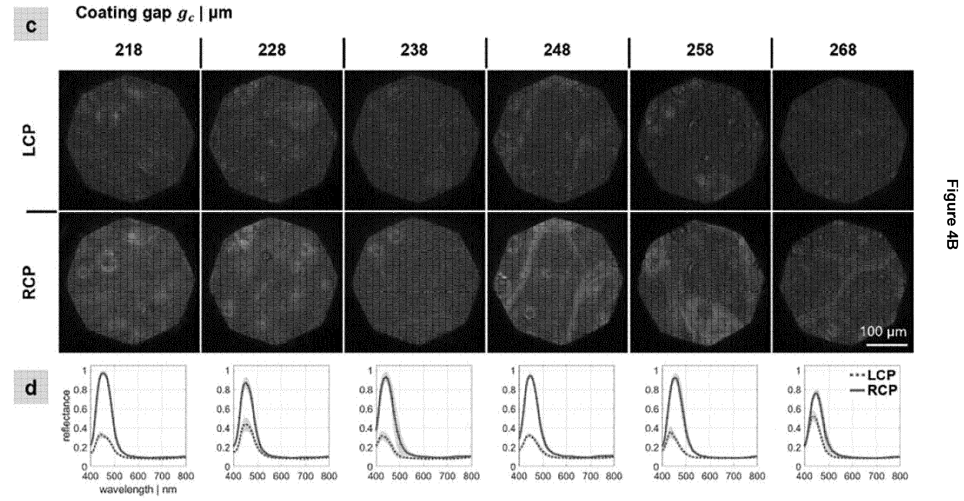

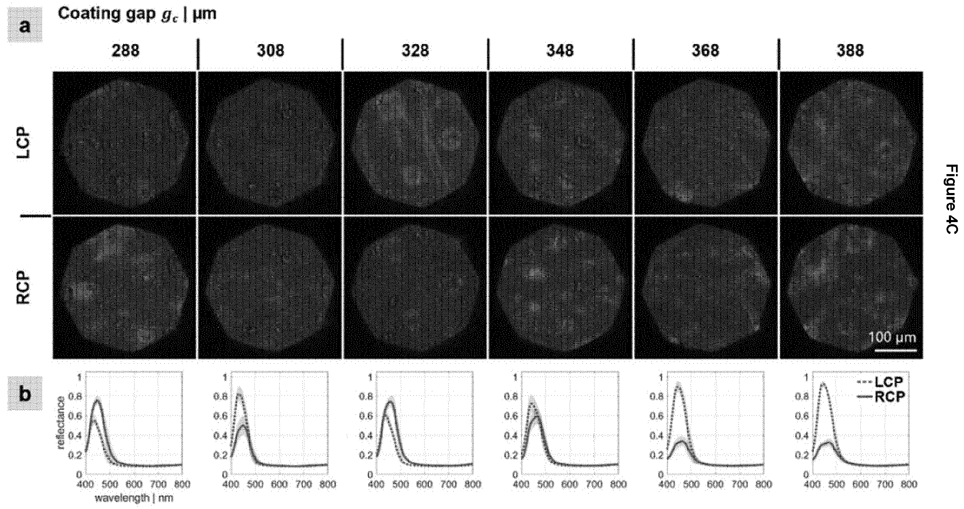

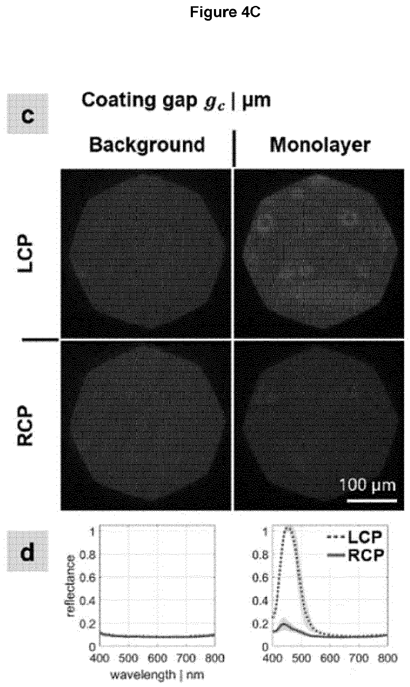

Microscopic images of the bi-layer films with different thicknesses of N-CNC layers were taken using a polarised optical microscope (see **Figure 4A.a, 4A.c, 4B.a, 4B.c, 4C.a and 4C.c**). Images were taken with a LCP filter and a RCP filter. The intensity of the reflected light was analysed for each film using a spectrometer across a wavelength range of from 400 to 800 nm and with a LCP and RCP filter. The intensity at different thicknesses of N-CNC films is shown in **Figure 4A.b, 4A.d, 4B.b, 4B.d, 4C.b and 4C.d** (LCP = dotted line, RCP = solid line).

As the coating gap increase incrementally, the colour intensity and reflectance under an LCP filter first decreases and then increases again. The LCP intensity gradually decrease from a coating thickness of 38 to 228 µm and then gradually increases again from a coating thickness of 228 to 388 µm. The colour intensity and reflectance under an RCP filter follow an opposite trend, with reflected intensity gradually increasing from a coating thickness of 38 to 228 µm and then gradually decreasing again from a coating thickness of 230 to 388 µm.

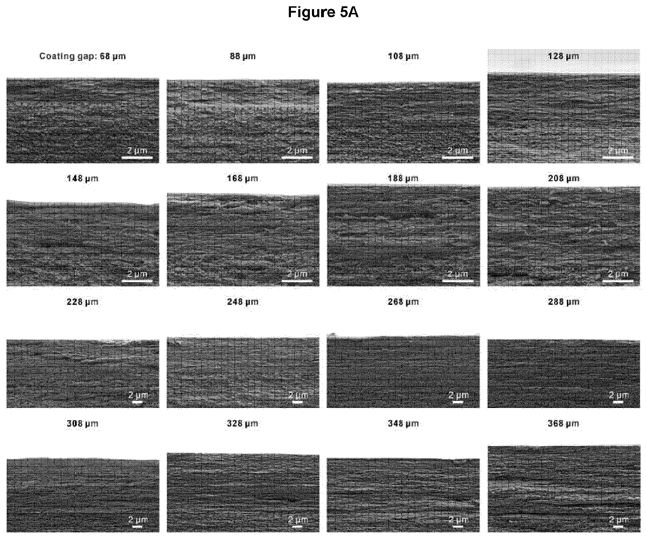

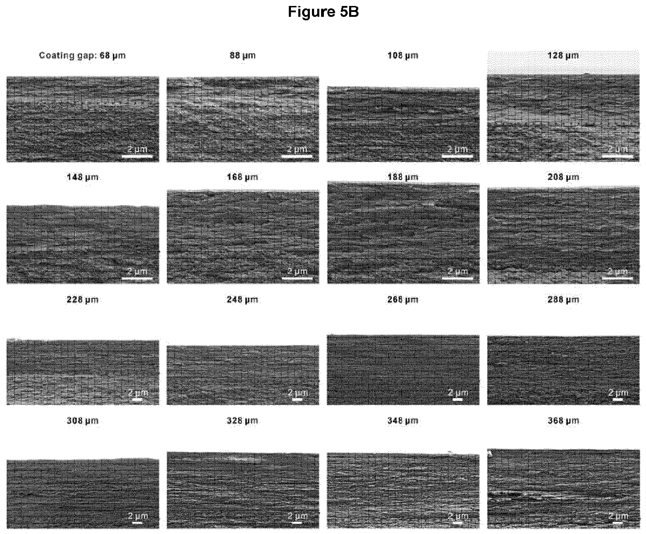

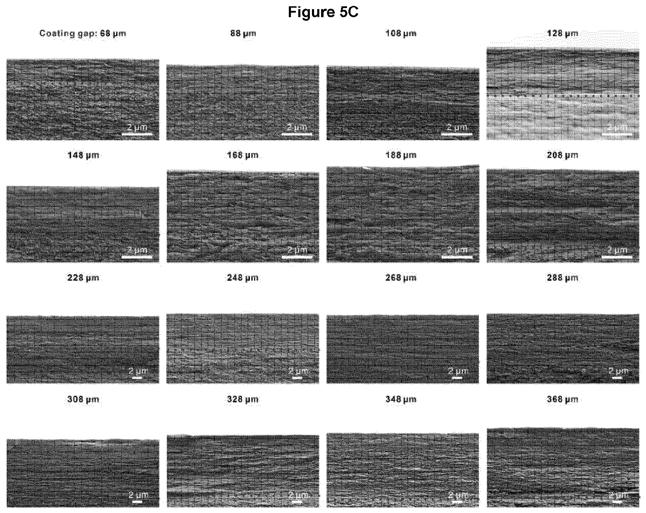

Cross-sectional SEM images of the bi-layer films were taken to measure the dried thickness of the N-CNC layer. SEM images were taken for a range of different thickness of films at three different locations on the film cross-section. The SEM images are shown in **Figures 5A****,** **5B** **and** **5C****.**

The real thickness of some N-CNC layers was measured from the SEM images at the different locations within the film. The average film thickness was calculated for each coating gap by taking the mean of the thickness at the three different SEM images. It was found that the dried thickness of the N-CNC layer shows an almost linear relationship with the coating gap (see **Figure 6**).

The average LCP or RCP peak reflectance (taken from the spectroscopic measurements described above) was also plotted against the coating gap for the blue bilayer films (**Figure 7**). A fitting curve was plotted for the data, which shows the increase and decrease in LCP/RCP reflectance with N-CNC coating gap.

The average RCP reflectance was plotted against coating gap in **Figure 7a****,** and shows an increase followed by a decrease in reflectance, with the peak at around 230 µm. The average LCP reflectance was plotted against coating gap in **Figure 7b****,** and shows a decrease followed by an increase in reflectance, with the peak at around 230 µm.

The coating gap corresponding to the peak of the fitting curve in is around 230 µm (**Figure 7**). In the prepared bilayer films, 228 µm is the nearest coating gap, and the corresponding dried thickness of the N-CNC layer is 6.31 ± 0.14 µm using the linear conversion based on **Figure 6****.** Based on equation (1), the theoretical thickness of the nematic layer to flip LCP light into RCP light efficiently is ~6.86 µm, which is very close to the experimental value.

### Bi-layer N-CNC - Green Ch-CNC Films

A green bi-layer film was prepared in the same way as the blue film described above.

A green Ch-CNC layer was produced by a CNC suspension with a longer sonication time compared with that for the blue layer, and a series of coating gaps from 225 µm to 315 µm were chosen for making N-CNC layers with different thicknesses onto green Ch-CNC layers.

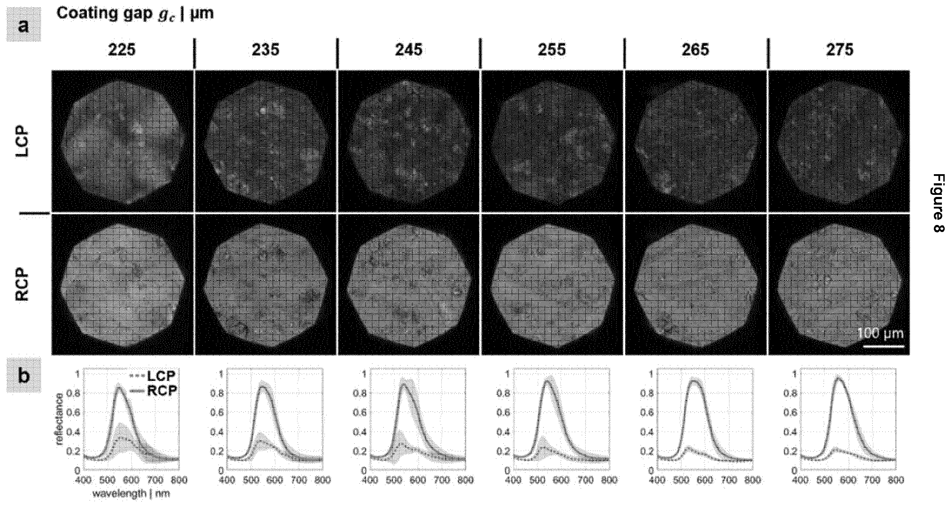

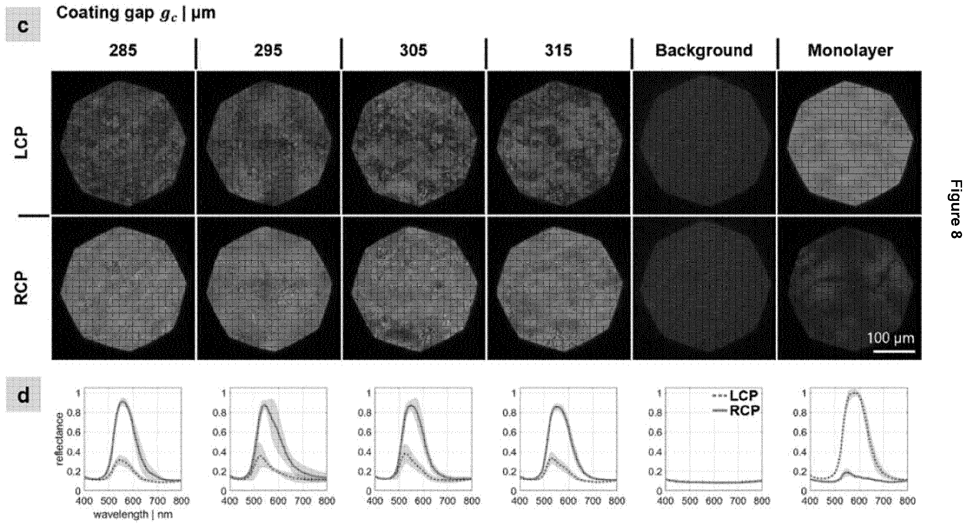

Microscopic images of the green bi-layer films with different thicknesses of N-CNC layers were taken using a polarised optical microscope (see **Figure 8a** **and** **8c**). Images were taken with a LCP filter and a RCP filter. The intensity of the reflected light was analysed for each film using a spectrometer across a wavelength range of from 400 to 800 nm and with an LCP and RCP filter. The intensity at different thicknesses of N-CNC films is shown in **Figure 8b** **and** **8d** (LCP = dotted line, RCP = solid line).

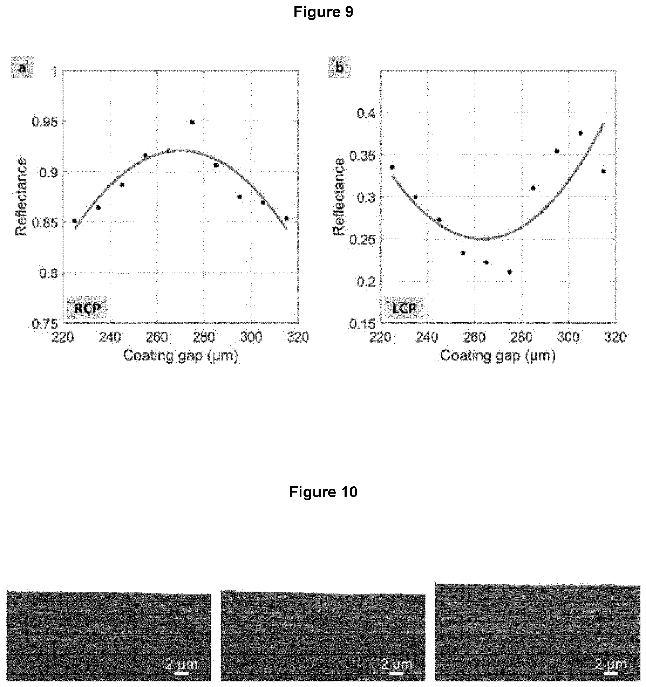

The average RCP reflectance was plotted against coating gap in **Figure 10a,** and shows an increase followed by an decrease in reflectance, with the peak at around 270 µm. The average LCP reflectance was plotted against coating gap in **Figure 10b,** and shows a decrease followed by an increase in reflectance, with the peak at around 263 µm.

Cross-sectional SEM images of the bi-layer film prepared with a coating gap of around 265 µm were taken to measure the dried thickness of the N-CNC layer (see **Figure 9**). SEM images were taken at three different locations on the film cross-section, and the thickness measurement averaged across the three locations (**Figure 10**). The corresponding dried thickness was measured as 8.63 ± 0.20 µm, which is close to the theoretical thickness of ~8.76 µm calculated using equation (1).

### Bi-layer N-CNC - Red Ch-CNC Films

A red bi-layer film was prepared in the same way as the blue film described above.

A red Ch-CNC layer was produced by a CNC suspension with a longer sonication time compared with that for the blue or green layer, and a series of coating gaps from 278 µm to 388 µm were chosen for making N-CNC layers with different thicknesses onto red Ch-CNC layers.

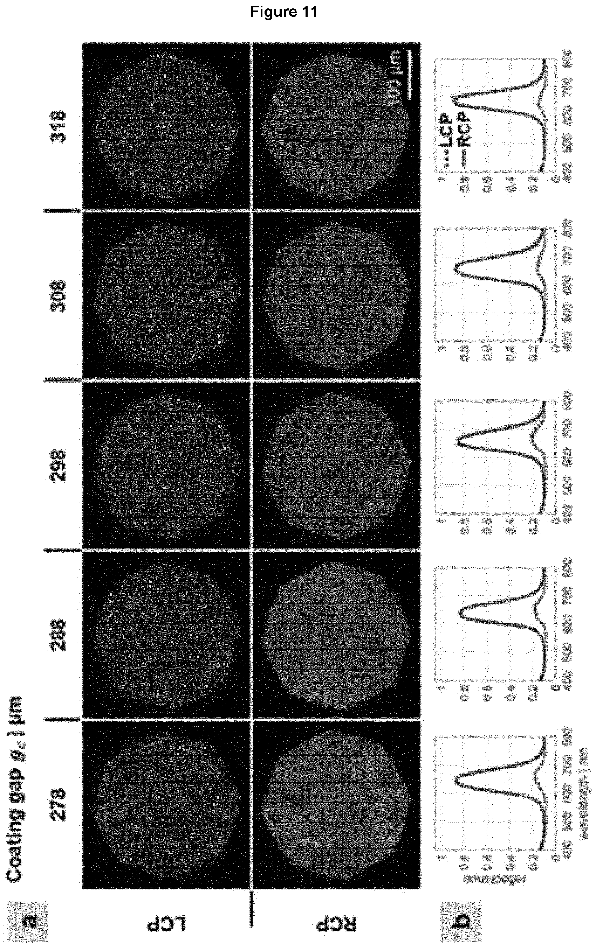

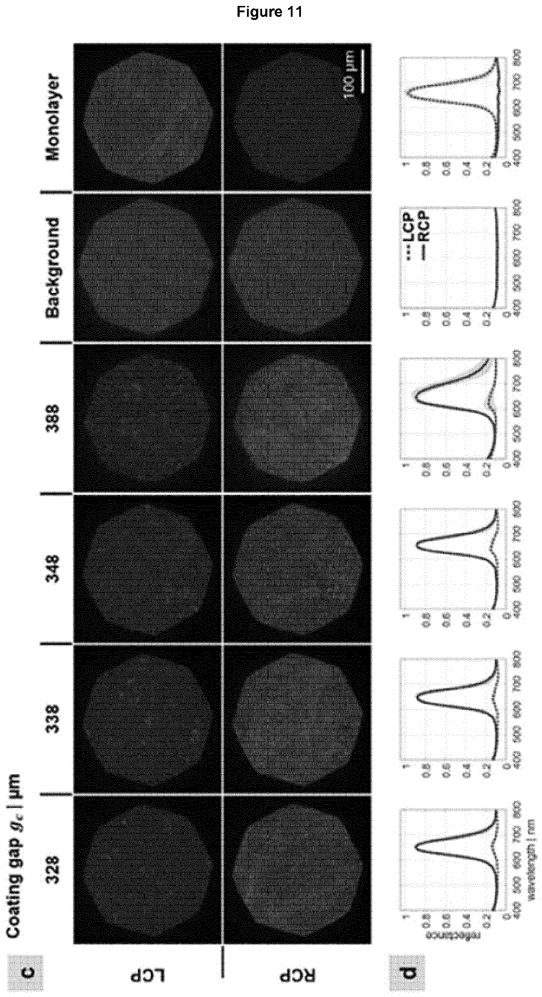

Microscopic images of the red bi-layer films with different thicknesses of N-CNC layers were taken using a polarised optical microscope (see **Figure 11a** **and** **11c**). Images were taken with a LCP filter and a RCP filter. The intensity of the reflected light was analysed for each film using a spectrometer across a wavelength range of from 400 to 800 nm and with an LCP and RCP filter. The intensity at different thicknesses of N-CNC films is shown in **Figure 11b** **and** **11d** (LCP = dotted line, RCP = solid line).

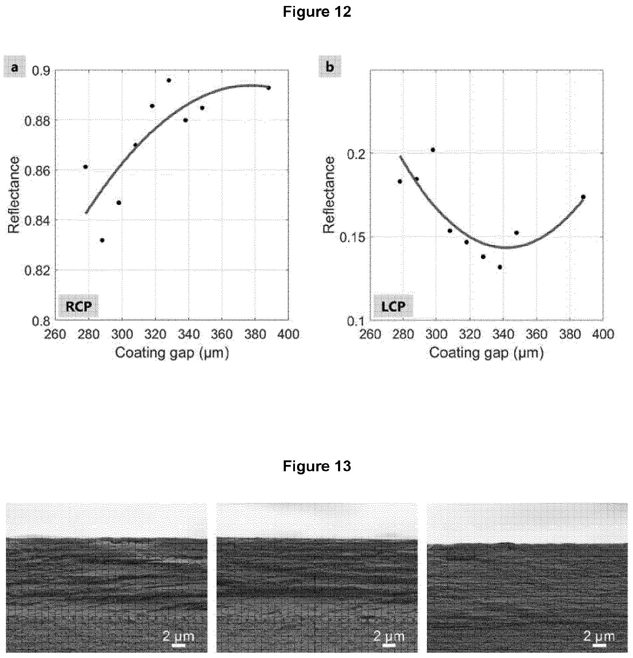

The average RCP reflectance was plotted against coating gap in **Figure 12a****,** and shows an increase followed by an decrease in reflectance, with the peak at around 375 µm. The average LCP reflectance was plotted against coating gap in **Figure 12b****,** and shows a decrease followed by an increase in reflectance, with the peak at around 340 µm.

Cross-sectional SEM images of the bi-layer film prepared with a coating gap of around 328 µm were taken to measure the dried thickness of the N-CNC layer (see **Figure 13**). SEM images were taken at three different locations on the film cross-section, and the thickness measurement averaged across the three locations. The corresponding dried thickness was measured as 11.90 ± 0.11 µm, which is a little bit larger than the theoretical thickness, ~9.87 µm, based on the calculated Δ*n* and equation (1).

This is thought to be due to the fact that with the increasing thickness of the N-CNC layer, the shear force working on the middle part of N-CNC layer is not enough to align CNC effectively causing a decease of Δ*n* for this thicker N-CNC layer. Therefore, a slightly thicker N-CNC films is needed to for the red LCP/RCP light to be flipped.

### Tri-layer CNC Films

Red, green and blue tri-layer CNC mirrors were prepared by stacking both Ch-CNC and N-CNC layers to produce a *cholesteric-nematic-cholesteric* tri-layer. This is shown schematically in **Figure 1a** for a blue film.

A first Ch-CNC film was prepared by deposition on a PET substrate using the methods described above. A second N-CNC film was then deposited on the first Ch-CNC film substrate and dried under ambient conditions using the methods described above, to provide a bi-layer Ch-CNC - N-CNC film. A third Ch-CNC film was then deposited on the second N-CNC film layer to provide a tri-layer Ch-CNC - N-CNC - Ch-CNC film.

The first and third Ch-CNC films were prepared in the same way using a blade coating method. For Ch-CNC layers, a fixed *g_{c}* of 900 µm and a fixed *v_{c}* of 2 mm·s⁻¹ were used, giving a shear rate (*γ̇ = v_{c}*/*g_{c}*) of 2.2 s⁻¹. Different sonication times were used to provide red, green and blue coloured Ch-CNC layers, as described above.

The second N-CNC layers were prepared at different thicknesses depending on the colour of the Ch-CNC layers and a fixed shear rate of 75 s⁻¹ was used. The thickness of the N-CNC layer was determined based on the optimisation carried out for the bi-layer N-CNC - Ch-CNC films described above, such that ΔØ is equal to *π* and the N-CNC layer can flip LCP light into RCP light.

For blue films, a coating gap of 228 µm was used (corresponding to a dried thickness of the N-CNC layer of about 6.31 µm). For green films, a coating gap of 265 µm was used (corresponding to a dried thickness of the N-CNC layer of about 8.63 µm). For red films, a coating gap of 328 µm was used (corresponding to a dried thickness of the N-CNC layer of about 11.90 µm).

### Macroscopic Optical Characterisation of Tri-layer CNC Film

Macroscopic images of the tri-layer CNC film were taken with no polarizer (noP), a LCP filter, and a RCP filter. Images were also taken of the blue Ch-CNC mono-layer film and blue Ch-CNC - N-CNC bilayer film formed at intermediate steps during production of the film. These images are shown in **Figure 1b****.**

The tri-layer film appears a bright blue colour with noP. The brightness is greater than the monolayer or bilayer films, indicative of the fact both RCP and LCP light are being reflected by the tri-layer film.

The tri-layer film has a comparable brightness under LCP and RCP filters. In contrast, the monolayer only reflects light under RCP filter and he bilayer only reflects light under the LCP filter (as the N-CNC layer is flipping the RCP to LCP light). However, the tri-layer is able to reflect both LCP and RCP light, hence providing comparable brightness under both the LCP and REP filters.

It is thought that the top left-handed Ch-CNC layer doesn't affect the transmission of RCP light from the bottom bilayer, hence the LCP reflection doesn't change since the LCP reflection is from the top Ch-CNC layer. The optimized nematic layer in the bilayer films flip LCP into RCP efficiently, to achieve maximal reflection of both LCP and RCP from the tri-layer films.

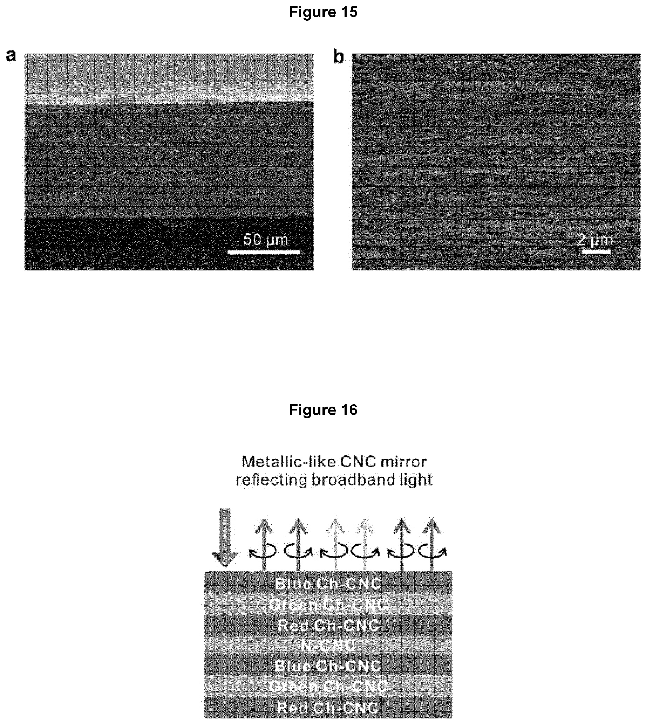

Cross-sectional SEM images of the blue tri-layer film were taken to study the tri-layer structure (see **Figure 15**). The SEM images show a trilayer structure through the film.

### Microscopic Optical Characterisation of Tri-layer CNC Film

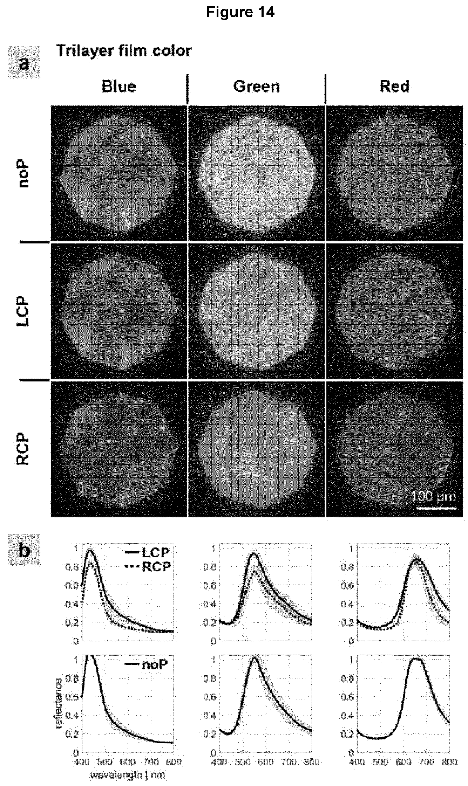

Microscopic images of the blue, green and red tri-layer films were taken using a polarised optical microscope (see **Figure 14a**). Images were taken with no polarizer (noP), a LCP filter, and a RCP filter.

The intensity of the reflected light appears visually very similar for the red, green and blue films, regardless of if a LCP or RCP filter is applied. This suggests that the tri-layer films are reflecting a similar amount of both LCP and RCP light.

The intensity of the reflected light was analysed for each film using a spectrometer across a wavelength range of from 400 to 800 nm. The intensity at different wavelengths is shown in **Figure 14b****.** The top row of spectra show intensity for the LCP (solid line) and RCP (dashed line) filtered images separately, while the bottom row of spectra show intensity for noP images.

The resultant tri-layer CNC films had peak wavelengths of reflection of 459 nm, 585 nm, and 659 nm, for the red green and blue films, respectively. The reflected intensity of the LCP and RCP light is relatively similar (compared to the monolayer and bilayer films discussed above). For all blue, green, and red trilayer films, the RCP reflectance is slightly lower than LCP reflectance, which is thought to be due to imperfections in the middle N-CNC layer. Nonetheless, the reflectance achieved is nearly 100%, which represents a significant increase on previous monolayer or bilayer CNC films which are only capable of a maximum 50% reflectance of one of LCP or RCP light.

### Broadband Multi-Layered CNC Mirror Films

A broadband CNC film was prepared by stacking both Ch-CNC and N-CNC layers to produce a *cholesteric-nematic-cholesteric* multi-layer film. This is shown schematically in **Figure 16****.**

A first red Ch-CNC film was deposited on a PET film (see Deposition of Ch-CNC coatings). After drying, a first green Ch-CNC film was deposited on top of the first red Ch-CNC film using the same method. After drying, a first blue Ch-CNC film was deposited on top of the first green Ch-CNC film using the same method. After drying, a N-CNC film was deposited on the first blue Ch-CNC film. A second red, second green and second blue film was then deposited on the N-CNC film in the same manner as the first red, green and blue films.

The CNC layers were applied by the blade-coating method detailed above. For Ch-CNC layers, a fixed *g_{c}* of 900 µm and a fixed *v_{c}* of 2 mm·s⁻¹ were chosen, giving a shear rate (*γ̇ = v_{c}*/*g_{c}*) of 2.2 s⁻¹. For the N-CNC layer, a fixed *g_{c}* of 265 µm and a fixed *γ̇* of 75 s⁻¹ were chosen, giving a *v_{c}* of 20 mm·s⁻¹.

A single N-CNC layer was used between each red-green-blue (RGB) block to simplify the construction. The N-CNC layer was optimised for green light (*g_{c}* of 265 µm) as described above. It was thought that using a green optimised N-CNC layer would provide good LCP/RCP flipping across the broadest range of visible wavelengths. Simulations showed that a N-CNC layer optimised for green light is also reasonable for blue and red. However, using a N-CNC layer optimised for red or blue light shows poorer performance for blue or red light respectively, due to a greater wavelength difference.

### Microscopic Optical Characterisation of Broadband Multi-Layered CNC Mirror Films

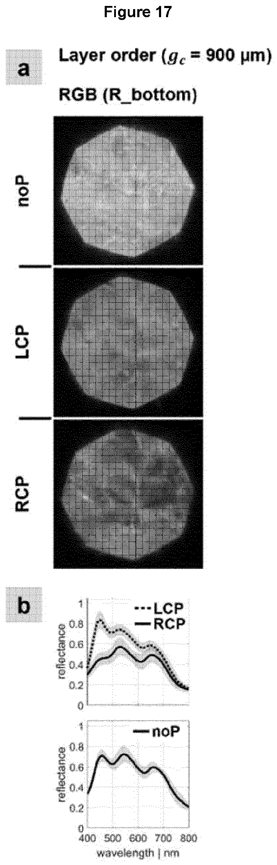

Microscopic images of the broadband multi-layered CNC mirror films were taken using a polarised optical microscope (see **Figure 17a**). Images were taken with no polarizer (noP), a LCP filter, and a RCP filter.

The broadband mirror films reflected light which is white in colour, indicative of the broad band reflectance across red, green and blue colours. The intensity of the reflection is quite similar regardless of whether a LCP or RCP filter is applied. This suggests that the film is reflecting a similar amount of both LCP and RCP light. The RCP reflectance is slightly darker than LCP reflectance, which is thought to be due to imperfections in the middle N-CNC layer. This effect is more significant than the tri-layer films due to the greater film thickness (7 layers compared to 3 layers).

The intensity of the reflected light was analysed for each film using a spectrometer across a wavelength range of from 400 to 800 nm. The intensity at different wavelengths is shown in **Figure 17b****.** The top row of spectra show intensity for the LCP (solid line) and RCP (dashed line) filtered images separately, while the bottom row of spectra show intensity for noP images.

The broadband mirror films reflect light at peak wavelengths of reflection at about 460 nm, 580 nm, and 660 nm, which correspond to the reflections from each of the red green and blue films Ch-CNC films, respectively. The RCP reflectance is slightly lower than LCP reflectance, which is thought to be due to imperfections in the middle N-CNC layer and upper Ch-CNC layers. Nonetheless, the reflectance achieved is nearly 80%, which represents a significant increase on previous CNC films which are only capable of a theoretical maximum 50% reflectance of one of LCP or RCP light.

### CNC Particles

The multi-layer films were transformed into multi-layer CNC photonic particles.

The multi-layer films were detached from the PET substrate. The multi-layered films were manually peeled from the PET substrate.

Before grinding, the multi-layer films were annealed (heat-treated) in an oven (Nabertherm, P330) for 30 min at 180°C, so as to prevent the degradation of the surfaces of the films during the grinding process. This was also to increase the stability of microparticles in various solvents, including water.

The multi-layer films were then ground into microparticles that can be used as sustainable photonic pigment and glitter. The CNC films were finely ground using a rotary blade (Cookworks electric coffee grinder PCML-2012, 150 W).

A magenta colored particle was prepared by grinding a bi-layer film having a blue and red Ch-CNC layers (prepared as described in the *bi-layer secondary coloured films* section above).

The magenta particles were size sorted into groups of 125-150 µm, 75-106 µm and 20-45 µm (particle diameter). The size sorting was carried out after grinding by sieving.

Images of the resulting particles were taken at 20x and 50x magnification using ring illumination. The images are shown in **Figure 18****.** The resulting particles have a magenta colour, produced by the combination of blue and red Ch-CNC layers in the particles. The particles expand the colour palette previously observed for CNC glitters, which have previously only reflected one wavelength range (primary colours).

A blue coloured particle was prepared by grinding a tri-layer film having a two blue Ch-CNC layers sandwiching a N-CNC layer. The blue tri-layer film was prepared using the methods described in the *tri-layer CNC films* section above. A thick tri-layer film was prepared using a coating gap of 900 µm for the blue Ch-CNC films, and a coating gap of 228 µm for the N-CNC film. A thin tri-layer film was prepared using a coating gap of 250 µm for the blue Ch-CNC films, and a coating gap of 228 µm for the N-CNC film.

A comparative monolayer blue Ch-CNC particle was also prepared by grinding a monolayer Ch-CNC film, the film being prepared with a coating gap of 900 µm.

The blue particles prepared from the thick tri-layer, thin tri-layer and mono-layer blue films were size sorted into a 125-150 µm group.

Images of the resulting particles were taken at 20x magnification using direct illumination. The images are shown in **Figure 19****,** seen under no polarized, LCP and RCP filter.

The resulting tri-layer particles have a much higher reflectance than observed for the comparative mono-layer CNC particles. The particle overcomes the limitation of 50% reflection from LCP or RCP light that CNC pigment and glitter faced before, to provide closer to 100% reflectance from LCP and RCP light.

### References

A number of publications are cited above in order to more fully describe and disclose the invention and the state of the art to which the invention pertains. Full citations for these references are provided below.
Chowdhury, R. A., Clarkson, C. & Youngblood, J. Cellulose 25, 1769-1781 (2018).
De La Cruz, J. A. et al. ACS Photonics 5, 2468-2477 (2018).
Droguet, B. E. et al. Nat. Mater. 21, 352-358 (2022).
Fernandes, S. N. et al. Advanced Materials 29, 1603560 (2017)
Fernandes, S. N., Lopes, L. F. & Godinho, M. H. Current Opinion in Solid State and Materials Science 23, 63-73 (2019).
Frka-Petesic, B. & Vignolini, S. Nat. Photonics 13, 365-367 (2019)
Lagerwall et al. (NPG Asia Materials 2014, 6, e80),
Parker, R. M. et al. Advanced Materials 30, 1704477 (2018)
Wu, T. et al. Journal of Materials Chemistry C 4, 9687-9696 (2016)

## Claims

1. A method of preparing a multi-layered film, the method comprising a cholesteric layer formation step comprising the steps of:
a) depositing a nanocrystal suspension comprising cellulose nanocrystals onto a substrate;
b) spreading the nanocrystal suspension across the substrate using a spreader;
c) ageing the nanocrystal suspension to partially or completely recover the cholesteric structures lost during deposition and spreading; and
d) drying the deposited nanocrystal suspension so that the nanocrystals self-assemble to form a cholesteric layer;
wherein the cholesteric layer formation step is repeated two or more times and the multi-layered film comprises the cholesteric layer in direct contact with another cellulose containing layer.

2. The method of claim 1, the method further comprising a nematic layer formation step comprising the steps of:
a) depositing a nanocrystal suspension comprising cellulose nanocrystals onto a substrate;
b) spreading the nanocrystal suspension across the substrate using a spreader to align the cellulose nanocrystals and form a non-chiral nematic structure; and
c) drying the deposited nanocrystal suspension,
wherein the nematic layer formation step is carried out before and/or after the cholesteric layer formation step and the multi-layered film comprises the nematic layer in direct contact with the cholesteric layer;
optionally wherein the nematic layer formation step is carried out after one cholesteric layer formation step and the substrate in the nematic layer formation step is the cholesteric layer from the cholesteric layer formation step.

3. The method of claim 1 or 2, wherein:
(i) the cholesteric layer formation step further comprises a step of sonicating the cellulose nanocrystal suspension before the depositing step, preferably tip sonicating the cellulose nanocrystal suspension; and/or
(ii) the concentration of the nanocrystal suspension in the cholesteric layer formation step is from 1.5 to 12 wt.%, preferably from 4 to 9 wt.%, more preferably about 6 wt.%; and/or
(iii) the concentration of the nanocrystal suspension in the nematic layer formation step is 4 wt.% or more, preferably 60 wt% or less, more preferably from 5 to 20 wt %, yet more preferably from 6 to 12 wt%, such as about 8 wt%; and/or
(iv) the shear rate during the spreading step of the cholesteric layer formation step is from 0.5 s⁻¹ to 30.0 s⁻¹, preferably 2.0 s⁻¹ to 10 s⁻¹, such as about 2.2 s⁻¹, and/or
(v) the shear rate during the spreading step of the nematic layer formation step is 5.0 s⁻¹ or more, preferably 300.0 s⁻¹ or less, more preferably from 15.0 s⁻¹ to 100 s⁻¹, such as about 75 s-¹; and/or
(vi) the method further comprises a step of annealing the multi-layered film to increase the water resistance of the film, such as by annealing at a temperature of from 100 to 250 °C.

4. The method of claims 1 to 3 further comprising a step of dividing the multi-layered film to produce particles, such as by fracturing and/or grinding the multi-layered film.

5. A multi-layered film comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
wherein the multi-layered film comprises the cholesteric layer in direct contact with another cellulose containing layer.

6. The multi-layered film of claim 5, wherein:
(i) the cholesteric layers are each independently selected from two or more of, such as four or more of, or six or more of:
a cholesteric layer having a maximum reflectance wavelength of 100 to 400 nm,
a cholesteric layer having a maximum reflectance wavelength of 400 to 500 nm,
a cholesteric layer having a maximum reflectance wavelength of 500 to 580 nm,
a cholesteric layer having a maximum reflectance wavelength of 600 to 750 nm, and
a cholesteric layer having a maximum reflectance wavelength of 750 to 1000 nm;
and/or
(ii) two of the cholesteric layers have a different maximum reflectance wavelength, such as difference in the maximum reflectance wavelength of 50 nm or more, such as 100 nm or more, or 200 nm or more.

7. The multi-layered film of claim 5 or 6, further comprising a nematic layer, wherein
the nematic layer comprises cellulose nanocrystals and the cellulose nanocrystals are aligned in a non-chiral nematic structure, and
the multilayer film comprises the nematic layer in direct contact with the cholesteric layer.

8. The multi-layered film of claim 7, wherein:
(i) the nematic layer is in direct contact with two cholesteric layers, and preferably two cholesteric layers on opposite sides of the nematic layer have substantially the same maximum reflectance wavelength; and/or
(ii) the nematic layer acts as a half-wave retardation plate for circularly polarised light for a wavelength within 500nm of the maximum reflectance wavelength of one or more of the cholesteric layers, such as within 300nm, within 200nm, within 100nm, or within 50nm; and/or
(iii) the nematic layer has a dry thickness of 50 µm or less, preferably from 3 to 20 µm, more preferably from 6 to 12 µm; and/or
(iv) the birefringence of the nematic layer is 0.08 or less, and preferably from 0.01 to 0.06; and/or
(v) the Herman's order parameter of the nematic layer is 0.3 or more, preferably 0.5 or more, even more preferably 0.7 or more, yet more preferably 0.9 or more.

9. The multi-layered film of claims 5 to 8, wherein the multi-layered film comprises 70 wt.% or more cellulose nanocrystals, such as neutralised cellulose nanocrystals, in total, preferably 80 wt.% or more, more preferably 90 wt.% or more, even more preferably 95 wt.% or more, based on the total weight of the multi-layered film; optionally wherein the multi-layered film consists essentially of cellulose nanocrystals, such as neutralised cellulose nanocrystals.

10. A multi-layered film obtained or obtainable by the method of claims 1 to 3.

11. The multi-layered film of claims 5 to 10, wherein:
(i) the multi-layered film has a maximum reflectance at a wavelength of from 100 to 1000nm of 50% or more, preferably 70% or more, more preferably 80% or more, even more preferably 90% or more; and/or
(ii) the multi-layered film reflects right circularly polarised light and the reflected right circularly polarised light has a maximum reflectance at a wavelength of from 100 to 1000 nm of 50% or more, preferably 60% or more, more preferably 70% or more, even more preferably 80% or more.

12. A multi-layered particle comprising two or more cholesteric layers, wherein
each cholesteric layer comprises cellulose nanocrystals and the cellulose nanocrystals are organized into chiral nematic structures,
each cholesteric layer has a thickness such that the director of a chiral nematic structure performs at least one revolution within the layer, the layer having a thickness of 50 µm or less, preferably 20 µm or less, and
the multi-layered particle comprises the cholesteric layer in direct contact with another cellulose containing layer.

13. The multi-layered particle of claim 12, wherein:
(i) the multi-layered particle further comprises a nematic layer, wherein
the nematic layer comprises cellulose nanocrystals and the cellulose nanocrystals are aligned in a non-chiral nematic structure; and
the multi-layered particle comprises the nematic layer in direct contact with a cholesteric layer; and/or
(ii) the multi-layered particle comprises, such as consists of, neutralised cellulose nanocrystals;
(iii) the multi-layered particle has a facetted geometry corresponding to at least one chiral nematic domain of the cholesteric layer.

14. A multi-layered particle obtained or obtainable by the method of claim 4.

15. Use of the multi-layered film of claims 5 to 11 or the multi-layered particle of claims 12 to 14 or derivatives thereof, as a coloured sheet or a colourant, such as a pigment, effect pigment or glitter.

## Patentansprüche

1. Verfahren zur Herstellung einer mehrschichtigen Folie, wobei das Verfahren einen Schritt der Bildung einer Cholesterinschicht umfasst, der die folgenden Schritte umfasst:
a) das Abscheiden einer Nanokristall-Suspension, die Cellulose-Nanokristalle umfasst, auf ein Substrat;
b) das Verteilen der Nanokristall-Suspension auf dem Substrat unter Verwendung eines Verteilers;
c) das Reifen-Lassen der Nanokristall-Suspension, um die Cholesterinstrukturen, die während des Abscheidens und Verteilens verloren gingen, teilweise oder vollständig erneut zu gewinnen; und
d) das Trocknen der abgeschiedenen Nanokristall-Suspension, so dass sich die Nanokristalle selbst zusammenfügen, um eine Cholesterinschicht zu bilden;
wobei der Schritt der Bildung der Cholesterinschicht zwei oder mehrere Male wiederholt wird und die mehrschichtige Folie die Cholesterinschicht in direktem Kontakt mit einer weiteren Cellulose enthaltenden Schicht umfasst.

2. Verfahren nach Anspruch 1, wobei das Verfahren weiters einen Schritt der Bildung einer nematischen Schicht umfasst und die folgenden Schritte umfasst:
a) das Abscheiden einer Nanokristall-Suspension, die Cellulose-Nanokristalle umfasst, auf ein Substrat;
b) das Verteilen der Nanokristall-Suspension auf dem Substrat unter Verwendung eines Verteilers, um die Cellulose-Nanokristalle anzuordnen und eine nichtchirale nematische Struktur zu bilden; und
c) das Trocknen der abgeschiedenen Nanokristall-Suspension;
wobei der Schritt der Bildung der nematischen Schicht vor und/oder nach dem Schritt der Bildung einer Cholesterinschicht durchgeführt wird und die mehrschichtige Folie die nematische Schicht in direktem Kontakt mit der Cholesterinschicht umfasst;
wobei gegebenenfalls der Schritt der Bildung der nematischen Schicht nach dem Schritt der Bildung der Cholesterinschicht durchgeführt wird und das Substrat in dem Schritt der Bildung der nematischen Schicht die Cholesterinschicht aus dem Schritt der Bildung der Cholesterinschicht ist.

3. Verfahren nach Anspruch 1 oder 2, wobei:
(i) der Schritt der Bildung der Cholesterinschicht weiters einen Schritt des Beschallens der Cellulose-Nanokristall-Suspension vor dem Abscheidungsschritt, vorzugsweise des Sonden-Beschallens der Cellulose-Nanokristall-Suspension, umfasst; und/oder
(ii) die Konzentration der Nanokristall-Suspension in dem Schritt der Bildung der Cholesterinschicht 1,5 bis 12 Gew.-%, vorzugsweise 4 bis 9 Gew.-%, noch bevorzugter etwa 6 Gew.-%, beträgt;
(iii) die Konzentration der Nanokristall-Suspension in dem Schritt der Bildung der nematischen Schicht 4 Gew.-% oder mehr, vorzugsweise 60 Gew.-% oder weniger, noch bevorzugter 5 bis 20 Gew.-%, sogar noch bevorzugter 6 bis 12 Gew.-%, wie z. B. 8 Gew.-%, beträgt; und/oder
(iv) die Scherrate während des Verteilungsschritts des Schritt der Bildung der Cholesterinschicht 0,5 s⁻¹ bis 30,0 s⁻¹, vorzugsweise 2,0 s⁻¹ bis 10 s⁻¹, wie z. B. 2,2 s⁻¹, beträgt; und/oder
(v) die Scherrate während des Verteilungsschritts des Schritts der Bildung der nematischen Schicht 5,0 s⁻¹ oder mehr, vorzugsweise 300,0 s⁻¹ oder weniger, noch bevorzugter 15,0 s⁻¹ bis 100 s⁻¹, wie z. B. 75 s⁻¹, beträgt; und/oder
(vi) das Verfahren weiters einen Schritt des Temperns der mehrschichtigen Folie umfasst, um die wasserabweisenden Eigenschaften der Folie zu verbessern, wie z. B. durch Tempern bei einer Temperatur von 100 °C bis 250 °C.

4. Verfahren nach Anspruch 1 bis 3, das weiters einen Schritt des Teilens der mehrschichtigen Folie zur Herstellung von Teilchen umfasst, wie z. B. durch Brechen und/oder Mahlen der mehrschichtigen Folie.

5. Mehrschichtige Folie, die zwei oder mehr Cholesterinschichten umfasst, wobei:
jede Cholesterinschicht Cellulose-Nanokristalle umfasst und die Cellulose-Nanokristalle in chiralen nematischen Strukturen organisiert sind,
jede Cholesterinschicht eine solche Dicke aufweist, dass das Ausrichtungselement einer chiralen nematischen Struktur zumindest eine Umdrehung innerhalb der Schicht durchführt, wobei die Schicht eine Dicke von 50 µm oder weniger, vorzugsweise 20 µm oder weniger, aufweist, und
wobei die mehrschichtige Folie die Cholesterinschicht in direktem Kontakt mit einer weiteren Cellulose-enthaltenden Schicht umfasst.

6. Mehrschichtige Folie nach Anspruch 5, wobei:
(i) die Cholesterinschichten jeweils unabhängig aus zwei oder mehr, wie z. B. vier oder mehr oder sechs oder mehr, der Folgenden ausgewählt sind:
einer Cholesterinschicht, die eine maximale Reflexionswellenlänge von 100 bis 400 nm aufweist,
einer Cholesterinschicht, die eine maximale Reflexionswellenlänge von 400 bis 500 nm aufweist,
einer Cholesterinschicht, die eine maximale Reflexionswellenlänge von 500 bis 580 nm aufweist,
einer Cholesterinschicht, die eine maximale Reflexionswellenlänge von 600 bis 750 nm aufweist und
einer Cholesterinschicht, die eine maximale Reflexionswellenlänge von 750 bis 1.000 nm aufweist; und/oder
(ii) zwei der Cholesterinschichten eine unterschiedliche maximale Reflexionswellenlänge aufweisen, z. B. eine Differenz der maximalen Reflexionswellenlänge von 50 nm oder mehr, wie z. B. 100 nm oder mehr oder 200 nm oder mehr.

7. Mehrschichtige Folie nach Anspruch 5 oder 6, die weiters eine nematische Schicht umfasst, wobei:
die nematische Schicht Cellulose-Nanokristalle umfasst und die Cellulose-Nanokristalle in einer nichtchiralen nematischen Struktur ausgerichtet sind und
die mehrschichtige Folie die nematische Schicht in direktem Kontakt mit der Cholesterinschicht umfasst.

8. Mehrschichtige Folie nach Anspruch 7, wobei:
(i) die nematische Schicht in direktem Kontakt mit zwei Cholesterinschichten steht und vorzugsweise zwei Cholesterinschichten auf entgegengesetzten Seiten der nematischen Schicht im Wesentlichen dieselbe maximale Reflexionswellenlänge aufweisen; und/oder
(ii) die nematische Schicht als Halbwellen-Verzögerungsplatte für zirkular polarisiertes Licht für eine Wellenlänge innerhalb von 500 nm der maximalen Reflexionswellenlänge einer oder mehrerer der Cholesterinschichten wirkt, wie z. B. innerhalb von 300 nm, innerhalb von 200 nm, innerhalb von 100 nm oder innerhalb von 50 nm; und/oder
(iii) die nematische Schicht eine trockene Dicke von 50 µm oder weniger, vorzugsweise von 3 bis 20 µm, noch bevorzugter von 6 bis 12 µm, aufweist; und/oder
(iv) die Doppelbrechung der nematischen Schicht 0,08 oder weniger, vorzugsweise 0,01 bis 0,06 beträgt; und/oder
(v) der Herman-Ordnungsparameter der nematischen Schicht 0,3 oder mehr, vorzugsweise 0,5 oder mehr, sogar noch bevorzugter 0,7 oder mehr, sogar noch bevorzugter 0,9 oder mehr, beträgt.

9. Mehrschichtige Folie nach Anspruch 5 bis 8, wobei die mehrschichtige Folie insgesamt 70 Gew.-% oder mehr Cellulose-Nanokristalle, wie z. B. neutralisierte Cellulose-Nanokristalle, vorzugsweise 80 Gew.-% oder mehr, noch bevorzugter 90 Gew.-% oder mehr, sogar noch bevorzugter 95 Gew.-% oder mehr, bezogen auf das Gesamtgewicht der mehrschichtigen Folie umfasst; wobei die mehrschichtige Folie gegebenenfalls im Wesentlichen aus Cellulose-Nanokristallen, wie z. B. neutralisierten Cellulose-Nanokristallen, besteht.

10. Mehrschichtige Folie, die durch ein Verfahren nach einem der Ansprüche 1 bis 3 erhalten wurde oder erhältlich ist.

11. Mehrschichtige Folie nach Anspruch 5 bis 10, wobei:
(i) die mehrschichtige Folie eine maximale Reflexion bei einer Wellenlänge von 100 bis 1.000 nm von 50 % oder mehr, vorzugsweise 70 % oder mehr, noch bevorzugter 80 % oder mehr, sogar noch bevorzugter 90 % oder mehr, aufweist; und/oder
(ii) die mehrschichtige Folie rechts-zirkular polarisiertes Licht reflektiert und das reflektierte rechts-zirkular polarisierte Licht eine maximale Reflexion bei einer Wellenlänge von 100 bis 1.000 nm von 50 % oder mehr, vorzugsweise 60 % oder mehr, noch bevorzugter 70 % oder mehr, sogar noch bevorzugter 80 % oder mehr, aufweist.

12. Mehrschichtiges Teilchen, das zwei oder mehr Cholesterinschichten umfasst, wobei:
jede Cholesterinschicht Cellulose-Nanokristalle umfasst und die Cellulose-Nanokristalle in chiralen nematischen Strukturen organisiert sind,
jede Cholesterinschicht eine solche Dicke aufweist, dass das Ausrichtungselement einer chiralen nematischen Struktur zumindest eine Umdrehung innerhalb der Schicht durchführt, wobei die Schicht eine Dicke von 50 µm oder weniger, vorzugsweise 20 µm oder weniger, aufweist, und
wobei das mehrschichtige Teilchen die Cholesterinschicht in direktem Kontakt mit einer weiteren Cellulose-enthaltenden Schicht umfasst.

13. Mehrschichtiges Teilchen nach Anspruch 12, wobei:
(i) das mehrschichtige Teilchen weiters eine nematische Schicht umfasst, wobei die nematische Schicht Cellulose-Nanokristalle umfasst und die Cellulose-Nanokristalle in einer nichtchiralen nematischen Struktur ausgerichtet sind; und
das mehrschichtige Teilchen die nematische Schicht in direktem Kontakt mit einer Cholesterinschicht umfasst; und/oder
(ii) das mehrschichtige Teilchen neutralisierte Cellulose-Nanokristalle umfasst, z. B. daraus besteht;
(iii) das mehrschichtige Teilchen eine facettierte Geometrie entsprechend zumindest einer chiralen nematischen Domäne der Cholesterinschicht aufweist.

14. Mehrschichtiges Teilchen, das durch ein Verfahren nach Anspruch 4 erhalten wurde oder erhältlich ist.

15. Verwendung einer mehrschichtigen Folie nach einem der Ansprüche 5 bis 11 oder eines mehrschichtigen Teilchens nach einem der Ansprüche 12 bis 14 oder von Derivaten davon als Farbfolie oder als Färbemittel, wie z. B. als Pigment, Effektpigment oder Glitzer.

## Revendications

1. Procédé de préparation d'un film multicouche, le procédé comprenant une étape de formation de couche cholestérique comprenant les étapes consistant à :
a) déposer une suspension de nanocristaux comprenant des nanocristaux de cellulose sur un substrat ;
b) étaler la suspension de nanocristaux sur le substrat en utilisant un répartiteur ;
c) vieillir la suspension de nanocristaux pour récupérer partiellement ou complètement les structures cholestériques perdues lors du dépôt et de l'étalement ; et
d) sécher la suspension de nanocristaux déposée de telle sorte que les nanocristaux s'auto-assemblent pour former une couche cholestérique ;
dans lequel l'étape de formation de couche cholestérique est répétée deux fois ou plus et le film multicouche comprend la couche cholestérique en contact direct avec une autre couche contenant de la cellulose.

2. Procédé selon la revendication 1, le procédé comprenant en outre une étape de formation de couche nématique comprenant les étapes consistant à :
a) déposer une suspension de nanocristaux comprenant des nanocristaux de cellulose sur un substrat ;
b) étaler la suspension de nanocristaux sur le substrat en utilisant un répartiteur pour aligner les nanocristaux de cellulose et former une structure nématique non chirale ; et
c) sécher la suspension de nanocristaux déposée,
dans lequel l'étape de formation de couche nématique est effectuée avant et/ou après l'étape de formation de couche cholestérique et le film multicouche comprend la couche nématique en contact direct avec la couche cholestérique ;
facultativement dans lequel l'étape de formation de couche nématique est effectuée après une étape de formation de couche cholestérique et le substrat dans l'étape de formation de couche nématique est la couche cholestérique provenant de l'étape de formation de couche cholestérique.

3. Procédé selon la revendication 1 ou 2, dans lequel :
(i) l'étape de formation de couche cholestérique comprend en outre une étape de sonication de la suspension de nanocristaux de cellulose avant l'étape de dépôt, de préférence une sonication de pointe de la suspension de nanocristaux de cellulose ; et/ou
(ii) la concentration de la suspension de nanocristaux dans l'étape de formation de couche cholestérique est de 1,5 à 12 % en poids, de préférence de 4 à 9 % en poids, de manière plus préférée d'environ 6 % en poids ; et/ou
(iii) la concentration de la suspension de nanocristaux dans l'étape de formation de couche nématique est de 4 % en poids ou plus, de préférence de 60 % en poids ou moins, de manière plus préférée de 5 à 20 % en poids, de manière encore plus préférée de 6 à 12 % en poids, comme d'environ 8 % en poids ; et/ou
(iv) la vitesse de cisaillement pendant l'étape d'étalement de l'étape de formation de couche cholestérique est de 0,5 s⁻¹ à 30,0 s⁻¹, de préférence de 2,0 s⁻¹ à 10 s⁻¹, comme d'environ 2,2 s⁻¹, et/ou
(v) la vitesse de cisaillement pendant l'étape d'étalement de l'étape de formation de couche nématique est de 5,0 s⁻¹ ou plus, de préférence de 300,0 s⁻¹ ou moins, de manière plus préférée de 15,0 s⁻¹ à 100 s⁻¹, comme d'environ 75 s⁻¹ ; et/ou
(vi) le procédé comprend en outre une étape de recuit du film multicouche pour augmenter la résistance à l'eau du film, par exemple par recuit à une température de 100 à 250°C.

4. Procédé selon les revendications 1 à 3, comprenant en outre une étape consistant à diviser le film multicouche pour produire des particules, par exemple en fracturant et/ou en broyant le film multicouche.

5. Film multicouche comprenant deux couches cholestériques ou plus, dans lequel chaque couche cholestérique comprend des nanocristaux de cellulose et les nanocristaux de cellulose sont organisés en structures nématiques chirales,
chaque couche cholestérique présente une épaisseur telle que le directeur d'une structure nématique chirale effectue au moins un tour à l'intérieur de la couche, la couche présentant une épaisseur de 50 µm ou moins, de préférence de 20 µm ou moins, et
dans laquelle le film multicouche comprend la couche cholestérique en contact direct avec une autre couche contenant de la cellulose.

6. Film multicouche selon la revendication 5, dans lequel :
(i) les couches cholestériques sont chacune sélectionnées indépendamment parmi deux ou plus parmi, tels que quatre ou plus parmi, ou six ou plus parmi :
une couche cholestérique présentant une longueur d'onde de réflectance maximale de 100 à 400 nm, une couche cholestérique présentant une longueur d'onde de réflectance maximale de 400 à 500 nm, une couche cholestérique présentant une longueur d'onde de réflectance maximale de 500 à 580 nm, une couche cholestérique présentant une longueur d'onde de réflectance maximale de 600 à 750 nm, et une couche cholestérique présentant une longueur d'onde de réflectance maximale de 750 à 1 000 nm ; et/ou
(ii) deux des couches cholestériques présentent une longueur d'onde de réflectance maximale différente, telle qu'une différence de longueur d'onde de réflectance maximale de 50 nm ou plus, comme de 100 nm ou plus, ou de 200 nm ou plus.

7. Film multicouche selon la revendication 5 ou 6, comprenant en outre une couche nématique, dans lequel la couche nématique comprend des nanocristaux de cellulose et les nanocristaux de cellulose sont alignés dans une structure nématique non chirale, et
le film multicouche comprend la couche nématique en contact direct avec la couche cholestérique.

8. Film multicouche selon la revendication 7, dans lequel :
(i) la couche nématique est en contact direct avec deux couches cholestériques, et de préférence deux couches cholestériques sur des côtés opposés de la couche nématique présentent sensiblement la même longueur d'onde de réflectance maximale ; et/ou
(ii) la couche nématique agit comme une plaque de retard demi-onde pour une lumière polarisée circulairement pour une longueur d'onde à moins de 500 nm de la longueur d'onde de réflectance maximale d'une ou plusieurs des couches cholestériques, par exemple à moins de 300 nm, à moins de 200 nm, à moins de 100 nm ou à moins de 50 nm ; et/ou
(iii) la couche nématique présente une épaisseur sèche de 50 µm ou moins, de préférence de 3 à 20 µm, de manière plus préférée de 6 à 12 µm ; et/ou
(iv) la biréfringence de la couche nématique est inférieure ou égale à 0,08, et de préférence comprise entre 0,01 et 0,06 ; et/ou
(v) le paramètre d'ordre de Herman de la couche nématique est de 0,3 ou plus, de préférence de 0,5 ou plus, de manière encore plus préférée de 0,7 ou plus, de manière encore plus préférée de 0,9 ou plus.

9. Film multicouche selon les revendications 5 à 8, dans lequel le film multicouche comprend 70 % en poids ou plus de nanocristaux de cellulose, comme des nanocristaux de cellulose neutralisés, au total, de préférence de 80 % en poids ou plus, plus préférablement de 90 % en poids ou plus, encore plus préférablement de 95 % en poids ou plus, sur la base du poids total du film multicouche ; facultativement dans lequel le film multicouche est constitué essentiellement de nanocristaux de cellulose, tels que des nanocristaux de cellulose neutralisés.

10. Film multicouche obtenu ou pouvant être obtenu par le procédé selon les revendications 1 à 3.

11. Film multicouche selon les revendications 5 à 10, dans lequel :
(i) le film multicouche présente une réflectance maximale à une longueur d'onde de 100 à 1 000 nm de 50 % ou plus, de préférence de 70 % ou plus, de manière plus préférée de 80 % ou plus, de manière encore plus préférée de 90 % ou plus ; et/ou
(ii) le film multicouche réfléchit une lumière polarisée circulairement droite et la lumière polarisée circulairement droite réfléchie présente une réflectance maximale à une longueur d'onde de 100 à 1 000 nm de 50 % ou plus, de préférence de 60 % ou plus, de manière plus préférée de 70 % ou plus, de manière encore plus préférée de 80 % ou plus.

12. Particule multicouche comprenant deux couches cholestériques ou plus, dans laquelle chaque couche cholestérique comprend des nanocristaux de cellulose et les nanocristaux de cellulose sont organisés en structures nématiques chirales,
chaque couche cholestérique présente une épaisseur telle que le directeur d'une structure nématique chirale effectue au moins un tour à l'intérieur de la couche, la couche présentant une épaisseur de 50 µm ou moins, de préférence de 20 µm ou moins, et
la particule multicouche comprend la couche cholestérique en contact direct avec une autre couche contenant de la cellulose.

13. Particule multicouche selon la revendication 12, dans laquelle :
(i) la particule multicouche comprend en outre une couche nématique, dans laquelle la couche nématique comprend des nanocristaux de cellulose et les nanocristaux de cellulose sont alignés dans une structure nématique non chirale ; et
la particule multicouche comprend la couche nématique en contact direct avec une couche cholestérique ; et/ou
(ii) la particule multicouche comprend, par exemple, des nanocristaux de cellulose neutralisés ;
(iii) la particule multicouche présente une géométrie à facettes correspondant à au moins un domaine nématique chiral de la couche cholestérique.

14. Particule multicouche obtenue ou pouvant être obtenue par le procédé selon la revendication 4.

15. Utilisation du film multicouche des revendications 5 à 11 ou de la particule multicouche des revendications 12 à 14 ou de leurs dérivés, en tant que feuille colorée ou colorant, tel qu'un pigment, un pigment à effet ou des paillettes.
